# EUROPÄISCHE PATENTSCHRIFT

(11) **EP 1 124 857 B1**
(45) Veröffentlichungstag und Bekanntmachung des Hinweises auf die Patenterteilung: **09.04.2003**
(21) Anmeldenummer: 99945985.2
(22) Anmeldetag: 17.08.1999
(51) Int. Cl.: C08F 4/00, C08F 292/00, C08F 4/40

(54) **VERFAHREN ZUR HERSTELLUNG VON DEFINIERTEN SCHICHTEN ODER SCHICHTSYSTEMEN**
METHOD FOR PRODUCING DEFINED LAYERS OR LAYER SYSTEMS
PROCEDE PERMETTANT DE PRODUIRE DES COUCHES OU DES SYSTEMES DE COUCHES DEFINIS

(30) Priorität: 22.08.1998 DE 19838241
(43) Veröffentlichungstag der Anmeldung: 22.08.2001
(73) Patentinhaber: Böttcher, Henrik, 30167 Hannover (DE); Hallensleben, Manfred Ludwig, Prof.Dr.rer.nat., D-79299 Wittnau (DE); Wurm, Hellmuth, 79249 Merzhausen (DE)
(72) Erfinder: Böttcher, Henrik, 30167 Hannover (DE); Hallensleben, Manfred Ludwig, Prof.Dr.rer.nat., D-79299 Wittnau (DE); Wurm, Hellmuth, 79249 Merzhausen (DE)
(74) Vertreter: Eisenführ, Speiser & Partner
(86) Internationale Anmeldenummer: EP9906009
(87) Internationale Veröffentlichungsnummer: WO00011043

(56) Entgegenhaltungen:
- WO-A-98/01480
- US-A- 4 940 760
- N. TSUBOKAWA: "SURFACE GRAFTING OF POLYMERS ONTO ULTRAFINE SILICA: CATIONIC POLYMERIZATION INITIATED BY OXOAMINIUM PERCHLORATE GROUPS INTRODUCED ONTO ULTRAFINE SILICA SURFACE." POLYMER BULLETIN, Bd. 33, Nr. 2, Juli 1994 (1994-07), Seiten 187-194, XP000459094

## Beschreibung

Gegenstand der Erfindung ist ein Verfahren zur Herstellung von definierten Schichten oder Schichtsystemen aus Polymeren oder Oligomeren mit kontrolliertem Aufbau auf beliebigen Festkörperoberflächen, wobei die Schicht chemisch an die Festkörperoberfläche gebunden ist und mittels "lebender" I kontrollierter radikalischer Reaktion aufgebracht wird. Ein weiterer Gegenstand der Erfindung sind Festkörperoberflächen mit Oligomer- oder Polymerschichten sowie verschiedene Verbindungen mit einer Ankergruppe sowie einer Gruppierung, von der das Polymerwachstum nach dem ATRP-Mechanismus ausgeht. Derartige Verbindungen werden im folgenden Initiatoren genannt.

Die vorliegende Erfindung betrifft ein Verfahren auf Basis des Mechanismus der "lebenden" / kontrollierten radikalischen Reaktion und Polymerisation zur chemischen Modifizierung beliebiger Festkörperoberflächen. Der Festkörper kann dabei aus einem beliebigen Material bestehen, von massiver oder poröser Beschaffenheit sein, in feinverteilter Form vorliegen, natürlichen oder synthetischen Ursprungs sein oder eine heterogene Oberflächenstruktur oder -zusammensetzung aufweisen. Für das Verfahren unerheblich sind des weiteren die physikalischmechanischen Eigenschaften des eingesetzten Festkörpers, wie z.B. Härte, Duktilität, Deformierbarkeit, Oberflächenrauhigkeit.

Der Begriff der "Oberfläche" bezieht sich dabei nicht nur auf Oberflächen im üblichen Sprachgebrauch, wobei im allgemeinen die Grenzfläche zwischen einem Festkörper und einem Gas oder einer Flüssigkeit verstanden wird. Hierzu gehört auch die innere Oberfläche eines porösen Materials. Darüber hinaus gehend, in Anwendung der oberflächenmodifizierten Materialien, bezieht sich der Begriff der Oberfläche ganz allgemein auf beliebige Phasengrenzflächen. So kann es sich bei einer Oberfläche z.B. auch um die innere Oberfläche zwischen zwei verschiedenen Komponenten innerhalb eines Verbundwerkstoffes handeln. Beispiele dieser Art sind Verbundwerkstoffe aus einer Polymermatrix und einem anorganischen Verstärker, mit Farbstoffen gefüllte Polymere oder ein Polymer-Metall-Verbund; ganz allgemein also Verbundwerkstoffe aus einer Polymermatrix und einem funktionellen Zusatz.
Durch chemische Modifizierung von Festkörperoberflächen können Oberflächeneigenschaften maßgeschneidert werden. Einerseits kann damit der Oberfläche eine gewünschte Qualität verliehen werden, andererseits kann die Qualität der physikalischen Wechselwirkung des oberflächenmodifizierten Festkörpers mit anderen Stoffen, die chemische Reaktivität und die Fähigkeit zur chemischen Anbindung anderer Stoffe gezielt eingestellt werden.

Werden auf Oberflächen Schichten oder Schichtsysteme aufgebracht, so können im Einzelfall die Eigenschaften der ursprünglichen Oberfläche so verändert werden, daß die Eigenschaften des Gesamtsystems nur noch durch die der Beschichtung bestimmt werden. Damit ist es z.B. möglich, einem Verbundsystem durch ein geeignetes Trägermaterial die nötige mechanische Festigkeit zu verleihen und andererseits durch das Beschichtungssytem die gewünschten mechanischen, physikalischen und/oder chemischen Eigenschaften der Oberfläche einzustellen.

Um Festkörperoberflächen durch Aufbringen von Polymeren zu modifizieren, sind verschiedene Techniken gebräuchlich. In der Literatur beschrieben werden z.B. Verfahren, in denen gelöste Polymere aufgesprüht, aufgeschleudert (spin coating), durch Tauchprozesse (dip-coating) oder nach der Langmuir-Blodgett-Technik (LB-Filme) aufgebracht werden. Die Bindung der Polymere an die Oberfläche ist dabei weitestgehend adhäsiver Natur. Die Prozeßparameter sind bei diesen Verfahren häufig nur schwer zu kontrollieren; zudem ist speziell die Langmuir-Blodgett-Technik nur auf planaren Oberflächen anwendbar und im wesentlichen auf amphiphile oder kettensteife Moleküle begrenzt.

Polymermoleküle können auch chemisch an Festkörperoberflächen angebunden werden, indem über zumeist endständige Gruppen der Polymermoleküle eine kovalente chemische Bindung an die Festkörperoberfläche ausgebildet wird ("grafting to", z.B. über eine Kondensationsreaktion). Ein Nachteil dieses Verfahrens ist, daß die Ausbeuten derartiger Oberflächenreaktionen und somit die Pfropfdichten der Polymermoleküle auf der Oberfläche im allgemeinen nicht sehr hoch sind, da bereits angebundene Polymermoleküle die Annäherung weiterer Moleküle an die Oberfläche behindern. Des weiteren ist das Verfahren auf Polymere mit relativ niedriger Molmasse beschränkt, da nur bei kleinen Molekülen eine genügend hohe Wahrscheinlichkeit dafür besteht, daß sich die funktionelle Gruppe des Polymermoleküls in Reichweite der Anknüpfungsstellen an der Festkörperoberfläche befindet und so eine chemische Reaktion zwischen beiden möglich wird.
Um die mit "grafting to"-Verfahren verbundenen Nachteile zu umgehen, werden in weiterentwickelten Verfahren die Polyreaktionen zur Bildung von Polymeren direkt an der Festkörperoberfläche ausgelöst ("grafting from") [J. Rühe, "Maßgeschneiderte Oberflächen", Nachr. Chem. Tech. Lab. 42 (1994) 1237]. Dabei werden im Stand der Technik zu Polymerisationsreaktionen ausgehend von Festkörperoberflächen meist die klassischen radikalischen Pfropfreaktionen beschrieben: Zur Auslösung der radikalischen Polymerisationsreaktionen werden konventionelle Initiatoren verwendet, also Azoverbindungen, Peroxide u.ä. Bindet man solche Initiatoren an Festkörperoberflächen kovalent an, um von hier aus Pfropfreaktionen auszulösen, so ist damit folgender Nachteil verbunden: Bei symmetrisch aufgebauten Initiatoren wie z.B. Azo-bis-isobuttersäurenitril (AiBN) oder Benzoylperoxid (BPO) ist nach dem Zerfall ein Fragment als initiierendes Radikal kovalent an die Festkörperoberfläche angebunden, das zweite Radikalfragment bleibt dagegen ungebunden und kann seinerseits eine Polymerisationsreaktion initiieren, die aber nicht an der Festkörperoberfläche stattfindet, sondern ungebunden. Bei einer Polymerisationsauslösung mit den o.g. konventionellen Initiatoren wird daher neben ungebundenem Polymer stets auch nichtangebundenes Polymer gebildet.

Diese Situation hat dazu geführt, daß ein Ausweg über asymmetrische Initiatoren gesucht wurde, nach deren Zerfall lediglich das angebundene radikalische Fragment reaktionsauslösend wirksam wird. Dies ist z.B. in den Arbeiten von Rühe et al. [O. Prucker, J. Rühe, Macromolecules 31, 592 (1998); O. Prucker, J. Rühe, Macromolecules 31, 602 (1998)] ausführlich beschrieben.

Hinzu kommt, daß bei allen bisher konventionell ausgelösten radikalischen Polymerisationsreaktionen diese der klassischen Kinetik der radikalischen Polymerisation unterliegen, d.h. die Pfropfastlänge und die Abbruchreaktionen können nur ungenügend kontrolliert werden und die Kettenlänge unterliegt den typischen Kettenlängenverteilungen bei klassischen radikalischen Polymerisationen [s. Bruno Vollmert, Grundriß der Makromolekularen Chemie, Bd. I, E. Vollmert-Verlag, Karlsruhe, 1979]. Des weiteren sind die Kettenenden der Pfropfäste nach der Polymerisationsreaktion nicht mehr reaktiv, so daß z.B. die Aufpolymerisation einer zweiten Polymergeneration nicht möglich ist.
Dieser Nachteil der radikalischen Polymerisation wurde in jüngster Zeit durch ein neues Verfahren größtenteils behoben. Wird eine radikalische Polymerisationsreaktion nach einem "lebenden" / kontrollierten radikalischen Mechanismus durchgeführt, so können definierte Polymere hergestellt werden, deren Kettenlänge und Polydispersität wesentlich besser gesteuert werden können als in der klassischen radikalischen Polymerisation. Da die Anzahl der Kettenabbrüche in diesem Verfahren stark vermindert ist, wird auch die Bezeichnung "Stable Free Radical Polymerization" (SFRP) verwendet. Eine weitere Verfeinerung erfuhr dieses Verfahren durch K. Matyjaszewski et al. durch die Einführung des Konzeptes der "Atom Transfer Radical Polymerization" (ATRP) [K. Matyjaszewski, S. Coca, S. Gaynor, Y. Nakagawa, S.M. Jo, "Preparation of Novel Homo- and Copolymers using Atom Transfer Radical Polymerization", WO 98/01480]. "Lebende" / kontrollierte radikalische Polymerisationen, auch in ihrer Verfeinerung nach dem ATRP-Mechanismus, wurden bisher nur in flüssiger Phase, mit oder ohne zusätzlichem Lösungsmittel durchgeführt.

Craig J. Hawker et al. beschreiben in ACS Polym. Preprints [Div. Polym. Chem. (39), 626 (1998)] die Synthese und Anwendung von Polymeren unter Einsatz von "lebenden" / radikalischen Polymerisationsreaktionen. Als Initiatoren für die radikalische Polymerisation werden Verbindungen eingesetzt, die Nitroxidgruppen enthalten. Diese Verbindungen weisen weiterhin endständige Trichlorsilylgruppen auf, die durch chemische Reaktionen an Oberflächen von Silicagel und Siliziumwafern gebunden werden können.

Tsujii et al. in Macromolecules 1998, 31, 5934 beschreiben kontrollierte Pfropfpolymerisationen von Methylmethacrylat auf siliziumoxidhaltigen Substraten durch kombinierte Anwendung der Langmuir-Blodgett-(LB)-Technik und der ATRP-Technik (Atom Transfer Radical Polymerization). Als Initiatorverbindung wird 2-(4-Chlorsulfonylphenyl)ethyltrimethoxysilan verwendet. Diese Verbindung besitzt eine Chlorsulfonylgruppe als Initiatorgruppe für die "lebende" / kontrollierte Polymerisation. Nach Aufbringen der an einer Wasser/Luft-Grenzfläche komprimierten Monoschicht des obengenannten Initiators mittels LB-Technik auf einen Siliziumwafer wird von dessen so modifizierter Oberfläche die "lebende" / kontrollierte radikalische Polymerisation von Methylmethacrylat ausgeführt.

Diese Verfahren des Standes der Technik weisen folgende Nachteile auf: Bei der "Stable Free Radical Polymerization" SFRP unter Verwendung von Nitroxiden kommt es wegen der notwendigen hohen Temperaturen von 120 bis 130°C häufig zu einer gleichzeitig ablaufenden, thermischen Polymerisation, die nicht von der Oberfläche ausgeht. Damit sind für den Prozeß der "lebenden" / kontrollierten radikalischen Pfropfung von Festkörperoberflächen erhebliche Nachteile verbunden, nämlich
a) entstehendes ungebundenes Polymer verbraucht Monomer,
b) wachsende gebundene wie ungebundene Polymerketten konkurrieren um Nitroxide und beeinflussen damit eine Kontrolle der wachsenden Ketten,
c) ungebundenes Polymer liegt als Reaktionsergebnis neben polymermodifizierten Festkörperoberflächen vor.

Gemäß der Druckschrift Tsujii et al. wird als Initiatorverbindung 2-(4-Chlorsulfonylphenyl)ethyltrimethoxysilan eingesetzt. Chlorsulfonylgruppen sind bekanntlich sehr reaktionsfreudig und insbesondere hydrolyseempfindlich, so daß sie nur schwer zu handhaben sind. Verbindungen, die solche Gruppen aufweisen, wie auch damit ausgestattete Oberflächen, sind instabil.

Weiterhin ist die in dieser Druckschrift beschriebene LB-Methode nur an planaren Substratoberflächen, und hier in deren Größe begrenzt, anwendbar, nicht jedoch an Festkörperoberflächen beliebiger Größe, Form und Gestalt, sowie nicht an inneren Oberflächen offenporöser Materialien. Die Dichte der Moleküle in der Schicht kann nur unvollkommen beeinflußt werden. Der Nachweis des Polymerisationsgrades der aufgepfropften Polymermoleküle wird nur indirekt geführt, die aufgepfropften Polymermoleküle selbst werden dazu nicht verwendet. Es wird weiterhin nicht ausgeführt, daß die Kettenenden weiter initiierungsfähig sind.

Die zu lösende technische Aufgabe besteht darin, ein Verfahren zur Erzeugung von Schichten oder Schichtsystemen aus Polymeren oder Oligomeren zur Verfügung zu stellen, bei dem Initiatoren eingesetzt werden, die die obenstehenden Nachteile nicht aufweisen und eine Beschichtung von Systemen beliebiger Größe, Oberflächenstruktur oder Zusammensetzung ermöglichen. Weiterhin soll das Auftreten einer thermischen Polymerisation durch Anwendung niedrigerer Reaktionstemperaturen und geeignete Reaktionsführung unterdrückt werden können.

Diese technische Aufgabe wird gelöst durch ein Verfahren zur Herstellung von definierten Schichten oder Schichtsystemen aus Polymeren oder Oligomeren mit kontrolliertem Aufbau auf beliebigen Festkörperoberflächen, wobei die Schichten chemisch an die Festkörperoberfläche gebunden sind und mittels "lebender" / kontrollierter radikalischer Reaktion aufgebracht werden, durch die folgenden Schritte:
a) Anbindung von Initiatoren der allgemeinen Formel **1** an die Festkörperoberfläche.

   A-L-I **1**

   Darin ist A eine Ankergruppe, I die initiierend wirkende Gruppe für die ATRP-Polymerisation und L das Bindeglied zwischen A und I.
b) Durchführung einer "lebenden" / kontrollierten radikalischen Polymerisation nach dem ATRP-Mechanismus, ausgehend von dem an einer Festkörperoberfläche angebundenen Initiator der allgemeinen Formel 1, mit radikalisch polymerisierbaren Monomeren oder Makromonomeren, wodurch die Polymerschicht auf die Festkörperoberfläche aufgebracht wird.

Weitere Merkmale des erfindungsgemäßen Verfahrens sind Anspruch 1 zu entnehmen.

Die Erfindung betrifft ein Verfahren, die "lebende" / kontroilierte radikalische Polymerisation zur gezielten und definierten chemischen Modifizierung von beliebigen Festkörperoberflächen einzusetzen. Dabei werden Oligo- bzw. Polymermoleküle in einer "lebenden" / kontrollierten radikalischen Polymerisationsreaktion direkt an der Festkörperoberfläche gebildet. Gemäß dem Stand der Technik, vor der Entwicklung der hier vorliegenden Erfindung, waren von Festkörperoberflächen aus ausgelöste radikalische Polymerisationsreaktionen bezüglich der Kettenlänge der auswachsenden Polymerketten schlecht oder gar nicht kontrollierbar. Erfindungsgemäß können nun Radikalreaktionen, die von entsprechend chemisch ausgestatteten Festkörperoberflächen ausgehen, abbruchfrei, d.h. gezielt steuerbar, ausgeführt werden. Damit kann die Pfropfastlänge bei gleichzeitig enger Pfropfastlängenverteilung maßgeschneidert werden; ebenso werden Blockcopolymere als Pfröpflinge leicht zugänglich.

Der Vorteil des erfindungsgemäßen Verfahrens besteht darin, die Methode der "lebenden" / kontrollierten radikalischen Polymerisation auf beliebige Festkörperoberflächen anzuwenden unter Verwendung von Initiatorgruppen, die aufgrund ihrer Stabilität leicht handhabbar und einsetzbar sind, und deren Eigenschaft es ist, bei Temperaturen von unter 120°C "lebende" / kontrollierte radikalische Polymerisationen nach dem ATRP-Mechanismus zu ermöglichen, ohne daß es gleichzeitig in nennenswertem Umfang zu thermischer Polymerisation kommt.

Der Festkörper kann aus einem beliebigen Material bestehen, von massiver oder poröser Beschaffenheit sein, in feinverteilter Form vorliegen, natürlichen oder synthetischen Ursprungs sein oder eine heterogene Oberflächenstruktur oder -zusammensetzung aufweisen. Einzige Voraussetzung ist, daß der verwendete Festkörper auf seiner Oberfläche bereits chemische Eigenschaften aufweist oder daß sich auf ihm chemische Eigenschaften erzeugen lassen, welche die Anbindung chemischer Verbindungen über Hauptvalenzbindungen gestattet; dabei ist unter dem Begriff "Hauptvalenzbindung" das gesamte Spektrum chemischer Bindungen zu verstehen, das durch die drei Grenzfälle kovalente, ionische und metallische Bindung sowie der Übergänge zwischen den drei Grenzfällen gegeben ist. Festkörper, die bereits die geeignete chemische Beschaffenheit zur Anbindung chemischer Verbindungen mit sich bringen, verfügen auf ihrer Oberfläche beispielsweise über Hydroxylgruppen. Andererseits ist bekannt, daß sich Oberflächen auch unpolarer Stoffe wie z.B. Poly(propylen) oder Poly(tetrafluorethylen) ohne weiteres mit reaktionsfähigen Gruppen, z.B. Hydroxylgruppen, ausrüsten lassen, z.B. auf dem Wege der Plasmabehandlung.

Außer Hydroxylgruppen seien als weitere funktionelle Gruppen, die befähigt sind, an einer Festkörperoberfläche Hauptvalenzbindungen zu Initiatoren auszubilden, die auf die Oberfläche aufgebracht werden, beispielhaft solche wie -O-, -SH, -S-, -S-S-, -Halogen, -NH₂, -NHR, -NR₂ -NH₃⁺, -NH₂R⁺, -NHR₂⁺, -NO₂, -NO₃⁻, -C≡N, -CO-, -CRH-CO-, -COOH, COO⁻, -COCl, -CO-O-, -CO-NH-, -SO₃⁻, -SO₂Cl, -PO₃⁻, -PO₂Cl, -CO-S-, -CS-O-, -C=C-, -C≡C-, Aryl genannt. Darin kann der Substituent R jeweils unabhängig ausgewählt werden aus der Gruppe: H, Alkyl, vorzugsweise Methyl bis Propyl, Aryl, auch substituiert, vorzugsweise Phenyl, auch gemischt Alkyl und Aryl. In geeigneter Weise reaktive Festkörperoberflächen können durch das erfindungsgemäße Verfahren chemisch modifiziert werden.

Diese Modifizierung von Festkörperoberflächen wird erfindungsgemäß folgendermaßen durchgeführt:
An eine chemisch zu modifizierende Festkörperoberfläche, die geeignet reaktiv ist, über chemische Reaktionen Hauptvalenzbindungen zu chemischen Verbindungen ausbilden zu können (s.o.), werden solche, im folgenden als Initiatoren bezeichnete chemische Verbindungen der allgemeinen Formel **1** A-L-I angebunden. Die als Bestandteil von A-L-I vorhandene Initiatorgruppe I, von der das Polymerwachstum nach dem ATRP-Mechanismus ausgeht, entspricht C-Z' nach Formel III des Patentes WO 98/01480 von K. Matyjaszewski et al. Die Wahl der Initiatorgruppe ist abhängig von den gewünschten Reaktionsbedingungen und dem zu polymerisierenden Monomer.

In den Verbindungen der allgemeinen Formel 1 muß mindestens eine Ankergruppe A, wie weiter unten spezifiziert, vorhanden sein, die in der Lage ist, mit den auf der Festkörperoberfläche befindlichen Funktionalitäten über eine Reaktion eine Anbindung der Verbindung **1** an die Oberfläche in Form einer chemischen Hauptvalenzbindung zu erzielen. Diese Bindung muß unter den jeweils gegebenen Reaktionsbedingungen der "lebenden" / kontrollierten radikalischen Polymerisation stabil sein.

Weiter muß die Bindungsbildung selbst unter Reaktionsbedingungen ablaufen, unter denen, abgestimmt auf die jeweilige Initiatorgruppe I, von der das Polymerwachstum nach dem ATRP-Mechanismus ausgeht, dieselbe stabil ist.

Für die Durchführung der Anbindung von Verbindungen der allgemeinen Formal **1** A-L-I an Festkörperoberflächen kommen alle Reaktionstypen in Betracht, durch die Bindungen neu geknüpft werden können. Ob ein Lösungsmittel notwendig ist und wenn ja, welches eingesetzt wird, hängt von den jeweiligen Reaktanden ab. Des weiteren richtet sich die Wahl weiterer Prozeßchemikalien nach dem jeweiligen Reaktionstyp, mit dem die Anbindung des Initiators an die Festkörperoberfläche durchgeführt wird.
Diese für die Eignung als Ankergruppe notwendigen Voraussetzungen werden von einer Vielzahl von Gruppen bzw. Strukturelementen erfüllt. Beispielhaft seien die folgenden funktionellen Gruppen genannt:

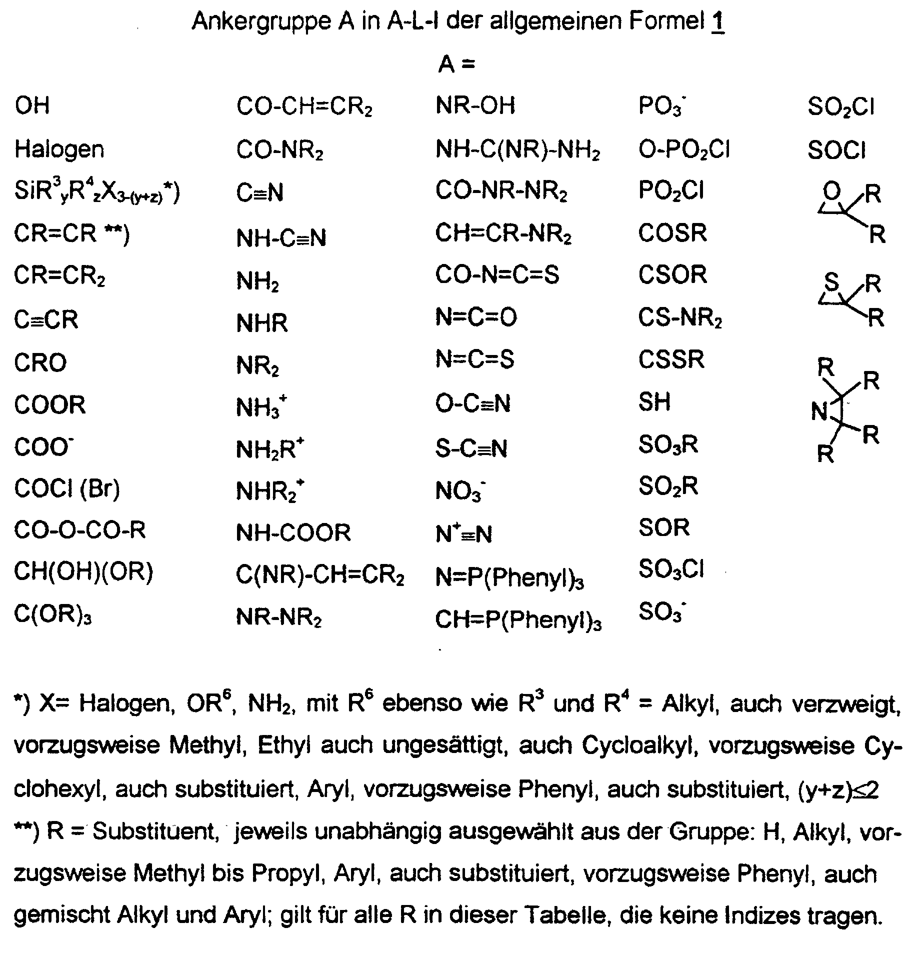

Weiterhin kann die Ankergruppe A ein metallischer Rest M sein, mit dem A-L zu einer Gruppierung im Sinne eines metallorganischen Reagenzes M-L wird. In chemisch sinnvoller Weise abgestimmt auf L, sowie abgestimmt auf die Art der funktionellen Gruppen auf der Festkörperoberfläche, über welche die Reaktion mit der Ankergruppe A = M durchgeführt werden soll, wird M so gewählt, daß sich mit den Reaktionspartnem M-L und funktionellen Gruppen auf der Festkörperoberfläche Kreuzkopplungen durchführen lassen. M-L können damit metallorganische Gruppierungen mit Lithium (Murahashi), Natrium, Magnesium (Grignard, Kumada-Tamao, Corriu), Bor (Suzuki-Miyaura), Aluminium (Nozaki-Oshima, Negishi), Zirkon (Negishi), Zink (Negishi, Normant) Kupfer oder Kupfer-Lithium oder Kupfer-Zink (Normant, Sonogashira), Zinn (Migita-Kosugi, Stille), Silizium (auch Variante von Hiyama), Quecksilber, Cadmium und Silber sein. Zur Durchführung der Kreuzkopplungen ist zudem erforderlich der Einsatz eines geeigneten Katalysators sowie die Eigenschaft der jeweiligen funktionellen Gruppen auf der Festkörperoberfläche, als elektrophiler Reaktionspartner eine geeignete Abgangsgruppe zu sein. Als Katalysator geeignet ist, je nach metallorganischer Gruppierung M-L, elementares Metall oder eine Verbindung (Salz oder Komplex) der Metalle Pd(0), Pd(II), Ni(0), Ni(II), Pt(0), Cu(I), Co(II), Co(III), Fe(I), Fe(III), Mn(II). Gegebenenfalls kommen auch Mischungen zweier Katalysatoren, der Zusatz eines Cokatalysators (z.B. Zn) oder Katalysatorverbindungen, die zwei Metalle beinhalten, wie z.B. Li₂CuCl₄, zum Einsatz. Vorrangige Bedeutung haben Pd- und Ni-Katalysatoren.

Mit derartigen Kreuzkopplungen lassen sich C-C-Bindungen knüpfen, in denen die an der Bindung beteiligten C-Atome gleich oder verschieden hybridisiert sind. Die im einzelnen zu treffenden Reaktionsbedingungen sind unter den oben angegebenen Autorennamen literaturbekannt.

Das als Bestandteil von A-L-I vorhandene Strukturelement L kann aus der nachfolgenden Liste 1.-3. unabhängig ausgewählt werden:
1. L ist ein Strukturelement, das nach Formel III des Patentes WO 98/01480 von K. Matyjaszewski et al. die dort spezifizierten und in chemisch sinnvoller Weise jede unabhängig voneinander ausgewählten Gruppen R¹¹, R¹², R¹³ besitzt, wobei mindestens ein H oder Halogen in allen drei, vorzugsweise in zwei, besonders bevorzugt jedoch in einer der Gruppen R¹¹, R¹², R¹³ gleich A ist. (Anmerkung: Nur die Gruppendefinitionen von R¹¹, R¹², R¹³ entsprechen denen des Patentes WO 98/01480 von K. Matyjaszewski et al.). Außerdem kann mindestens ein H oder Halogen in allen drei, nur in zwei oder auch nur in einer der Gruppen R¹¹, R¹², R¹³ weiteres I sein. Funktionelle Gruppen, die im Patent WO 98/01480 von K. Matyjaszewski et al. in der Variabilität von R¹¹, R¹², R¹³ enthalten sind, können hier bereits die Funktion von Ankergruppen A ausüben oder sie können zur Einführung von A dienen.
2. L ist ein Strukturelement, in dem alle Gruppen R¹¹, R¹², R¹³ (nach Formel III des Patentes WO 98/01480 von K. Matyjaszewski et al.) oder zwei dieser Gruppen oder auch nur eine Gruppe ersetzt sind durch
   a) Oligo(oxialkylen) mit C₁ bis C₂₀, auch alternierend C₁- und C₂-Gruppen,
   b) Oligo(ethylenimin),
   c) Oligosiloxanyl mit Si₁ bis Si₂₀, SiR¹R² mit R¹ und R² gleich Alkyl, bevorzugt Methyl, auch Aryl, bevorzugt Phenyl, auch gemischt Alkyl und Aryl,
   wobei in a) bis c) mindestens ein H, in c) mindestens ein H oder auch mindestens ein Aryl, in allen drei, vorzugsweise in zwei, besonders bevorzugt jedoch in einer der Gruppen R¹¹, R¹², R¹³ gleich A ist. Außerdem kann in a) bis c) mindestens ein H oder in c) mindestens ein H oder ein Aryl in allen drei, nur in zwei oder auch nur in einer der Gruppen R¹¹, R¹², R¹³ weiteres sein.
3. L ist ein Strukturelement, in dem in den Gruppen R¹¹, R¹², R¹³ (nach Formel III des Patentes WO 98/01480 von K. Matyjaszewski et al.) eine optional enthaltene Gruppe R⁵ über die Spezifikation im Patent WO 98/01480 hinausgehend eine der folgenden Gruppen ist:
   a) Oligo(oxialkylen) mit C₁ bis C₂₀, auch alternierend C₁- und C₂-Gruppen,
   b) Oligo(ethylenimin),
   c) Oligosiloxanyl mit Si₁ bis Si₂₀, SiR¹R² mit R¹ und R² gleich Alkyl, bevorzugt Methyl, auch Aryl, bevorzugt Phenyl, auch gemischt Alkyl und Aryl,
   wobei in a) bis c) mindestens ein H, in c) mindestens ein H oder auch mindestens ein Aryl, in allen drei, vorzugsweise in zwei, besonders bevorzugt jedoch in einer der Gruppen R¹¹, R¹², R¹³ gleich A ist. Außerdem kann in a) bis c) mindestens ein H oder in c) mindestens ein H oder ein Aryl in allen drei, nur in zwei oder auch nur in einer der Gruppen R¹¹, R¹², R¹³ weiteres I sein.

Die geeignete Wahl von L bietet über darin enthaltene funktionelle Gruppen die Möglichkeit der Abspaltung der Polymerschicht von der Festkörperoberfläche.

Für die Anbindung an Festkörper, speziell an solche, die über OH-Gruppen, und besonders solche, die über Si-OH-Gruppen verfügen, haben sich Silylverbindungen der Formel

X_{3-(y+z)}R³ _{y}R⁴ _{z}Si-L-I **2**

stets mit (y+z) ≤ 2
**2** bewährt, wobei X = Halogen, OR⁶, NH₂ und R⁶, R³, R⁴ = Alkyl, auch verzweigt, vorzugsweise Methyl, Ethyl, auch ungesättigt, auch Cycloalkyl, vorzugsweise Cyclohexyl, auch substituiert, Aryl, vorzugsweise Phenyl, auch substituiert, weiter L = chemische Bindung oder eine in weiten Grenzen variierbare anorganische oder organische Gruppierung wie weiter oben spezifiziert, weiter I = Initiatorgruppe für die "lebende" / kontrollierte radikalische Polymerisation nach dem ATRP-Mechanismus, wie weiter oben spezifiziert, ist.

Über die silylische Ankergruppe A kann das Initiatormolekül an die Festkörperoberfläche (in diesem Beispiel eine Silikatoberfläche und y = z = 0) angebunden werden:

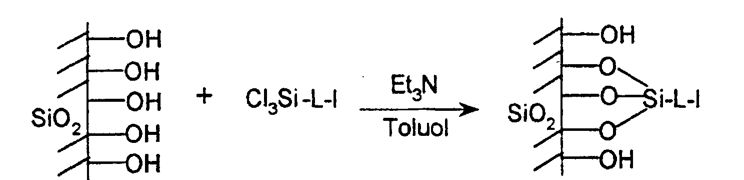

Die silylische Ankergruppe A ist je nach der Anzahl der reaktiven Gruppen tri-, dioder monofunktionell. Vorzugsweise wird Chlor als Halogen eingesetzt, da eine große Auswahl an Verbindungen existiert und deren Preis günstig ist. Die Wahl des Lösungsmittels hängt von den eingesetzten Reaktanden ab. Mit Chlor als Halogen wird die Reaktion vorzugsweise in Gegenwart einer Hilfsbase, z.B. Triethylamin, und in einem trockenen organischen Lösungsmittel durchgeführt. Außer den oben beispielhaft angeführten Verknüpfungen der Festkörperoberfläche mit dem Initiator sind auch solche Verknüpfungen möglich, die durch eine Sulfid-, Disulfid-, Ether-, Ester-, Thioester-, Sulfonat-, Amid-, Amin-, C-C-, C-N-Bindung oder durch die Wechselwirkung zwischen Gegenionen gebildet werden. Diese Verknüpfungen können durch Substitutions-, Additions- oder Kondensationsreaktionen erzeugt werden. Die dazu notwendigen Reaktionen sind im Bereich der organischen Synthese schon seit langem bekannt, ebenso die vorteilhaft zu verwendenden Lösungsmittel und sonstigen Prozeßchemikalien und Prozeßparameter.

Für die Anbindung an Festkörper, speziell an solche, die über OH-Gruppen verfügen, haben sich Carbonsäurederivate **3** bewährt. Darin sind L und I wie oben spezifiziert.

Y-CO-L-I **3**

mit Y = Halogen, bevorzugt Chlor, Brom, OH, OR⁷, wobei R⁷ = Alkyl, vorzugsweise Methyl, Ethyl, Aryl, vorzugsweise Phenyl, auch substituiert, Aralkyl, vorzugsweise Benzyl, Acyl, aliphatisch oder aromatisch, Trialkylsilyl, vorzugsweise Trimethylsilyl.

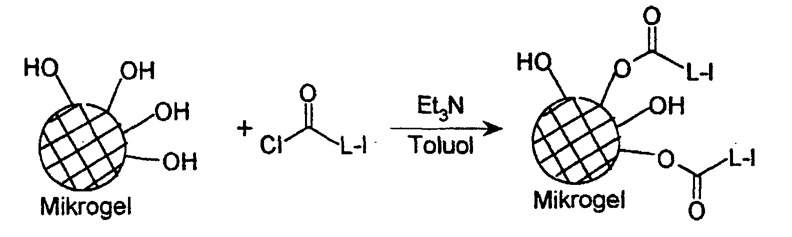

Für die Anbindung an Halbedelmetalle oder Edelmetalle, deren Festkörperoberfläche nicht funktionalisiert ist, haben sich Thiol und Disulfidankergruppen der allgemeinen Formel **4** und **5** bewährt:

HS-L-I **4** I-L-S-S-L-I **5**

Darin sind L und I wie oben spezifiziert.

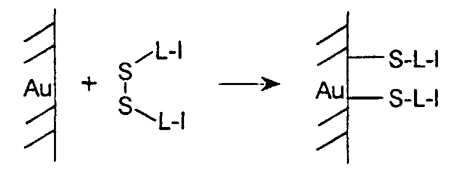

Die oben und nachfolgend genannten Initiatoren des Typs **1** - **6** können in ihrem Strukturelement L, wie oben spezifiziert, eine unter geeigneten Bedingungen spaltbare Bindung, z.B. eine Esterfunktion, aufweisen. Eine spaltbare Bindung wird erfindungsgemäß speziell im Hinblick auf die Analytik der gebildeten Polymere auf der Festkörperoberfläche etabliert, wenn auch Aussagen über die Molmassen, deren Verteilung und die Anzahl der gebildeten Polymerketten gemacht werden sollen.
Als Initiatoren, die in der Lage sind, eine "lebende" / kontrollierte radikalische Polymerisationsreaktion nach dem ATRP-Mechanismus an Festkörperoberflächen einzuleiten, werden Verbindungen der allgemeinen Formel A-L-I **1** eingesetzt.
Die in **1** enthaltenen Bestandteile A, L und I sind jeder unabhängig aus den oben angegebenen Spezifikationen für A, L und I wählbar.
Bei vorteilhafter Auswahl aus obiger Spezifikation von A in **1** ergeben sich als Initiatoren Verbindungen der Formeln **2** - **6**:

X_{(3-(y+z)}R³ _{y}R⁴ _{z}Si-L-I **2** Y-CO-L-I **3** HS-L-I **4** I-L-S-S-L-I **5** =-L-I **6**

Darin ist X, Y, R³, R⁴, L, I, y, z wie oben spezifiziert.

Bei vorteilhafter Auswahl aus obiger Spezifikation von L in **1** ist L eine chemische Bindung; Alkyl mit C₁ bis C₂₀, bevorzugt C₁ bis C₈; Aryl, bevorzugt Phenyl, auch substituiert; Aralkyl mit der Arylkomponente bevorzugt Phenyl und mit der Alkylkomponente C₁ bis C₂₀;
oder ein Strukturelement, mit dem sich als Initiatoren Verbindungen der Formeln **7** bis **11** ergeben:

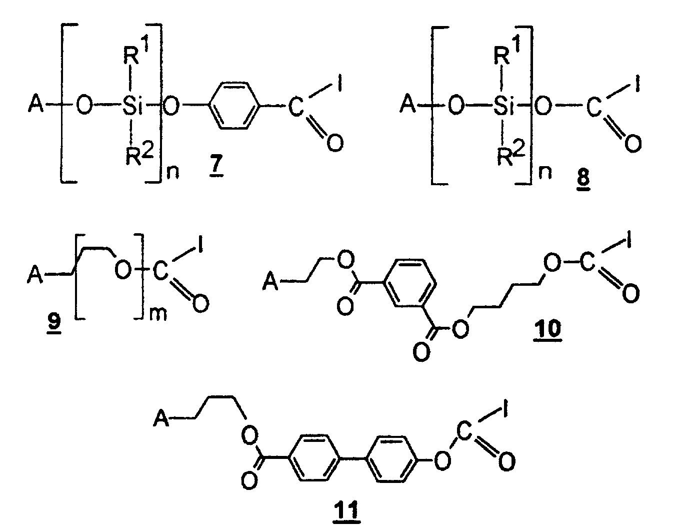

Darin ist R¹, R² = Alkyl, bevorzugt Methyl, auch Aryl, bevorzugt Phenyl, auch gemischt Alkyl und Aryl. Darin ist ferner n = 1 - 20 und m = 1 - 20. Ferner ist darin A und I wie oben spezifiziert.

Bei vorteilhafter Auswahl aus obiger Spezifikation von I in **1** ergeben sich beispielsweise und besonders vorteilhaft als Initiatoren Verbindungen der Formeln **12** *-* **28**: 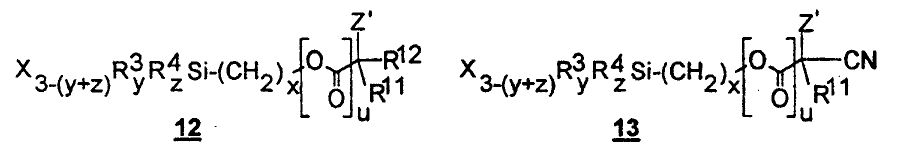 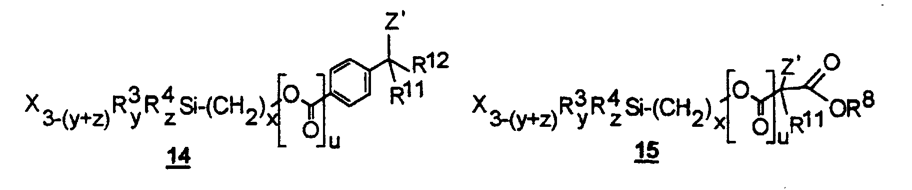 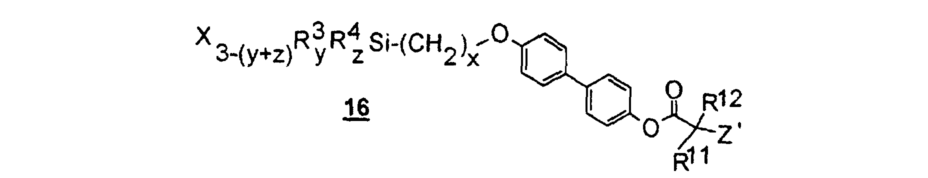 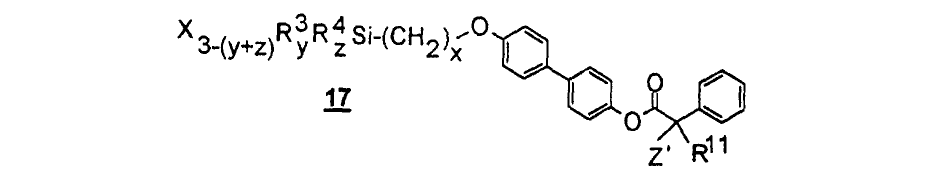 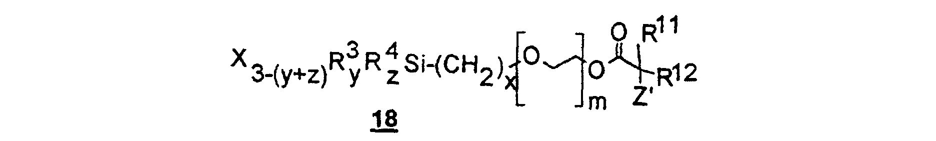 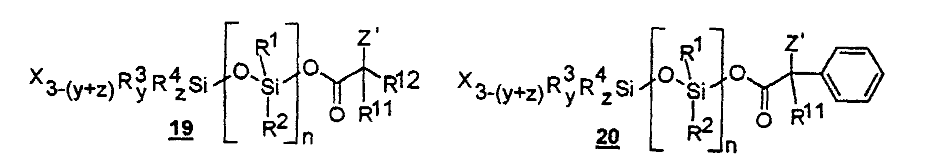 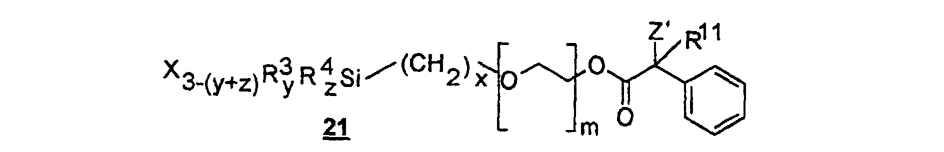 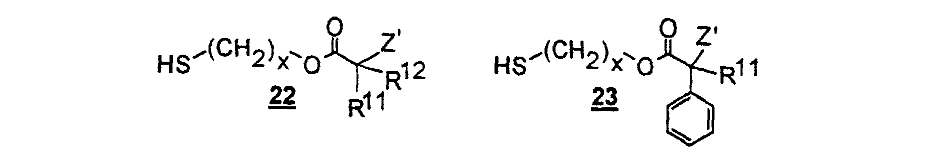 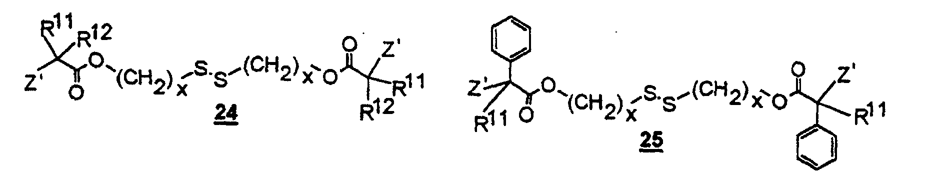 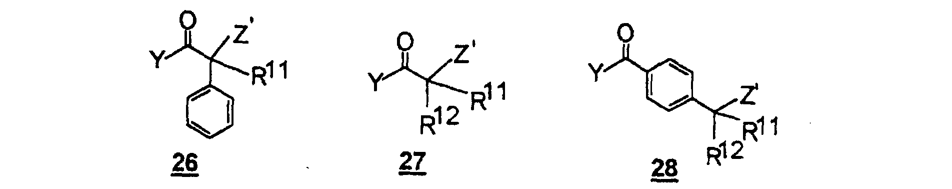 y, z = 0, 1, 2, mit (y+z) ≤ 2
x = 1 - 20
m = 1 - 20
n = 1 - 20
u = 0, 1
R¹, R² = Definition im Siloxanbindeglied L, wie oben spezifiziert
R³, R⁴ = Definition der Silylanker, wie oben spezifiziert
R⁸ = H, Alkyl, vorzugsweise Methyl, Ethyl
R¹¹, R¹² = unabhängig voneinander auswählbare Substituenten nach Formel III des Patentes WO 98/01480 von K. Matyjaszewski et al.
X = wie oben spezifiziert
Y = wie oben spezifiziert
Z' = nach dem ATRP-Mechanismus transferierbares Atom oder Gruppe nach Patent WO 98/01480 von K. Matyjaszewski et al., vorzugsweise Br, Cl.

Ausgehend von den an der Festkörperoberfläche angebundenen ATRP-Initiatoren wird mit radikalisch polymerisierbaren Monomeren eine "lebende" / kontrollierte radikalische Polymerisation durchgeführt. Radikalisch polymerisierbare Monomere sind vorteilhafterweise Styrol und seine Derivate, Acrylate, Methacrylate, Acrylnitril, aber auch Makromonomere und generell alle mit einer polymerisationsfähigen C-C-Doppelbindung ausgestatteten Verbindungen, wobei verschiedene Monomere auch gemischt oder nacheinander eingesetzt werden können, um auf der Festkörperoberfläche ein Copolymer oder Blockcopolymer zu erzeugen. Die in einer "lebenden" / kontrollierten radikalischen Polymerisationsreaktion auf der Festkörperoberfläche gebildeten Oligomer- oder Polymerketten können linear oder verzweigt sein. In einer "lebenden" / kontrollierten radikalischen Polymerisation wächst jede einmal von einem Initiator gestartete Kette so lange weiter, wie noch Monomere im Reaktionsgemisch vorhanden sind. Da es sich um eine "lebende" Polymerisation handelt, sind die Kettenenden nach vollständigem Verbrauch des Monomers noch weiterhin aktiv, d.h. sie sind zu weiteren "lebenden" / kontrollierten radikalischen Polymerisationsreaktionen in der Lage. Aus diesem Grunde sind und bleiben Festkörperpartikel, von denen aus die "lebende" / kontrollierte radikalische Polymerisation ausgelöst wird, während der Polymerisation und auch nach der Polymerisation individuelle Festkörperpartikel.

Ausgehend von den weiterhin aktiven Kettenenden der Polymerketten der ersten Generation kann eine Polymerschicht zweiter Generation über eine erneute "lebende" / kontrollierte radikalische Polymerisation auf der ersten Polymerschicht erzeugt werden. Diese Polymerschicht zweiter Generation kann aus anderen Polymer- oder Makromonomerspezies bestehen als die Polymerschicht der ersten Generation oder aus einem Gemisch verschiedener Monomer- oder Makromonomerspezies oder aus Mischungen von Monomeren und Makromonomeren. Die Polymerschicht der zweiten Generation ist mit der Polymerschicht der ersten Generation durch chemische Hauptvalenzbindungen verknüpft.

Auf die Polymerschicht zweiter Generation können in gleicher Weise je nach Bedarf weitere Generationen an Polymerschichten aufpolymerisiert werden, so daß sich maßgeschneiderte Schichtsysteme herstellen lassen, wobei die Bindungen zwischen den Schichten untereinander und zwischen der ersten Schicht und dem Festkörper jeweils über chemische Hauptvalenzen erfolgen.

Es ist weiterhin bevorzugt, daß die Polymerschichten modifiziert werden können, beispielsweise durch chemische Umwandlungen funktioneller Gruppen der an den Festkörpern angebundenen Oligomer- oder Polymerketten mittels geeigneter Reaktanden unter Erhaltung des Polymerisationsgrades.
Dabei können die funktionellen Gruppen durch jede einzelne Monomereinheit gegeben sein oder aber durch die "lebende" Endgruppe. Bei den geeigneten Reaktanden kann es sich um niedermolekulare oder hochmolekulare Verbindungen handeln oder um Mischungen derselben.

Es ist weiterhin bevorzugt, die hergestellten Festkörperpolymerschichtsysteme durch Vernetzungsreaktionen in dreidimensionale Polymermatrizes chemisch einzubinden.

Ein weiterer Gegenstand der Erfindung sind Oligomer- oder Polymerschichten, hergestellt nach dem erfindungsgemäßen Verfahren, sowie die Initiatoren der allgemeinen Formel **1**, für die einerseits die nachfolgenden Formeln **2** - **28,** andererseits und besonders die in den Beispielen 1.-11. aufgeführten Formeln **29** - **39** beispielhaft sind. Die in den Formeln **1** - **11** enthaltenen Bestandteile A, L und I sind jeder unabhängig aus den oben angegebenen Spezifikationen für A, L und I wählbar.

A-L-I **1**

X_{3-(y+z)}R³ _{y}R⁴ _{z}Si-L-I **2** Y-CO-L-I **3** HS-L-I **4** I-L-S-S-L-I **5** =-L-I **6**

Darin ist X, Y, R³, R⁴, y, z wie oben spezifiziert.

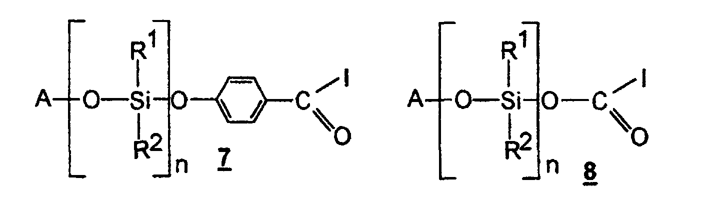

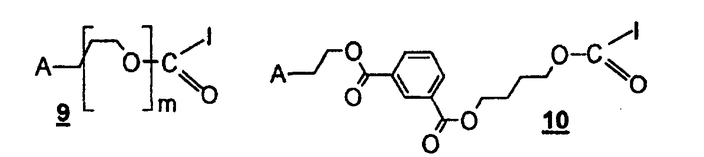

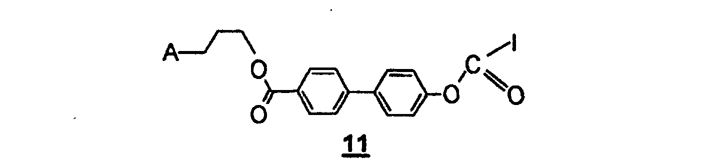

Darin ist R¹, R² = Alkyl, bevorzugt Methyl, auch Aryl, bevorzugt Phenyl, auch gemischt Alkyl und Aryl. Darin ist ferner n = 1 - 20 und m = 1 - 20. Femer ist darin A und I wie oben spezifiziert. 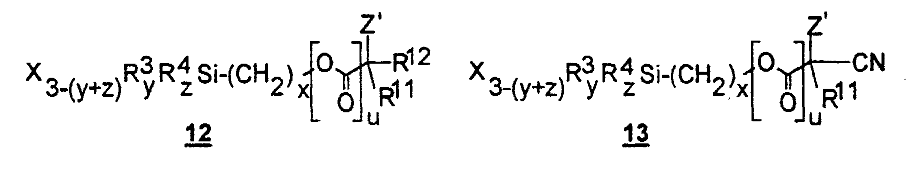 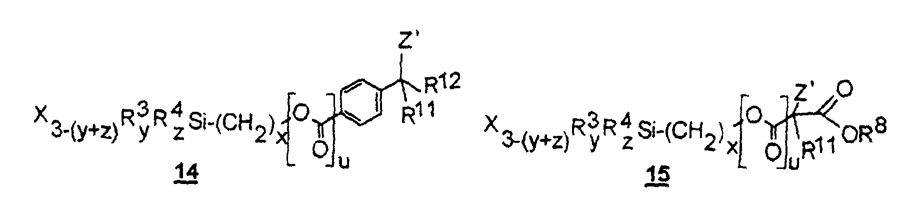 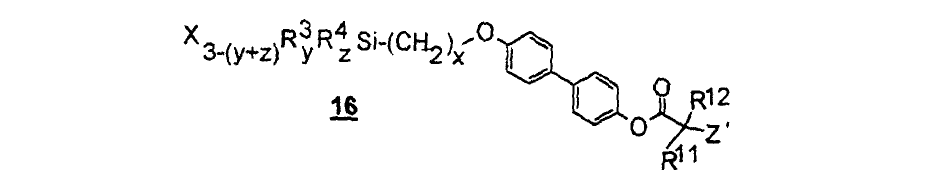 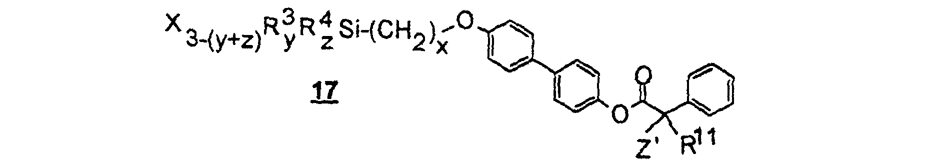 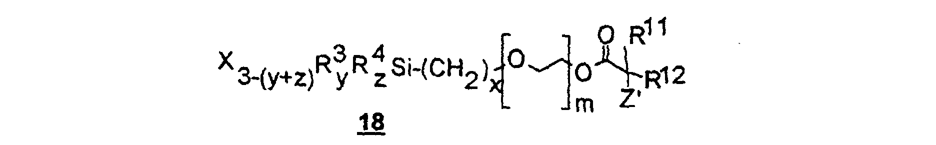 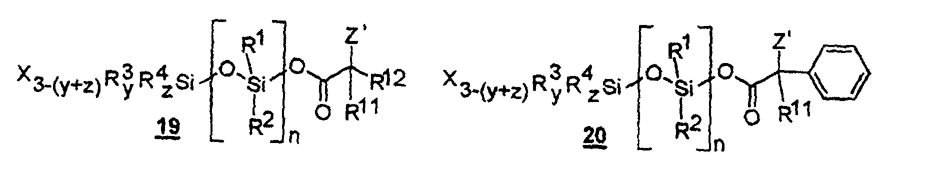 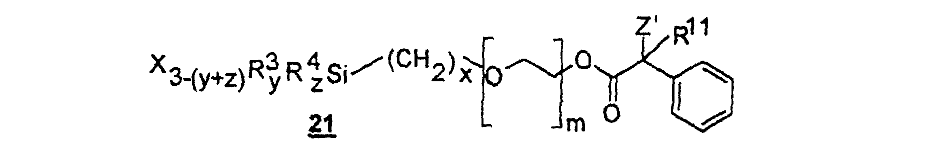 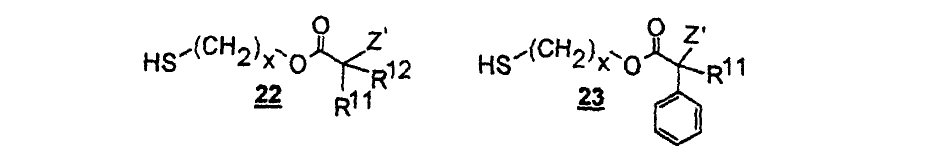 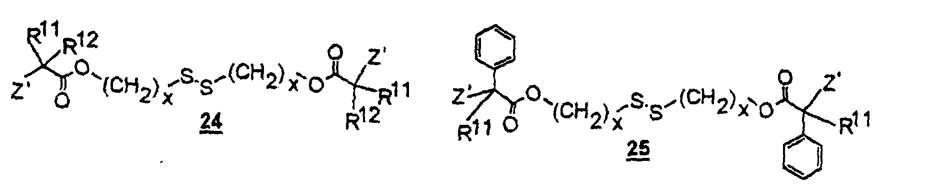 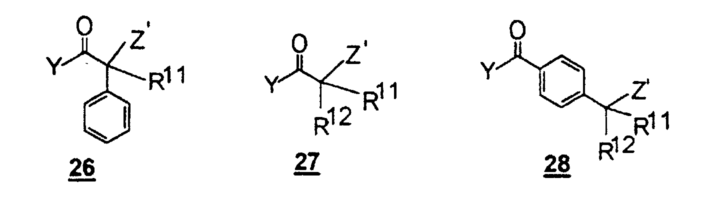 y, z = 0, 1, 2, mit (y+z) ≤ 2
x = 1 - 20
m = 1 - 20
n = 1 - 20
u = 0, 1
R¹, R² = Definition im Siloxanbindeglied L, wie oben spezifiziert
R³, R⁴ = Definition der Silylanker, wie oben spezifiziert
R⁸ = H, Alkyl, vorzugsweise Methyl, Ethyl
R¹¹, R¹² = unabhängig voneinander auswählbare Substituenten nach Formel III
des Patentes WO 98/01480 von K. Matyjaszewski et al.
X = wie oben spezifiziert
Y = wie oben spezifiziert
Z' = nach dem ATRP-Mechanismus transferierbares Atom oder Gruppe nach Patent WO 98/01480 von K Matyjaszewski et al., vorzugsweise Br, Cl.

Mit dem erfindungsgemäßen Verfahren können Schichten oder Schichtsysteme erzeugt werden, die Eigenschaften der ursprünglichen Oberflächen so weit verändem, daß sie nur noch durch die Beschichtung als solche bestimmt werden.

Typische Oberflächeneigenschaften sind - neben dem chemischen Reaktionsvermögen - z.B. Adhäsions- und Permeationsverhalten, Grenzflächenspannung, Adsorptionsvermögen, optische Eigenschaften wie z.B. Reflexionsvermögen, Oberflächenleitfähigkeit, Aussehen, Härte, etc. Für den erfindungsgemäßen Gegenstand ergeben sich somit unzählige Anwendungsmöglichkeiten.

Anwendbar ist das erfindungsgemäße Verfahren z.B.
- zur Herstellung von polymerbeschichteten planaren oder nichtplanaren Festkörperoberflächen, um dort die physikalischen bzw. die chemischen Eigenschaften für Anwendungen wie z.B. Oberflächenschutz (Abrasion, Korrosion), physikalische Wechselwirkung mit der Umgebung (Gleitverhalten, Härte), chemische Oberflächenreaktivität, Photoreaktivität, optische Eigenschaften, thermodynamische Verträglichkeit usw. gezielt einstellen zu können,
- zur Herstellung von z.B. porösen, oligo- oder polymerbeschichteten Materialien, um die Permeation und/oder Sorption von Gasen und Flüssigkeiten, z.B. zu Zwecken der Trennung verschiedener Komponenten, gezielt einstellen zu können,
- zur Herstellung von polymerbeschichteten Festkörpern und polymerbeschichteten hochdispersen Festkörpem nach dem core-shell-Prinzip, um mit ihnen als Füllstoffen eine chemische Anbindung der dispergierten Phase an die umgebende kontinuierliche Matrix (z.B. Polymermatrix) gezielt steuern zu können,
- zur Herstellung von polymerbeschichteten Festkörpem und polymerbeschichteten hochdispersen Festkörpem mit gezielt steuerbarem umgebendem Polymeranteil nach dem core-shell-Prinzip zur Herstellung neuartiger Verbundsysteme mit Verarbeitungsmöglichkeit oberhalb der Glasumwandlungstemperatur der Polymerbeschichtung.

Weitere Anwendungsmöglichkeiten liegen in der Medizintechnik. Mit dem erfindungsgemäßen Verfahren können Oberflächen von Implantaten natürlichen oder synthetischen Ursprungs so konditioniert werden, daß eine bessere Anbindung von Körperzellen ermöglicht wird und damit eine bessere Inkorporation des Implantates erreicht wird. Durch das Aufbringen geeigneter, chemisch im Polymer gebundener Moleküle auf Implantatoberflächen können des weiteren Abstoßungsreaktionen gegen das Implantat verringert werden.

Die nachfolgenden Beispiele sollen die Erfindung näher erläutern.

### Beispiele

### Initiatoren

### 1. Beispiel: Initiator der allgemeinen Formel 3

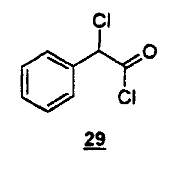

2-Chlor-2-phenylessigsäurechlorid **29** stellt einen geeigneten, käuflich zu erwerbenden Initiator der allgemeinen Formel **3** dar; er entspricht der spezielleren Formel **26** mit Z' = Cl, Y = Cl und R¹¹ = H.

### 2. Beispiel: Initiator der allgemeinen Formel 3

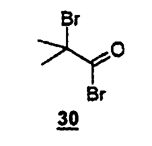

2-Brom-2-methylpropionsäurebromid **30** stellt einen geeigneten, käuflich zu erwerbenden Initiator der allgemeinen Formel **3** dar; er entspricht der spezielleren Formel **27** mit Z' = Br, Y = Br, R¹¹ = Methyl und R¹² = Methyl.

### 3. Beispiel: Initiator der allgemeinen Formel 6

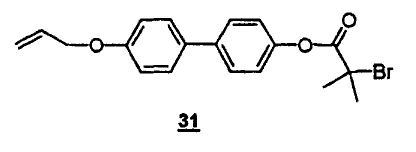

Tetrahydrofuran (THF) wird getrocknet, indem es über Natrium-Draht unter Rückflußkühlung zum Sieden erhitzt wird. Es wird direkt vor Gebrauch abdestilliert.

Pyridin wird über KOH getrocknet und fraktioniert destilliert. 4-Allyloxy-4'-hydroxybiphenyl wird nach bekannter Literatur dargestellt [Finkelmann, H.; Lühmann, B., Rehage, G.; Makromol. Chem. 186, 1095 (1985)]. 2-Brom-2-methylpropionsäurebromid **30** wird im Vakuum fraktioniert destilliert. Petrolether wird fraktioniert destilliert, wobei die Fraktion mit dem Siedebereich zwischen 40°C und 65°C verwendet wird. Diethylether wird destilliert.

2.26 g (10 mmol) 4-Allyloxy-4'-hydroxybiphenyl werden in 100 ml abs. THF gelöst. Zu der Lösung wird 1 ml (12 mmol) Pyridin gegeben und die Lösung im Eisbad auf 0°C abgekühlt. Dazu wird dann tropfenweise eine Lösung von 1.5 ml (12 mmol) 2-Brom-2-methylpropionsäurebromid **30** in 20 ml abs. THF gegeben. Nach beendeter Zugabe wird auf Raumtemperatur erwärmt und für weitere 6 h unter Ausschluß von Feuchtigkeit gerührt.
Der Ansatz wird filtriert und das Lösungsmittel im Vakuum entfernt. Der Rückstand wird in Diethylether aufgenommen und die organische Phase mit 0.5N HCI, ges. NaHCO₃ und Wasser gewaschen. Die organische Phase wird über Na₂SO₄ getrocknet und das Lösungsmittel im Vakuum entfernt. Nach säulenchromatographischer Reinigung an SiO₂ mit Petrolether / Diethylether (1/1 v/v) als Eluent wird die Verbindung **31** erhalten.
- Ausbeute:: 1.7 g des Initiators **31**
- Untersuchungen:: ¹H-NMR, ¹³C-NMR

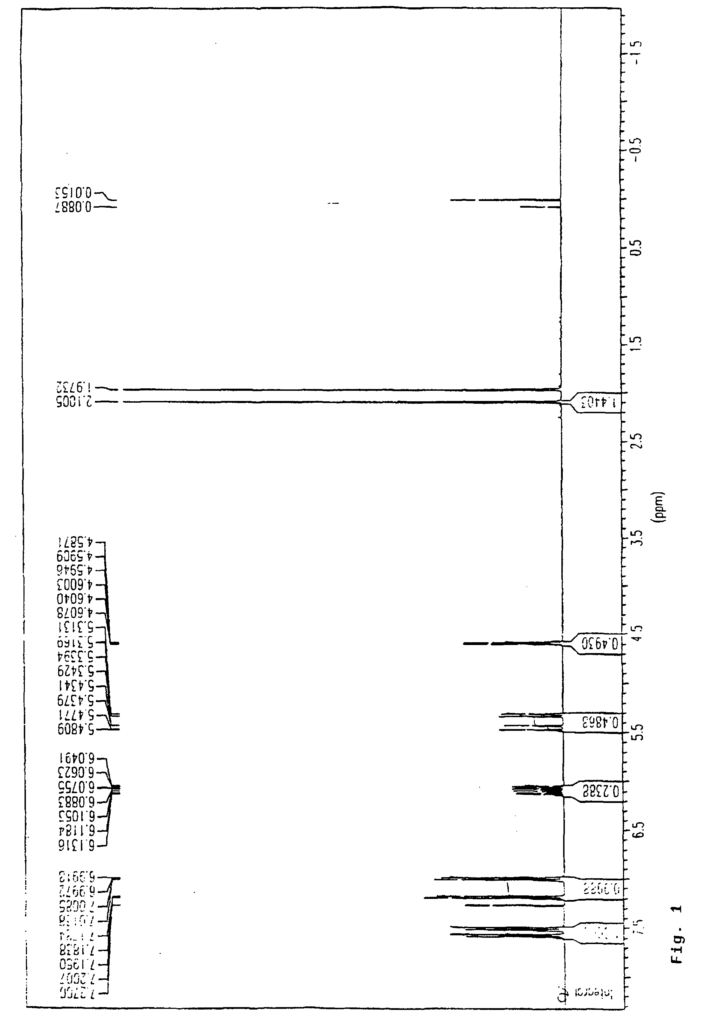

Fig. 1 zeigt das ¹H-NMR-Spektrum der Verbindung **31**

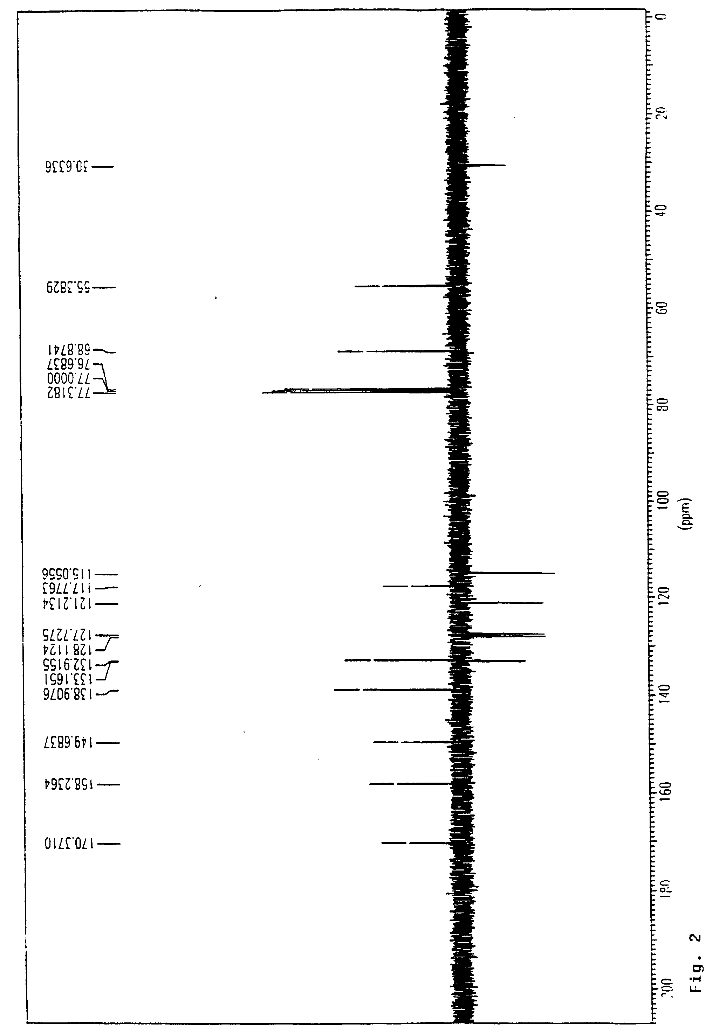

Fig. 2 zeigt das ¹³C-NMR-Spektrum der Verbindung **31**

Aufnahmebedingung: Lösung des Initiators **31** in CDCl₃ mit TMS als interner Standard.

### 4. Beispiel: Initiator der allgemeinen Formel 6

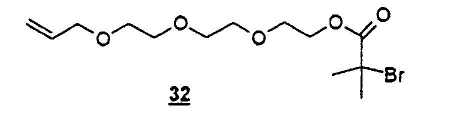

Dichlormethan wird über CaH₂ getrocknet, destilliert und über Molekularsieb 4Å aufbewahrt. Essigsäureethylester wird destilliert. 2-(2-(2-Allyloxy-ethoxy)-ethoxy)-ethanol wird nach bekannter Literatur dargestellt [Mitchell, T.N.; Heesche-Wagner, K.; J. Organomet. Chem. 436, 43 (1992)]. Die Vorbehandlung sonstiger Chemikalien und Lösungsmittel ist im o.g. Beispiel 3. beschrieben.

2.85 g (15 mmol) 2-(2-(2-Allyloxy-ethoxy)-ethoxy)-ethanol und 1.6 ml (20 mmol) Pyridin werden in 150 ml abs. Dichlormethan gelöst. Die Lösung wird im Eisbad unter Feuchtigkeitsausschluß auf 0°C abgekühlt. Dazu wird dann tropfenweise eine Lösung von 2.3 ml (19 mmol) 2-Brom-2-methylpropionsäurebromid **30** in 20 ml abs. Dichlormethan gegeben. Nach beendeter Zugabe wird auf Raumtemperatur erwärmt und für weitere 6 h gerührt.
Der Ansatz wird filtriert und das Lösungsmittel im Vakuum entfernt. Der Rückstand wird in Essigsäureethylester aufgenommen und die organische Phase mit 0.5N HCI, ges. NaHCO₃ und Wasser gewaschen. Die organische Phase wird über Na₂SO₄ getrocknet und das Lösungsmittel im Vakuum entfernt. Nach säulenchromatographischer Reinigung an SiO₂ mit Essigsäureethylester als Eluent wird die Verbindung **32** erhalten.
- Ausbeute:: 3.82 g des Initiators **32**
- Untersuchungen:: ¹H-NMR, ¹³C-NMR

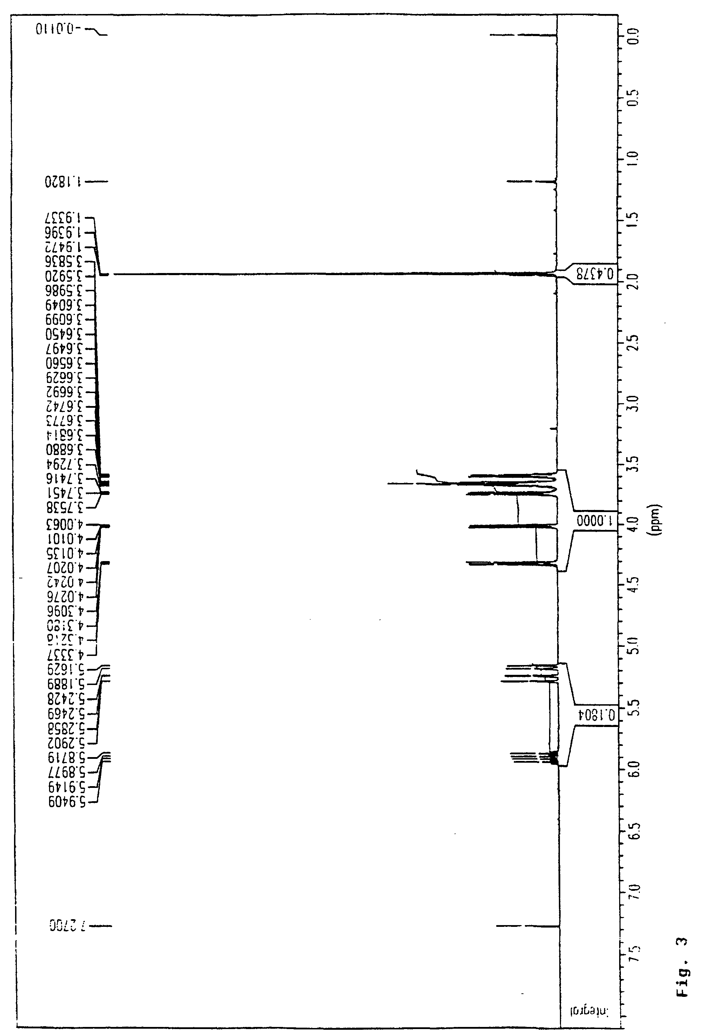

Fig. 3 zeigt das ¹H-NMR-Spektrum der Verbindung **32**

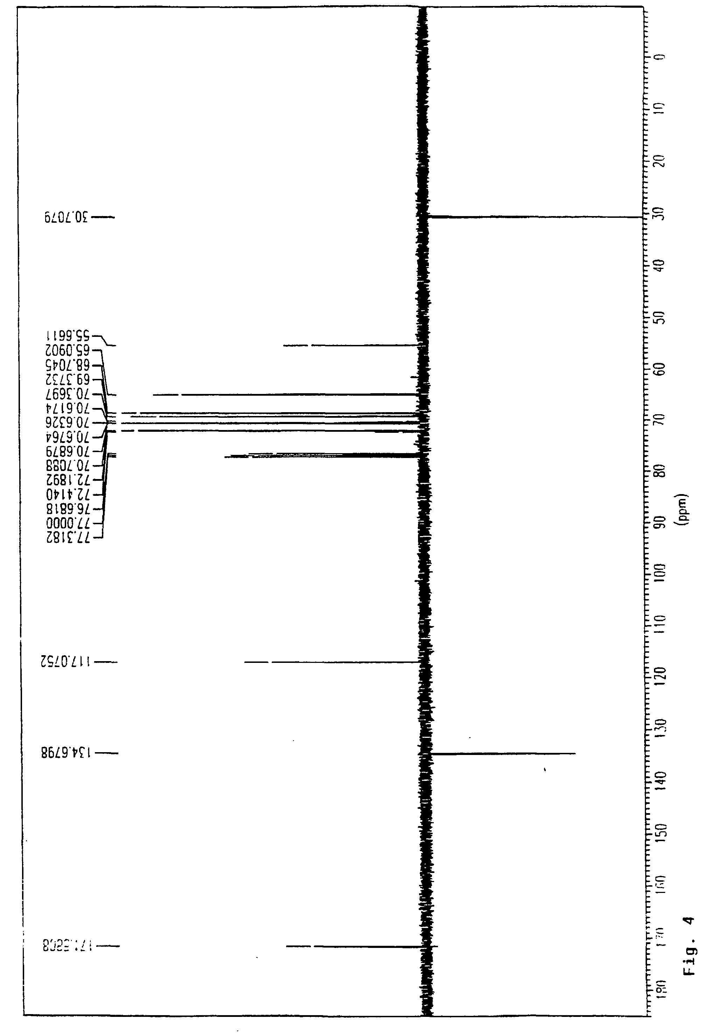

Fig. 4 zeigt das ¹³C-NMR-Spektrum der Verbindung **32**

Aufnahmebedingung: Lösung des Initiators **32** in CDCl₃ mit TMS als interner Standard.

### 5. Beispiel: Initiator der allgemeinen Formel 6

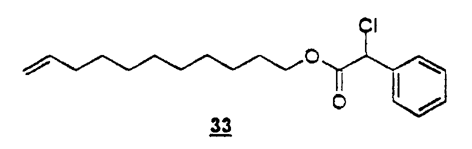

2-Chlor-2-phenylessigsäurechlorid **29** wird im Vakuum fraktioniert destilliert. Triethylamin wird über CaH₂ getrocknet und unter Schutzgas destilliert. 10-Undecen-1-ol wird ohne weitere Aufreinigung verwendet. Die Vorbehandlung sonstiger Chemikalien und Lösungsmittel ist in den o.g. Beispielen 3. und 4. beschrieben.

6 ml (29.8 mmol) 10-Undecen-1-ol und 4.6 ml (33 mmol) Triethylamin werden in 150 ml Dichlormethan gelöst. Die Lösung wird im Eisbad auf 0°C gekühlt und bei dieser Temperatur unter Ausschluß von Feuchtigkeit und Licht eine Lösung von 4.8 ml (33.1 mmol) 2-Chlor-2-phenylessigsäurechlorid **29** in 50 ml abs. Dichlormethan zugegeben. Nach beendeter Zugabe wird die Reaktionsmischung auf Raumtemperatur erwärmt und für weitere 6 h gerührt.
Die Reaktionsmischung wird in einen Scheidetrichter überführt und mit jeweils 150 ml 0.5N HCl, ges. NaHCO₃ und dest. Wasser gewaschen. Die organische Phase wird abgetrennt, über Na₂SO₄ getrocknet und das Lösungsmittel im Vakuum entfernt. Das Produkt 2-Chlor-2-phenylessigsäure(10'-undecenyl)ester **33** wird nach säulenchromatographischer Reinigung an SiO₂ mit Petrolether / Essigsäureethylester (10/1 v/v) isoliert.
- Ausbeute:: 5.7 g des Initiators **33**
- Untersuchungen:: ¹H-NMR, ¹³C-NMR

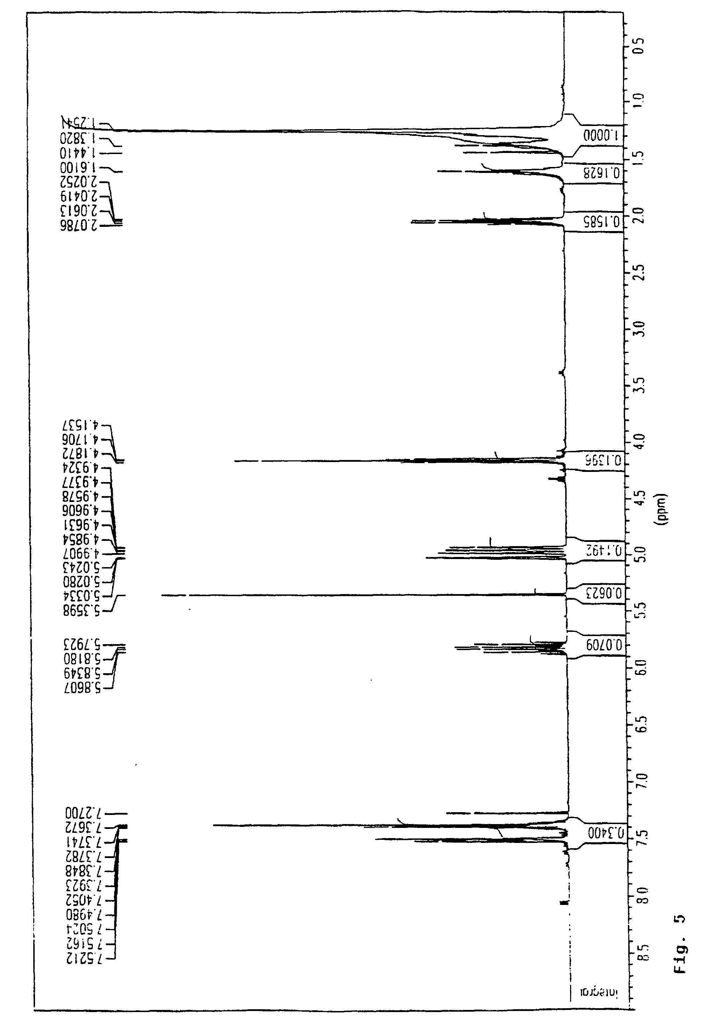

Fig. 5 zeigt das ¹H-NMR-Spektrum der Verbindung **33**

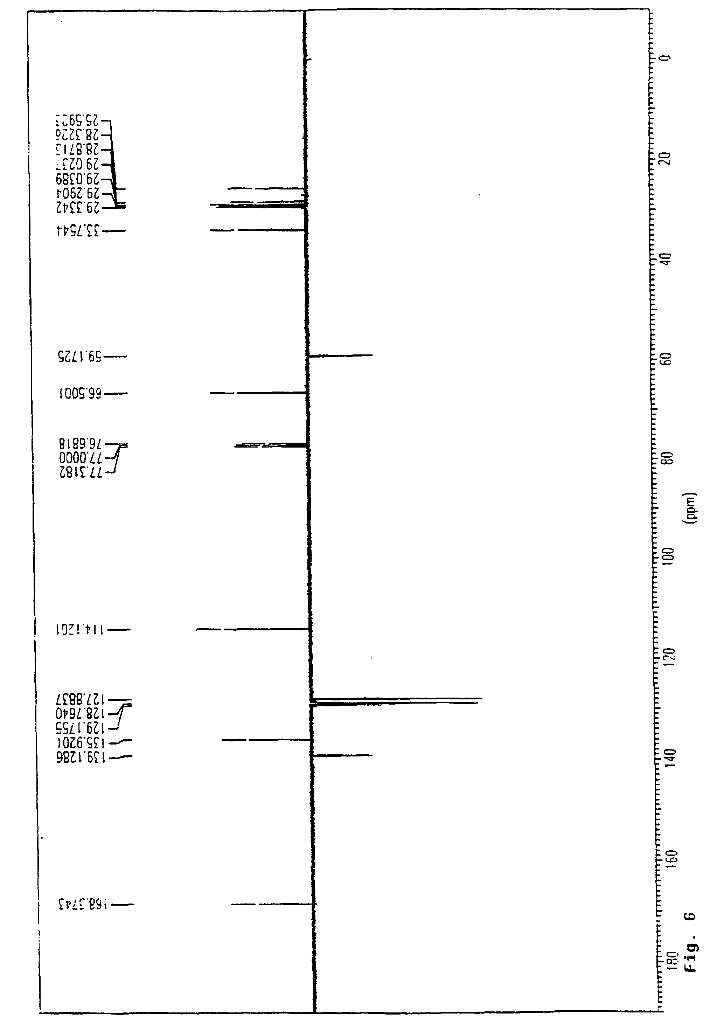

Fig. 6 zeigt das ¹³C-NMR-Spektrum der Verbindung **33**

Aufnahmebedingung: Lösung des Initiators **33** in CDCl₃ mit TMS als interner Standard.

### 6. Beispiel: Initiator der allgemeinen Formel 6

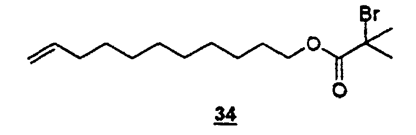

2-Brom-2-methylpropionsäurebromid **30** wird im Vakuum destilliert. Die Vorbehandlung sonstiger Chemikalien und Lösungsmittel ist in den o.g. Beispielen 3.-5. beschrieben.

Die Durchführung, Aufarbeitung der Reaktion und Isolierung des Produktes **34** wird wie im 5. Beispiel beschrieben durchgeführt. Abweichend hiervon werden anstelle von **29** 4 ml (32.4 mmol) 2-Brom-2-methylpropionsäurebromid **30** eingesetzt.
- Ausbeute:: 6.7 g des Initiators **34**
- Untersuchungen:: ¹H-NMR, ¹³C-NMR

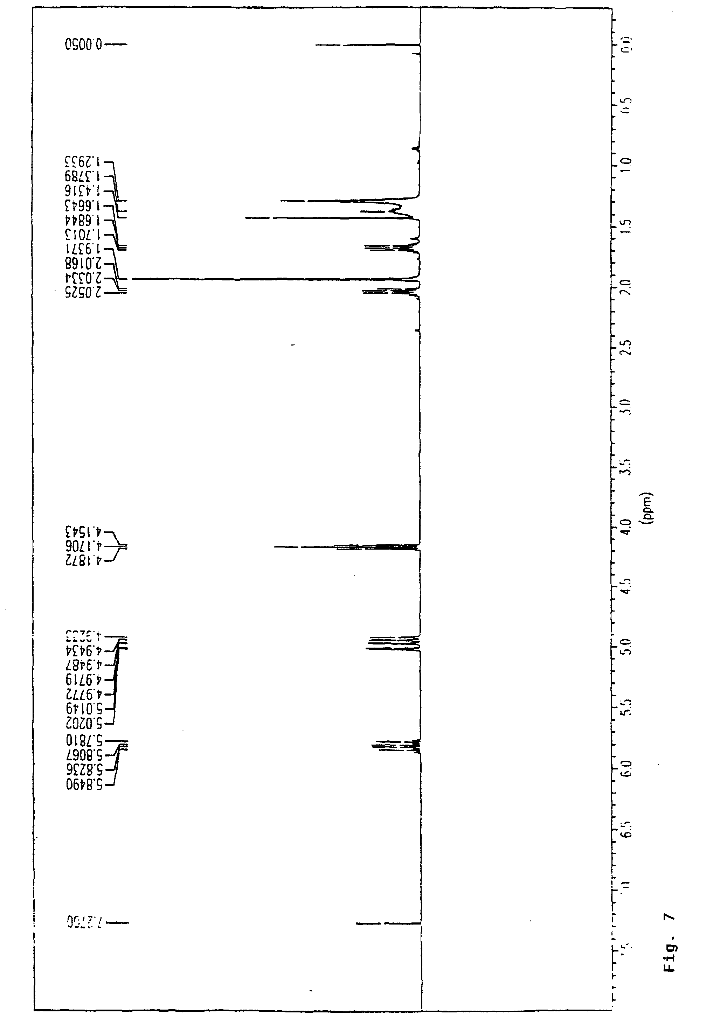

Fig. 7 zeigt das ¹H-NMR-Spektrum der Verbindung **34**

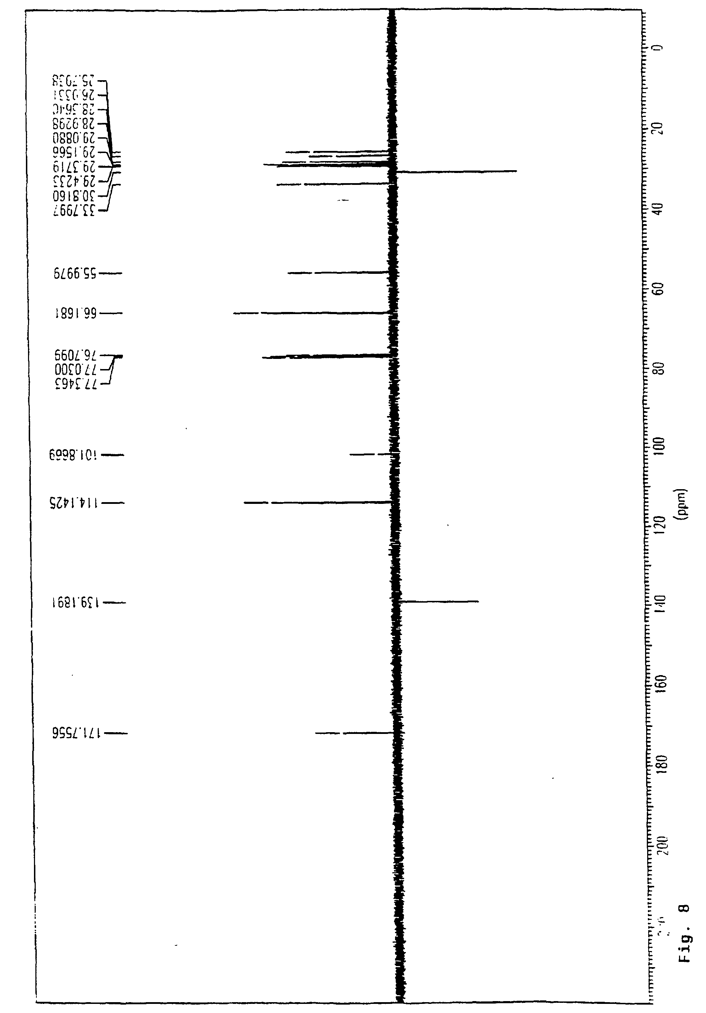

Fig. 8 zeigt das ¹³C-NMR-Spektrum der Verbindung **34**

Aufnahmebedingung: Lösung des Initiators **34** in CDCl₃ mit TMS als intemer Standard.

### 7. Beispiel: Initiator der allgemeinen Formel 2

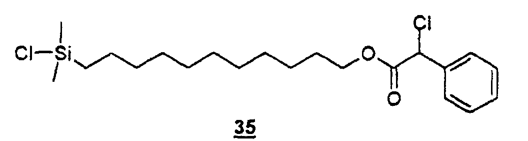

Chlordimethylsilan wird unter Ausschluß von Feuchtigkeit destilliert. Ethanol wird destilliert. Hexachloroplatinsäure-Hexahydrat und Dimethoxyethan werden ohne weitere Reinigung eingesetzt. Die Vorbehandlung von Dichlormethan ist im o.g. Beispiel 4. beschrieben.

5 g (15.5 mmol) der Verbindung **33** werden in 40 ml (368 mmol) Chlordimethylsilan gegeben. Unter Feuchtigkeitsausschluß wird eine Lösung von 30 mg Hexachloroplatinsäure-Hexahydrat in 0.5 ml Dimethoxyethan / Ethanol (1/1 v/v) hinzugegeben und das Reaktionsgemisch über Nacht bei Raumtemperatur unter Schutzgas gerührt.
Zur Aufarbeitung wird das überschüssige Chlordimethylsilan abdestilliert und der Rückstand in 20 ml abs. Dichlormethan aufgenommen. Die Lösung wird über fein gepulvertes Na₂SO₄ filtriert und das Lösungsmittel im Vakuum entfernt. Der Initiator **35** wird ohne weitere Reinigung verwendet.

Der Initiator **35** entspricht der spezielleren Formel **12,** mit u = 1, x = 11, y = 1, z = 1, Z' = Cl, X = Cl, R³ = Methyl, R⁴ = Methyl, R¹¹ = Phenyl und R¹² = H.
- Ausbeute:: ca. 6 g des Initiators **35**
- Untersuchung:: FT-IR

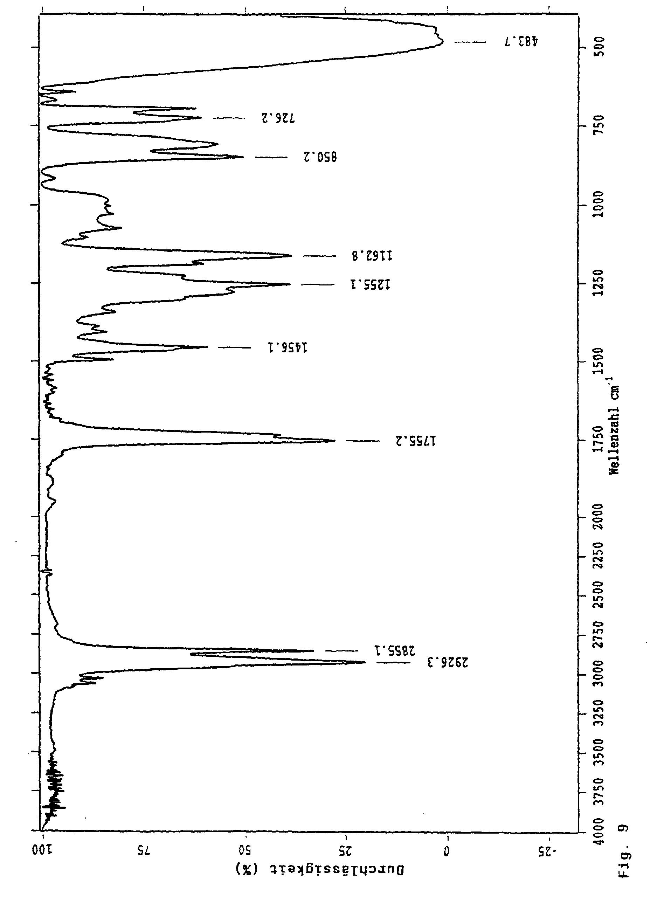

Fig. 9 zeigt das FT-IR Spektrum des Initiators **35.**

Aufnahmetechnik: Transmissionsspektrum von **35** als Film zwischen NaCI-Fenstern.

### 8. Beispiel: Initiator der allgemeinen Formel 2

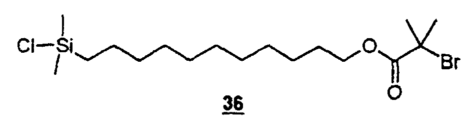

Die Durchführung und Aufarbeitung der Reaktion und die Isolierung des Produktes **36** wird wie im 7. Beispiel beschrieben durchgeführt. Abweichend hiervon werden anstelle von **33** 4.9 g (15.4 mmol) 2-Brom-2-methylpropionsäure(10'undecenyl)ester **34** eingesetzt.

Der Initiator **36** entspricht der spezielleren Formel **12,** mit u = 1, x = 11, y = 1, z = 1, Z' = Br, X = Cl, R³ = Methyl, R⁴ = Methyl, R¹¹ = Methyl und R¹² = Methyl.
- Ausbeute:: ca. 5.9 g des Initiators **36**
- Untersuchung:: FT-IR

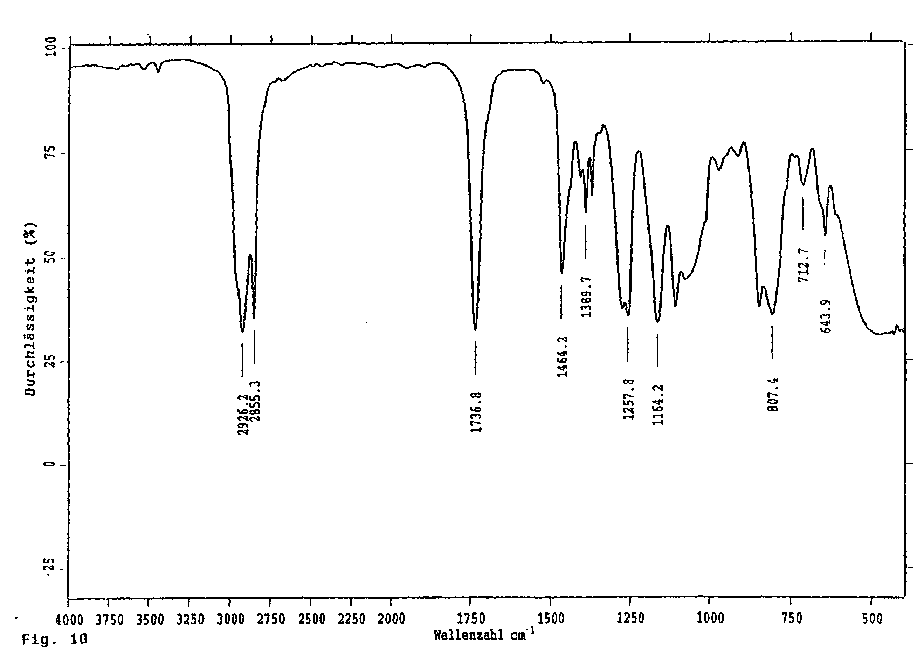

Fig. 10 zeigt das FT-IR Spektrum des Initiators **36.**

Aufnahmetechnik: Transmissionsspektrum von **36** als Film zwischen NaCI-Fenstern.

### 9. Beispiel: Initiator der allgemeinen Formel 2

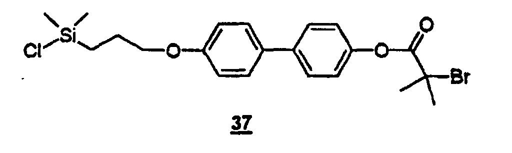

Die Durchführung und Aufarbeitung der Reaktion und die Isolierung des Produktes **37** wird wie im 7. Beispiel beschrieben durchgeführt. Abweichend hiervon werden anstelle von **33** 1.8 g (4.8 mmol) 2-Brom-2-methylpropionsäure(4'allyloxybiphenyl-4-yl)ester **31,** 20 ml (184 mmol) Chlordimethylsilan und 15 mg Hexachloroplatinsäure-Hexahydrat in 0.25 ml Dimethoxyethan / Ethanol (1/1 v/v) eingesetzt.

Der Initiator **37** entspricht der spezielleren Formel **16**, mit x = 3, y = 1, z = 1, Z' = Br, X = Cl, R³ = Methyl, R⁴ = Methyl, R¹¹ = Methyl und R¹² = Methyl.
- Ausbeute:: ca. 2 g des Initiators **37**

### 10. Beispiel: Initiator der allgemeinen Formel 2

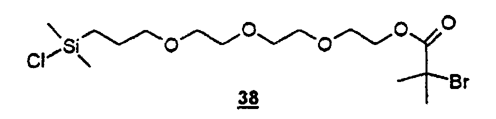

Die Durchführung und Aufarbeitung der Reaktion und die Isolierung des Produktes **38** wird wie im 7. Beispiel beschrieben durchgeführt. Abweichend hiervon werden anstelle von **33** 1.7 g (5 mmol) 2-Brom-2-methylpropionsäure(2-(2-(2-Allyloxyethoxy)-ethoxy)-ethyl)ester **32**, 20 ml (184 mmol) Chlordimethylsilan und 15 mg Hexachloroplatinsäure-Hexahydrat in 0.25 ml Dimethoxyethan / Ethanol (1/1 v/v) eingesetzt.

Der Initiator **38** entspricht der spezielleren Formel **18**, mit x = 3, m = 3, y = 1, z = 1, Z' = Br, X = Cl, R³ = Methyl, R⁴ = Methyl, R¹¹ = Methyl und R¹² = Methyl.
- Ausbeute:: ca. 1.9 g des Initiators **38**

### 11. Beispiel: Initiator der allgemeinen Formel 5

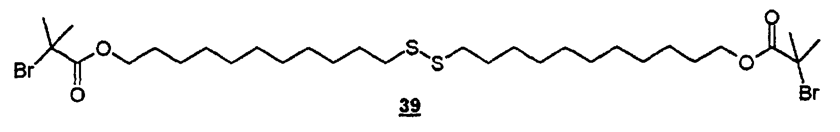

Bis(11-hydroxyundecyl)disulfid wird nach bekannter Literatur dargestellt [Bain, C.B.; Troughton, E.B.; Tao, Y.T.; Evall, J.; Whitesides, G.M.; Nuzzo, R.G., J. Am. Chem. Soc. 111, 321 (1989)]. N,N-Dimethylaminopyridin wird ohne weitere Reinigung verwendet. Die Vorbehandlung sonstiger Chemikalien und Lösungsmittel ist in den o.g. Beispielen 3. und 5. beschrieben.

Eine Lösung von 3.2 ml (25.9 mmol) 2-Brom-2-methyl-propionsäurebromid **30** in 20 ml abs. THF wird unter Schutzgas tropfenweise zu einer Lösung von 5.02 g (12.3 mmol) Di-(11-hydroxyundecyl)-disulfid, 3.8 ml (27.3 mmol) Triethylamin und 12 mg (10 µmol) N,N-Dimethylaminopyridin in 100 ml abs. THF gegeben. Die Lösung wird weitere 2 h bei Raumtemperatur gerührt.
Die Reaktionslösung wird am Rotationsverdampfer eingeengt und der Rückstand in Diethylether aufgenommen. Die organische Phase wird mit 50 ml 2N Natronlauge und dreimal mit 50 ml dest. Wasser gewaschen. Die organische Phase wird über Natriumsulfat getrocknet und das Lösungsmittel im Vakuum entfernt. Säulenfiltration an Aluminiumoxid (neutral) mit Petrolether als Eluent ergibt das Produkt **39** als weißliches, wachsartiges Öl. **39** entspricht der spezielleren Formel **24** mit x = 11, Z' = Br, R¹¹ = Methyl und R¹² = Methyl.
- Ausbeute:: 7.36 g des Initiators **39**
- Untersuchung:: FT-IR

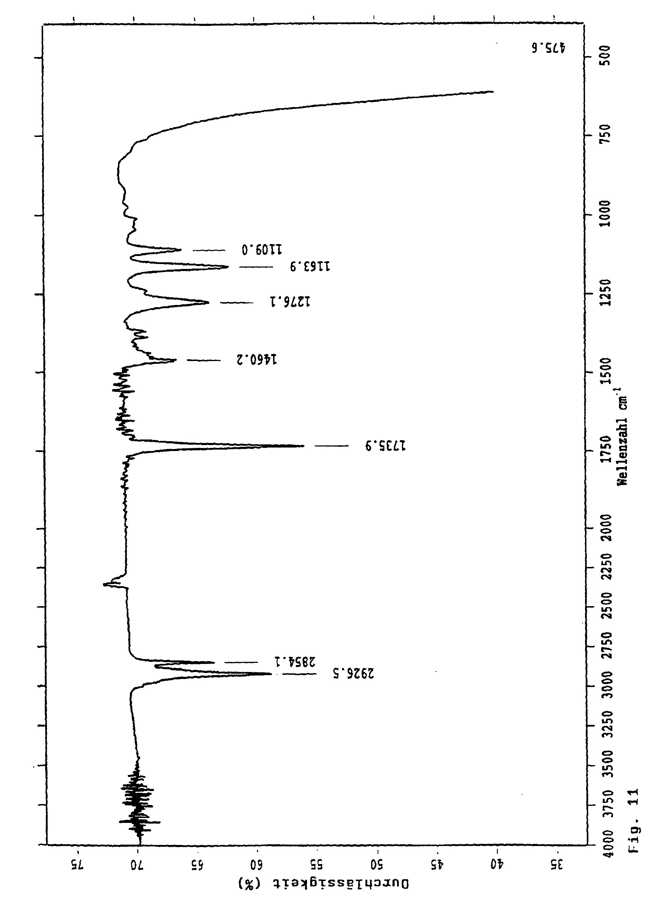

Fig. 11 zeigt das FT-IR-Spektrum der Verbindung **39**.

Aufnahmetechnik: Transmissionsspektrum eines Films der Verbindung **39** zwischen NaCl-Fenstern.

### Anbindung von Initiatoren an Festkörperoberflächen

### 12. Beispiel: Initiator 30 angebunden an Poly(p-hydroxystyrolco-divinylbenzol)

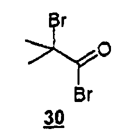

Poly(p-hydroxystyrol-co-divinylbenzol) wird nach bekannter Literatur dargestellt [Spittel, A., Diplomarbeit, Universität Hannover (1991)]. Ethanol wird destilliert. Die Vorbehandlung sonstiger Chemikalien und Lösungsmittel ist in den o.g. Beispielen 3. und 4. beschrieben.

5 g Poly(p-hydroxystyrol-co-divinylbenzol)-Mikrogel werden in einem ausgeheizten Rundkolben vorgelegt und in 200 ml abs. Dichlormethan unter Schutzgas 24 h gerührt. Dann werden 1.4 ml (17.3 mmol) Pyridin zugegeben. Das Reaktionsgemisch wird im Eisbad gekühlt und langsam eine Lösung von 2 ml (16.5 mmol) 2-Brom-2-methylpropionsäurebromid **30** in 20 ml abs. Dichlormethan zugetropft. Nach beendeter Zugabe wird auf Raumtemperatur erwärmt und für weitere 12 h gerührt.
Das mit **30** belegte Mikrogel wird abfiltriert und nacheinander mit jeweils 100 ml Diethylether, Ethanol, Ethanol / Wasser (1/1 v/v), Ethanol und Diethylether gewaschen. Das Produkt wird im Vakuum (10 mbar) bei 50°C getrocknet.
- Ausbeute:: 5.65 g mit Initiator **30** belegtes Mikrogel,
entspricht 0.87 mmol Initiator **30** pro g Mikrogel

### 13. Beispiel: Initiator 35 angebunden an Kieselgel

Kieselgel (Ultrasil 3370, Degussa) wird für 36 h bei 110°C und 10 mbar getrocknet. Toluol wird getrocknet, indem es über Natrium-Draht unter Rückflußkühlung zum Sieden erhitzt wird. Es wird direkt vor Gebrauch abdestilliert. Die Vorbehandlung sonstiger Chemikalien und Lösungsmittel ist in den o.g. Beispielen 3., 5. und 7. beschrieben.

Zu einer Suspension von 3 g Kieselgel in 200 ml abs. Toluol werden unter Schutzgas 2 ml (14.4 mmol) Triethylamin und eine Lösung von 2 g (4.8 mmol) 2-Chlor-2-phenyl-essigsäure-(11'-(chlordimethylsilyl)undecyl)ester **35** in 5 ml abs. Toluol gegeben. Die Reaktionsmischung wird für 24 h bei Raumtemperatur unter Schutzgas gerührt.
Zur Aufarbeitung wird das Kieselgel von der Reaktionslösung über eine Fritte abgetrennt und anschließend portionsweise mit jeweils 150 ml Toluol, Ethanol / Wasser (1/1 v/v) pH 3, Ethanol/Wasser (1/1 v/v), Ethanol und Diethylether gewaschen. Das mit **35** belegte Kieselgel wird dann bis zur Gewichtskonstanz bei 30 °C und 10 mbar getrocknet.
- Ausbeute:: ca. 3.3 g mit **35** belegtes Kieselgel,
entspricht 0.24 mmol Initiator **35** pro g Kieselgel
- Untersuchung:: FT-IR

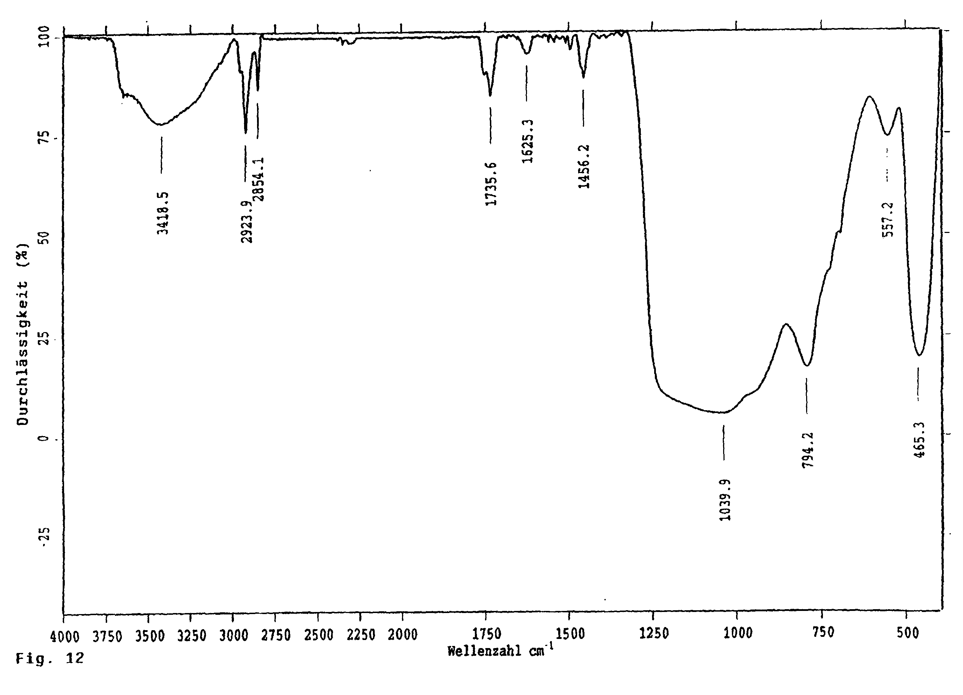

Fig. 12 zeigt das FT-IR-Spektrum des Kieselgels mit auf der Oberfläche angebundenem Initiator **35**.

Aufnahmetechnik: Transmissionsmessung eines Films, der durch Verdunsten eines Suspendiermittels auf einem KBr-Preßling erzeugt wurde.

### 14. Beispiel: Initiator 36 angebunden an Kieselgel

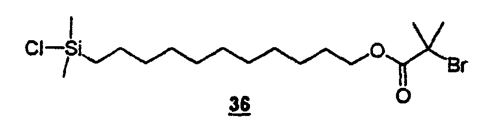

Die Schritte der Durchführung und Aufarbeitung der Initiatoranbindung am Festkörper sind im 13. Beispiel beschrieben.

Abweichend vom 13. Beispiel werden 5 g Kielselgel suspendiert in 300 ml Toluol, 3.6 ml (25.8 mmol) Triethylamin und anstelle von Initiator **35** 2-Brom-2-methylpropionsäure(11'-(chlordimethylsilyl)undecyl)ester **36** in 10 ml abs. Toluol verwendet. Zur Aufarbeitung werden anstelle von jeweils 150 ml jeweils 200 ml Toluol, Ethanol / Wasser (1/1 v/v) pH 3, Ethanol / Wasser (1/1 v/v), Ethanol und Diethylether verwendet.
- Ausbeute:: ca. 5.55 g mit **36** belegtes Kieselgel,
entspricht 0.27 mmol Initiator **36** pro g Kieselgel
- Untersuchung:: FT-IR

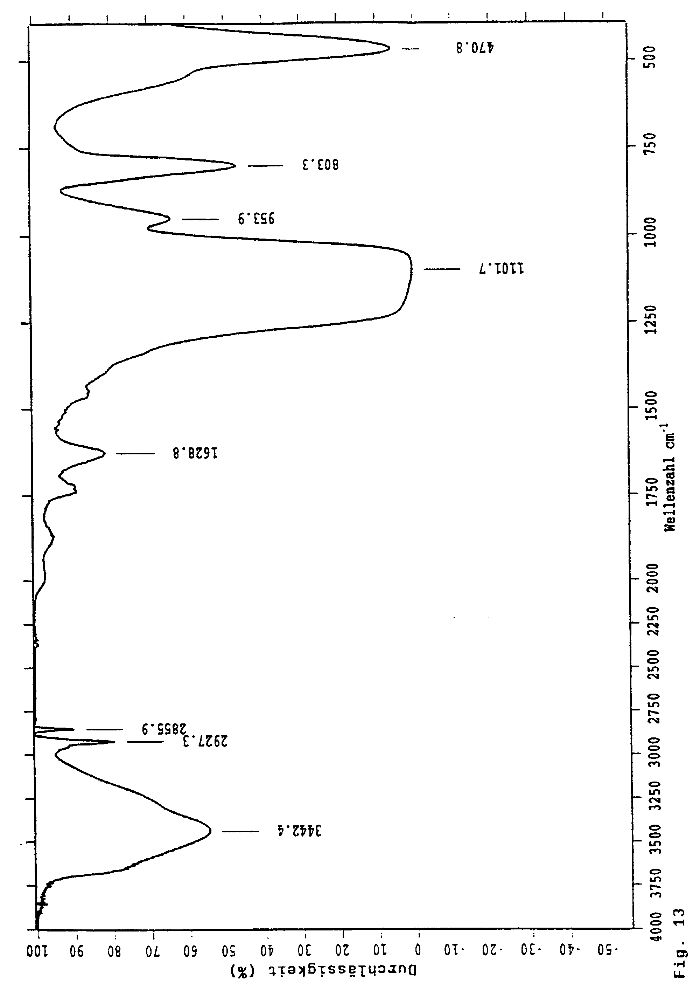

Fig. 13 zeigt das FT-IR-Spektrum des Kieselgels mit auf der Oberfläche angebundenem Initiator **36.**

Aufnahmetechnik: Transmissionsmessung eines Films, der durch Verdunsten eines Suspendiermittels auf einem KBr-Preßling erzeugt wurde.

### 15. Beispiel: Initiator 36 angebunden an Glasperlen

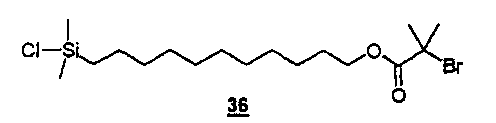

Um die Anzahl reaktiver Silanolgruppen auf der Oberfläche der Glasperlen (170 mesh) zu erhöhen, werden 3 g Glasperlen in 40 ml einer 4N Natronlauge für 4 h in der Siedehitze geätzt. Die Glasperlen werden über eine Glasfritte abfiltriert und mit ca. 250 ml dest. Wasser neutral gewaschen. Die Glasperlen werden für 36 h im Vakuum (10 mbar) bei einer Temperatur von 80°C getrocknet. Die Schritte der Durchführung und Aufarbeitung der Initiatoranbindung am Festkörper erfolgt analog dem 13. Beispiel.

2 g der Glasperlen werden in einem ausgeheizten Rundkolben in 50 ml abs. Toluol unter Schutzgas suspendiert. Dazu werden 1.3 ml (9.4 mmol) Triethylamin und 3.92 g (9.5 mmol) des Initiators **36** gegeben. Die Reaktion wird 18 h bei Raumtemperatur unter Schutzgas durchgeführt.
Die Glasperlen werden von der Reaktionslösung abgetrennt und nacheinander mit jeweils 70 ml Toluol, Ethanol / Wasser (1/1 v/v) pH 3, Ethanol / Wasser (1/1 v/v), Ethanol und Diethylether gewaschen. Das Produkt wird 48 h bei Raumtemperatur im Vakuum (10 mbar) getrocknet.
- Untersuchung:: FT-IR

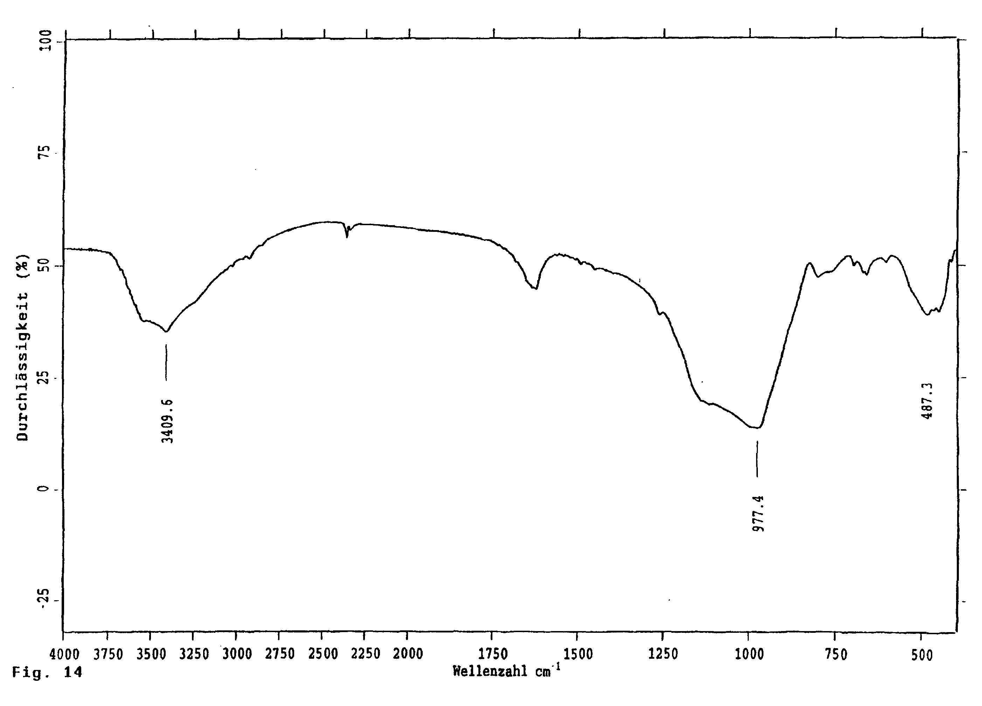

Fig. 14 zeigt das FT-IR-Spektrum der Glasperlen mit auf der Oberfläche angebundenem Initiator **36.**

Aufnahmetechnik: Transmissionsspektrum eines KBr-Preßlings

### 16. Beispiel: Initiator 39 angebunden an kolloidalem Gold

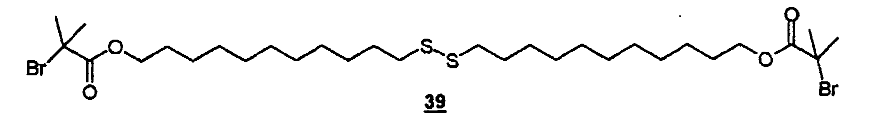

Kolloidales Gold in Toluol wird nach bekannter Literatur dargestellt [Burst, M.; Bethell, D.; Kiely, C.J.; Schiffrin D.J, Adv. Mater., 7, 795 (1995)]. Didodecyldisulfid wird in Anlehnung an eine Literaturvorschrift dargestellt [Bain, C.B.; Troughton, E.B.; Tao, Y.T.; Evall, J.; Whitesides, G.M.; Nuzzo, R.G., J. Am. Chem. Soc. 111, 321 (1989)].

Zu einer Dispersion von 178 mg (0.9 mmol) kolloidalem Gold (Partikeldurchmesser ca. 8 nm) in 750 ml dest. Toluol wird langsam eine Lösung von 135 mg (0.336 mmol) Didodecyldisulfid und 60 mg (0.085 mmol) des Initiators **39** in 80 ml dest. Toluol gegeben und bei Raumtemperatur für weitere 3 h gerührt.
Die organische Phase wird im Vakuum bis zur Trockene eingeengt. Der Rückstand wird intensiv mit Ethanol und Aceton gewaschen. Anschließend wird das Produkt wiederum in Toluol dispergiert und nochmals bis zur Trockene eingeengt und der Rückstand wiederum mit Ethanol und Aceton gewaschen. Insgesamt wird diese Prozedur dreimal durchgeführt.
- Ausbeute:: 0.205 g mit **39** belegtes, kolloidales Gold
- Untersuchung:: FT-IR

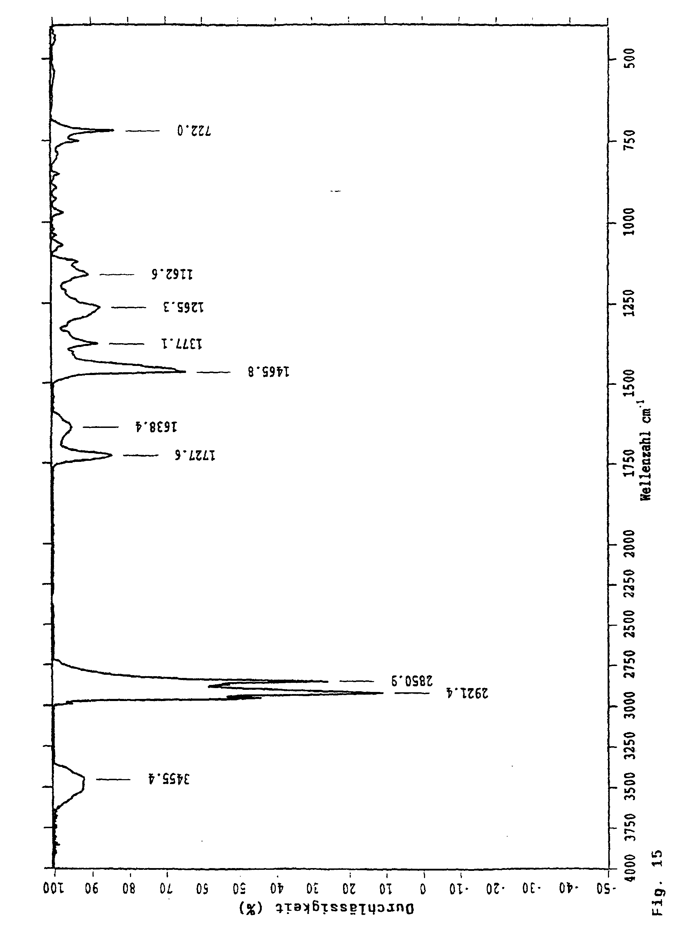

Fig. 15 zeigt das FT-IR-Spektrum des Gold-Kolloids mit auf der Oberfläche angebundenem Initiator **39**.

Aufnahmetechnik: Transmissionsspektrum eines KBr-Preßlings

### 17. Beispiel: Variation der Konzentration des Initiators 35 auf der Kieselgeloberfläche

Die Schritte der Durchführung und Aufarbeitung der Initiatoranbindung am Festkörper sind im 13. Beispiel beschrieben.
Abweichend vom 13. Beispiel werden die eingesetzten Verhältnisse Initiator **35** zu Kieselgel variiert (s. Tab. 1). Das Verhältnis Initiator **35** zu abs. Triethylamin ist in allen Vesuchen 1 eq. zu 3 eq.

**Tab. 1:**

| Ansatzverhältnis Initiator **35** zu Kieselgel und die resultierende Oberflächenkonzentration von **35** auf dem Kieselgel | | |
|---|---|---|
| Versuch | **35**/Kieselgel (mmol/g)^{a)} | [**35** ] (mmol/g) ^{b)} |
| 1 | 0.27 | 0.14 |
| 2 | 0.73 | 0.28 |
| 3 | 1.78 | 0.30 |

| | | |
|---|---|---|
| a) Verhältnis Initiator **35** zu Kieselgel in der Reaktionsmischung | | |
| b) Konzentation des Initiators **35** auf der Kieselgeloberfläche im Produkt, bestimmt durch TGA | | |

- Ausbeute:: s. Tab. 1, letzte Spalte
- Untersuchung:: TGA

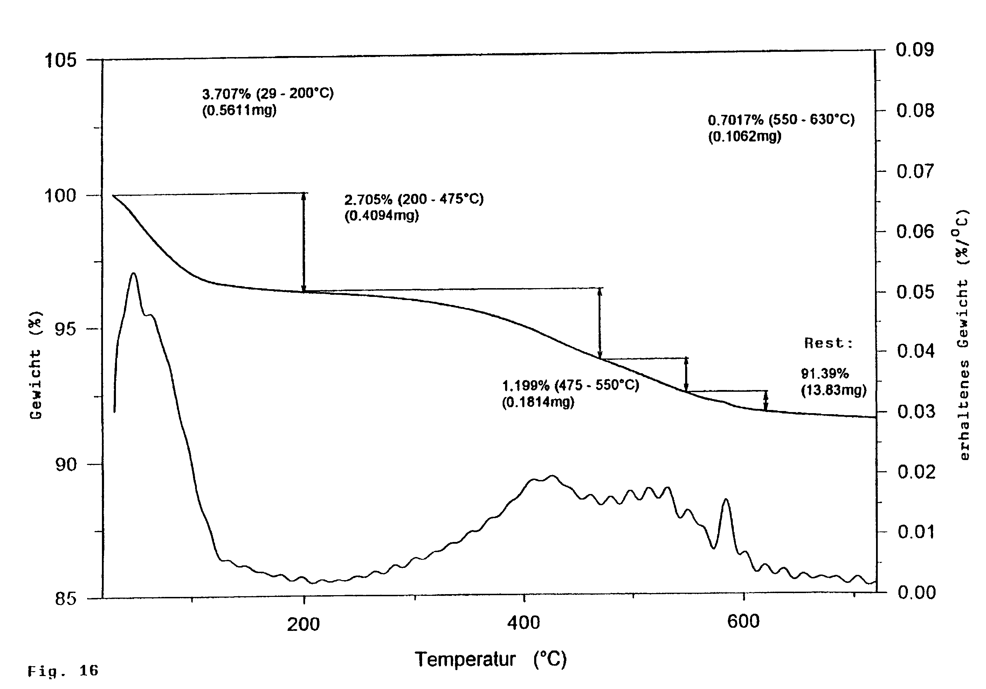

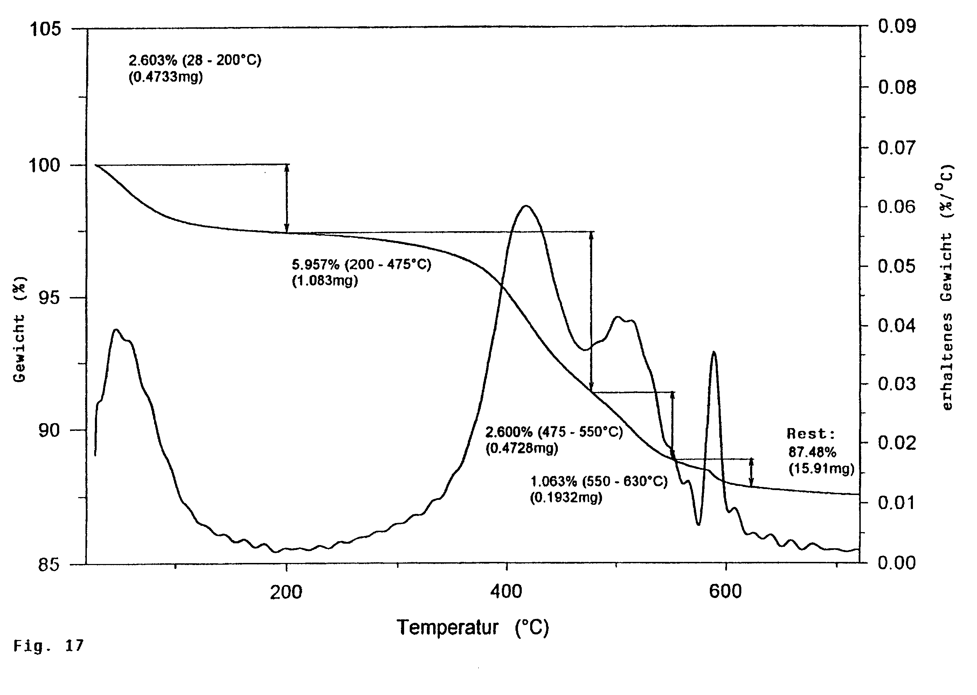

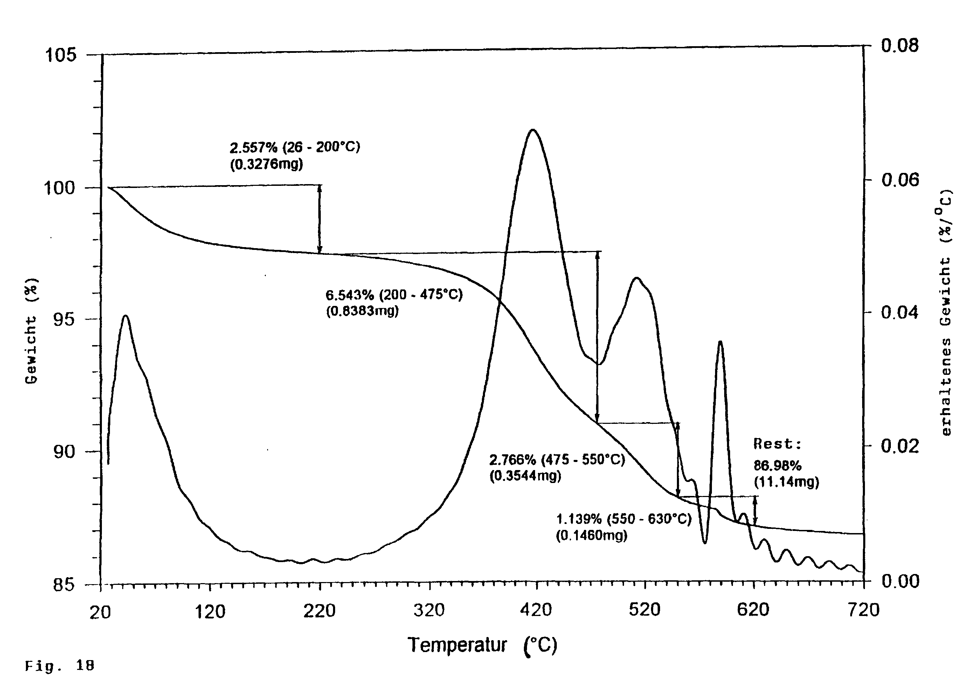

Fig. 16-18 zeigen die Diagramme der thermogravimetrischen Analyse der Versuche 1-3.

Analysebedingungen: Aufheizung unter Stickstoffatmosphäre von 30°C bis 550°C, dann unter Luftatmosphäre von 550°C bis 750°C, Heizrate = 20°C/min. Dabei wird der Gewichtsverlust der Probe detektiert.

### Polymerisation mit den Initiatoren

### 18. Beispiel: Lösungspolymerisation von Methylmethacrylat bei 60°C in Toluol mit dem Initiator 39

Methylmethacrylat wird über CaH₂ getrocknet, bei vermindertem Druck destilliert, mit Argon gespült und bei -20°C aufbewahrt. CuBr wird mit konz. Essigsäure, Wasser und Ethanol gewaschen. N-(n-Butyl)-2-pyridylmethanimin wird nach bekannter Literatur dargestellt [Haddleton, D.M.; Jasieczek, C.B.; Hannon, M.J.; Shooter, A.J., Macromolecules 30, 2190 (1997)]. Die Vorbehandlung sonstiger Chemikalien und Lösungsmittel ist in den o.g. Beispielen 3. und 13. beschrieben.

10 ml (94 mmol) Methylmethacrylat, 10 ml abs. Toluol, 135 mg (0.94 mmol) CuBr und 305 mg (1.9 mmol) N-(n-Butyl)-2-pyridylmethanimin werden in einen Schlenkkolben gegeben, dann dreimal im Vakuum entgast und jeweils mit Stickstoff belüftet. Anschließend werden 664 mg (0.94 mmol) des Initiators **39** im Stickstoffgegenstrom zugegeben. Das Reaktionsgefäß wird mit einem Septum verschlossen und die Reaktionsmischung in einem auf 60°C vorgeheizten Ölbad rasch erwärmt und für 24 h bei dieser Temperatur gehalten.

Nach dieser Zeit wird das Polymer über eine kleine, mit Aluminiumoxid (neutral) gefüllte Säule filtriert. Als Eluent dient dest. THF. Nach dem Aufkonzentrieren der Lösung im Vakuum wird das Polymer in dest. Petrolether ausgefällt.
- Ausbeute:: 7.8 g Poly(methylmethacrylat)
- Untersuchung:: GPC

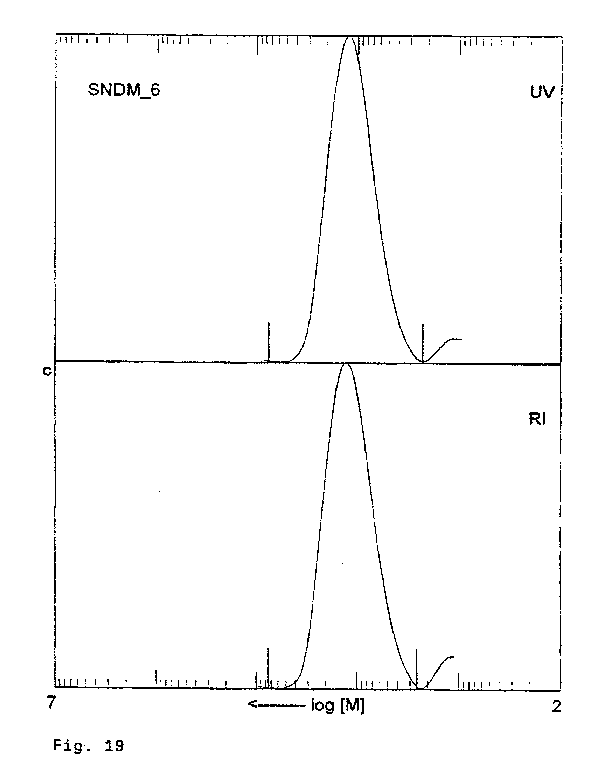

Fig. 19 zeigt das GPC-Chromatogramm des Poly(methylmethacrylat)s.

Chromatographiebedingungen: Eluent: THF, Detektion: UV und RI, Eichung: Poly(styrol)-Standards
Aus UV: Mw= 12657, Mn = 10020, U = 0.26; aus RI: Mw = 13116, Mn = 10335, U = 0.27.

### 19. Beispiel: Polymerisation von Methylmethacrylat bei 60°C mit an Mikrogel angebundenem Initiator 30

Die Vorbehandlung sonstiger Chemikalien und Lösungsmittel erfolgt entsprechend dem 18. Beispiel.

In einem ausgeheizten Schlenkkolben werden 1.13 g des mit dem Initiator **30** belegten Mikrogels aus dem 12. Beispiel in 10 ml (94 mmol) Methylmethacrylat und 10 ml abs. Toluol suspendiert. Dazu werden 490 mg (3 mmol) N-(n-Butyl)2-pyridylmethanimin gegeben und die Suspension 10 min mit Argon gespült. Im schwachen Schutzgas-Gegenstrom werden dann 148 mg (1 mmol) CuBr zugegeben und das Reaktionsgefäß mit einem Septum verschlossen. Die Polymerisation wird für 24 h bei 60°C durchgeführt.
Der Ansatz wird im Eisbad gekühlt und mit THF verdünnt. Das Mikrogel wird abgetrennt und in einem Soxhlet-Extraktor mit THF für 24 h extrahiert. Das Produkt wird im Vakuum (10 mbar) bei 50°C gewichtskonstant getrocknet.
- Ausbeute:: 6.83 g mit Poly(methylmethacrylat) gepfropftes Mikrogel

### 20. Beispiel: Polymerisation von tert.-Butylacrylat mit an Mikrogel angebundenem Initiator 30

Diphenylether wird mit konz. H₂SO₄ und Wasser gewaschen, über CaCl₂ getrocknet und bei vermindertem Druck destilliert. 4,4'-Diheptyl-2,2'-bipyridin wird nach bekannter Literatur dargestellt [Leduc, M.R.; Hawker, C.J.; Dao, J.; Fréchet, J.M.J., J. Am. Chem. Soc., 118, 11111 (1996)] Tert.-Butylacrylat wird über CaCl₂ getrocknet und im Vakuum destilliert, dann unter Schutzgas bei 0°C aufbewahrt. Die Vorbehandlung sonstiger Chemikalien und Lösungsmittel erfolgt entsprechend dem 18. Beispiel.

In einem ausgeheizten Schlenkkolben werden 1.13 g des mit dem Initiator **30** belegten Mikrogels aus dem 12. Beispiel in 10 ml (68.9 mmol) tert.-Butylacrylat und 10 ml Diphenylether suspendiert. Dazu werden 704 mg (2 mmol) 4,4'-Diheptyl-2,2'-bipyridin gegeben und die Suspension 10 min mit Argon gespült. Im schwachen Schutzgas-Gegenstrom werden dann 150 mg (1 mmol) CuBr zugegeben und das Reaktionsgefäß mit einem Septum verschlossen. Die Polymerisation wird für 12 h bei 90°C durchgeführt.
Der Ansatz wird im Eisbad gekühlt und mit THF verdünnt. Das Mikrogel wird abgetrennt und in einem Soxhlet-Extraktor 24 h mit THF extrahiert. Das Produkt wird im Vakuum (10 mbar) bei 50°C gewichtskonstant getrocknet.
- Ausbeute:: 3.34 g mit Poly(tert-butylacrylat) gepfropftes Mikrogel

### 21. Beispiel: Polymerisation von Styrol bei 120°C mit an Kieselgel angebundenem Initiator 35

Styrol wird über CaH₂ getrocknet, bei vermindertem Druck destilliert, mit Argon gespült und bei -20°C aufbewahrt. CuCI wird mit 5N HCl, Wasser und Ethanol gewaschen. 2,2'-Bipyridin wird aus dest. Petrolether umkristallisiert. Methanol wird destilliert. (±)-Propylencarbonat wird ohne weitere Reinigung verwendet.

In ein ausgeheiztes Schlenkrohr werden 1.1 g des mit **35** belegten Kieselgels aus dem 13. Beispiel, 150 mg CuCI (1.5 mmol), 480 mg Bipyridin (3.1 mmol), 8 ml Styrol (70 mmol) und 8 ml (±)-Propylencarbonat gegeben. Durch wiederholtes Evakuieren und Belüften mit Argon wird der Reaktionsansatz von Sauerstoff befreit. Die Polymerisation erfolgt unter Schutzgas und intensivem Rühren für 24 h bei einer Temperatur von 120°C.
Nach gegebener Zeit wird der Ansatz im Eisbad gekühlt, um die Reaktion abzubrechen. Die Suspension wird in Zentrifugengläser überführt und das nun mit Poly(styrol) belegte Kieselgel abzentrifugiert. In den Zentrifugengläsem wird das Kieselgel mehrfach mit Toluol und dann mit Methanol gewaschen. Um den Feststoff von noch anhaftenden Cu-Salzen zu befreien, wird das Kieselgel in einem Erlenmeyerkolben in Chloroform suspendiert und Wasser über diese Suspension gegeben. Diese Mischung wird kräftig gerührt und die wäßrige Phase solange ausgetauscht, bis keine Blaufärbung der wäßrigen Phase mehr erkennbar ist. Die organische Phase wird von der wäßrigen getrennt. Dann wird das organische Suspendiermittel größtenteils im Vakuum entfernt.
Das Produkt wird abschließend bei 60°C und 10 mbar bis zur Gewichtskonstanz getrocknet.
- Ausbeute:: 2.25 g mit Poly(styrol) gepfropftes Kieselgel,
entspricht ca. 1.25 g Poly(styrol) pro g Kieselgel
- Untersuchungen:: DSC, FT-IR

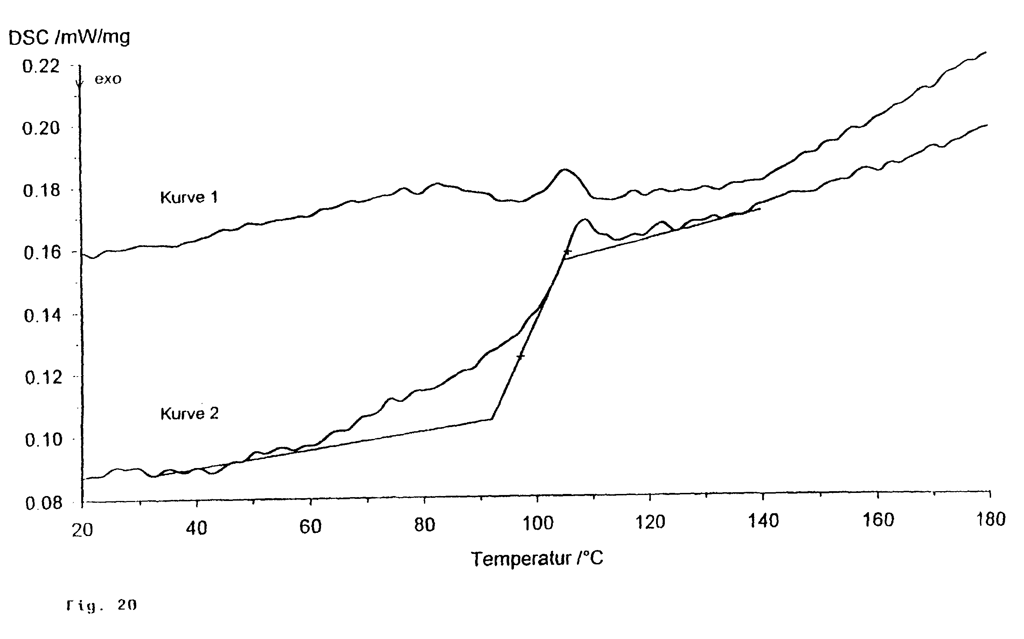

Fig. 20 zeigt die DSC-Kurve des Poly(styrol)s erster Generation auf der Kieselgeloberfläche

Kurve 1 ist das DSC-Signal, das man beim ersten Aufheizen erhält. Kurve 2 das DSC-Signal, das man beim zweiten Aufheizen erhält, nachdem im Anschluß an das erste Aufheizen programmiert abgekühlt wurde. In Kurve 2 sieht man die Glasübergangsstufe von Poly(styrol) im Bereich zwischen etwa 100°C und 110°C.

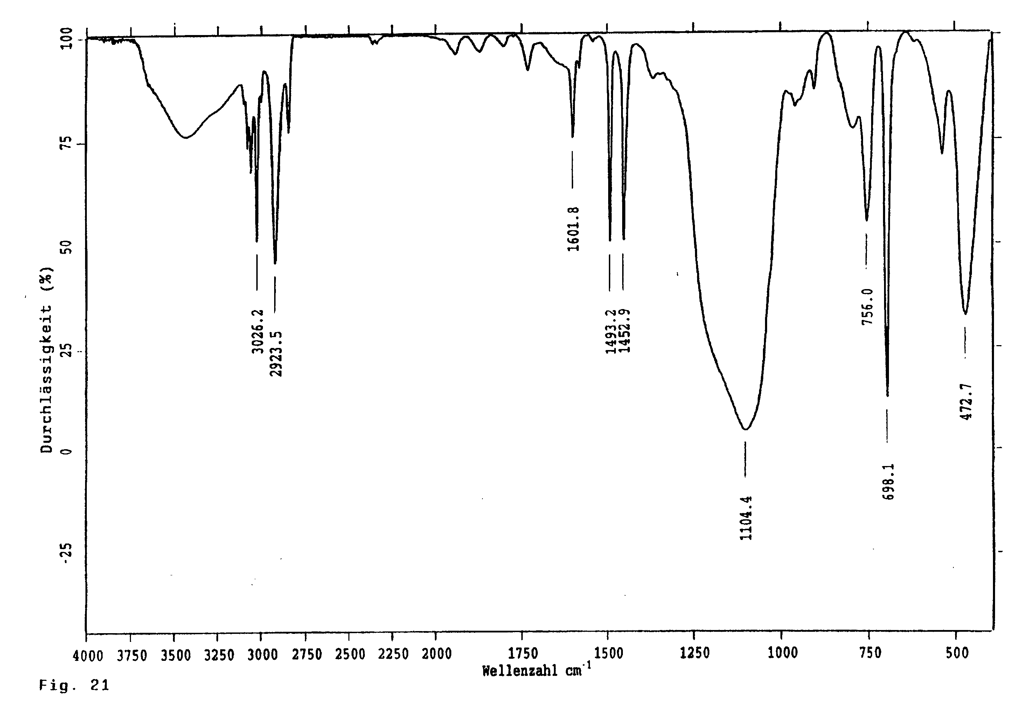

Fig. 21 zeigt das FT-IR-Spektrum des Poly(styrol)s erster Generation auf der Kieselgeloberfläche.

Aufhahmetechnik: Transmissionsspektrum eines gegossenen Films.

### 22. Beispiel: Polymerisation von Styrol bei 90°C mit an Kieselgel angebundenem Initiator 35

Die Reaktion wird analog dem oben beschriebenen 21. Beispiel durchgeführt, jedoch die Reaktionstemperatur auf 90°C eingestellt. Die Aufarbeitung des mit Pol(styrol) gepfropften Kieselgels erfolgt in gleicher Weise.
- Ausbeute:: 820 mg Polystyrol pro g Kieselgel
- Untersuchung:: TGA

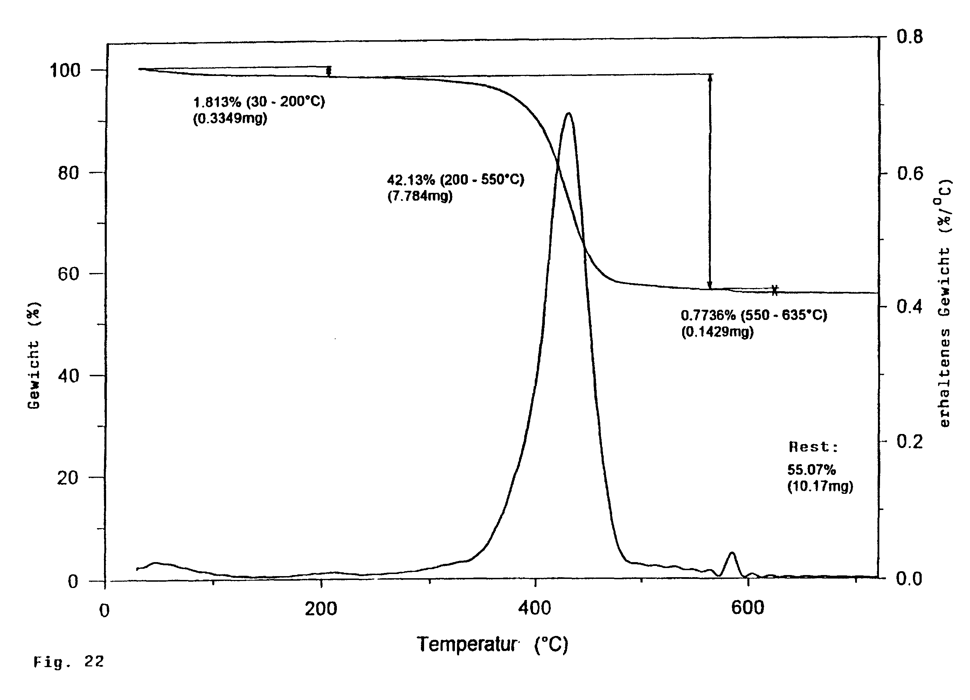

Fig. 22 zeigt das Diagramm der thermogravimetrischen Analyse des mit Poly(styrol) gepfropften Kieselgels.

Analysebedingungen: Aufheizung unter Stickstoffatmosphäre von 30°C bis 550°C, dann unter Luftatmosphäre von 550°C bis 750°C, Heizrate = 20°C/min. Dabei wird der Gewichtsverlust der Probe detektiert.

### 23. Beispiel: Polymerisation von Isopren mit an Kieselgel angebundenem Initiator 35

Isopren wird mit verd. Natronlauge und Wasser gewaschen und über CaH₂ getrocknet. Es wird unter Schutzgas destilliert und unter Schutzgas bei -20°C aufbewahrt. Die Vorbehandlung sonstiger Chemikalien und Lösungsmittel ist in den o.g. Beispielen 13. und 21. beschrieben.

In ein Schraubdeckel-Reagenzglas mit Rührfisch wird unter Eiskühlung 250 mg mit **35** beschichtetes Kieselgel gegeben. Dazu werden 10 ml (100 mmol) Isopren und 312 mg (2 mmol) 2,2'-Bipyridin gegeben. Die Reaktionsmischung wird mit Argon gespült, um Sauerstoff zu entfernen. Dann werden in schwachem Schutzgasstrom 102 mg (1.02 mmol) CuCI zugegeben und das Reaktionsgefäß fest verschlossen. Unter Schutzgas wird das Reaktionsgemisch dann für 14 h auf 130°C erhitzt.
Die Reaktion wird im Eisbad abgekühlt und die Suspension in einen Rundkolben überführt. Dazu werden 20 ml Toluol gegeben und das überschüssige Isopren im Vakuum entfernt. Das mit Poly(isopren) belegte Kieselgel wird durch Zentrifugation abgetrennt und mehrfach mit Toluol extrahiert. Das Produkt wird bei Raumtemperatur im Vakuum (10 mbar) bis zur Gewichtskonstanz getrocknet.
- Ausbeute:: 1.5 g mit Poly(isopren) gepfropftes Kiesetgel,
entspricht 5 g Poly(isopren) pro g Kieselgel
- Untersuchungen:: FT-IR, DSC

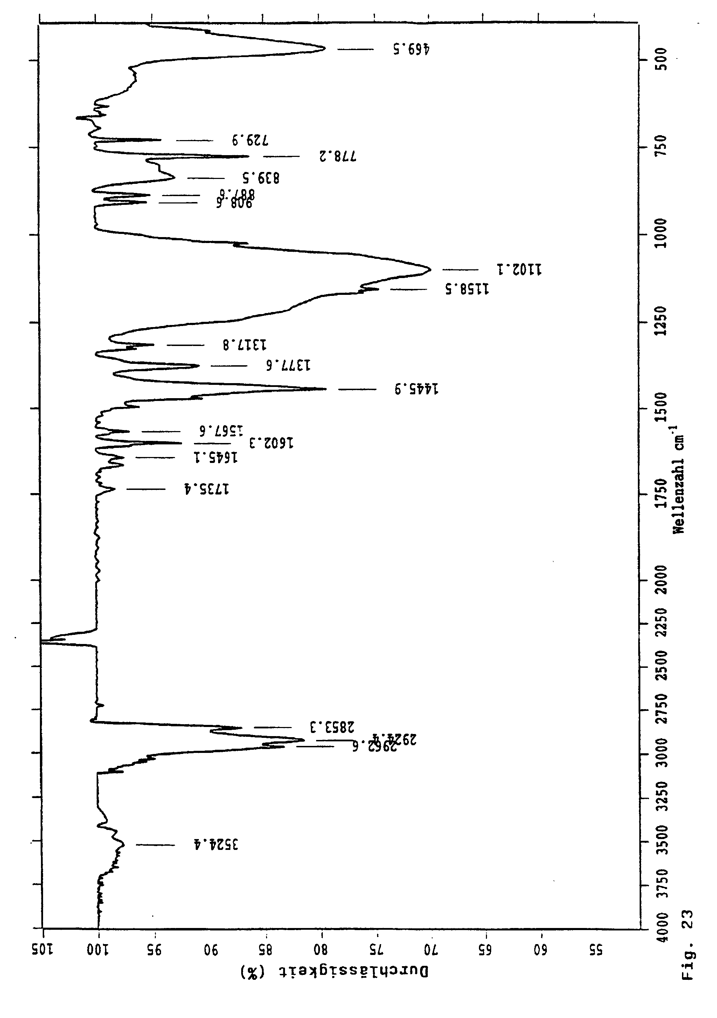

Fig. 23 zeigt das FT-IR-Spektrum des mit Poly(isopren) belegten Kieselgels.

Aufnahmetechnik: Transmissionsspektrum eines KBr-Preßlings.

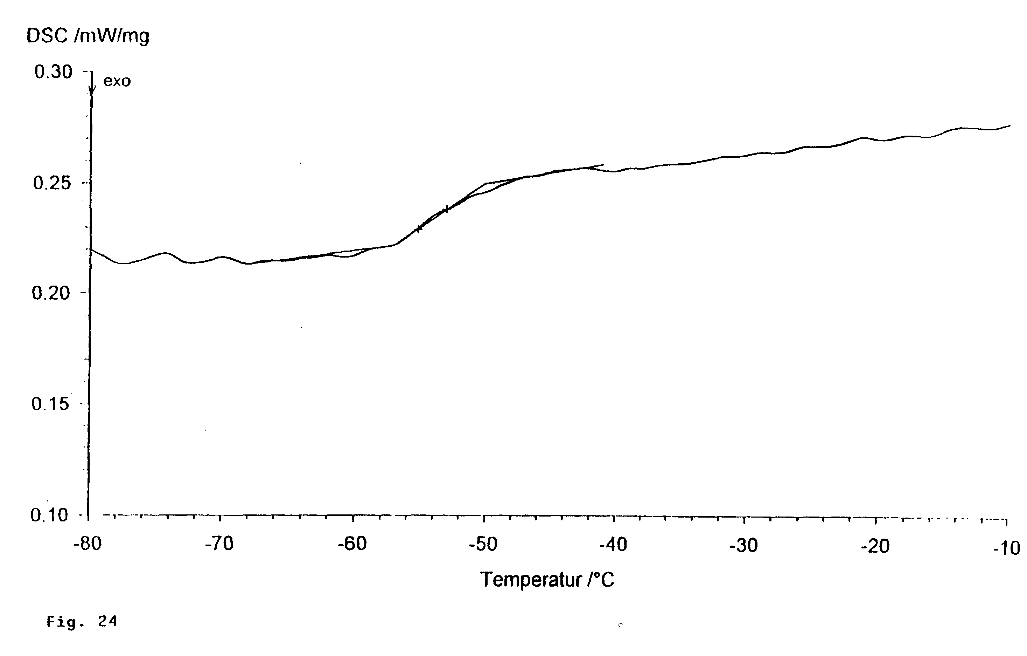

Fig. 24 zeigt die DSC-Kurve des mit Poly(isopren) belegten Kieselgels.

In der DSC-Kurve sieht man die Glasübergangsstufe des Poly(isopren)s zwischen -57°C und -50°C.

### 24. Beispiel: Polymerisation von Methylmethacrylat mit an Kieselgel angebundenem Initiator 36

Die Vorbehandlung der verwendeten Chemikalien und Lösungsmittel ist in den o.g. Beispielen 18. und 20. beschrieben.

In einen ausgeheizten Schlenkkolben werden 300 mg mit **36** belegtes Kieselgel aus dem 14. Beispiel, 4 ml (37 mmol) Methylmethacrylat, 4 ml Diphenylether und 71 mg (0.2 mmol) 4,4'-Diheptyl-2,2'-bipyridin gegeben. Die Lösung wird für 10 min mit Argon gespült. Dann werden 14 mg (0.1 mmol) CuBr zur Reaktionsmischung gegeben, nochmals mit Argon gespült und das Reaktionsgefäß mit einem Septum verschlossen. Der Reaktionsansatz wird unter Schutzgas für 18 h bei 90°C im Ölbad erhitzt.
Nach Abkühlung des Ansatzes im Eisbad, wird das Reaktionsgemisch mit THF verdünnt und das beschichtete Kieselgel durch Zentrifugation abgetrennt. Das Kieselgel wird mit THF in einem Soxhlet-Extraktor extrahiert.
- Ausbeute:: 2.49 g mit Poly(methylmethacrylat) gepfropftes Kieselgel,
entspricht 7.3 g Poly(methylmethacrylat) pro g Kieselgel

### 25. Beispiel: Polymerisation von Methylmethacrylat mit an Glasperlen angebundenem Initiator 36

Die Vorbehandlung der verwendeten Chemikalien und Lösungsmittel ist im o.g. Beispiel 18. beschrieben.

1 g der mit **36** belegten Glasperlen aus dem 15. Beispiel werden in einem ausgeheizten Rundkolben vorgelegt. Dazu werden 2 g (20 mmol) Methylmethacrylat, 2.5 ml abs. Toluol, 30 mg (0.2 mmol) CuBr und 70 mg (0.43 mmol) N-(n-Butyl)2-pyridylmethanimin gegeben. Die Reaktionsmischung wird 10 min mit Argon gespült. Danach wird das Reaktionsgefäß mit einem Septum verschlossen und die Polymerisation bei 90°C für 18 h durchgeführt.
Nach der Reaktion wird die überstehende Lösung entfernt und die belegten Glasperlen mehrfach mit jeweils 20 ml THF gewaschen. In einem Soxhlet-Extraktor wird das Produkt dann nochmals für 48 h mit THF extrahiert.
- Ausbeute:: 1.04 g mit Poly(methylmethacrylat) gepfropfte Glasperlen,
entspricht 0.04 g Poly(methylmethacrylat) pro g Glasperlen
- Untersuchung:: FT-IR

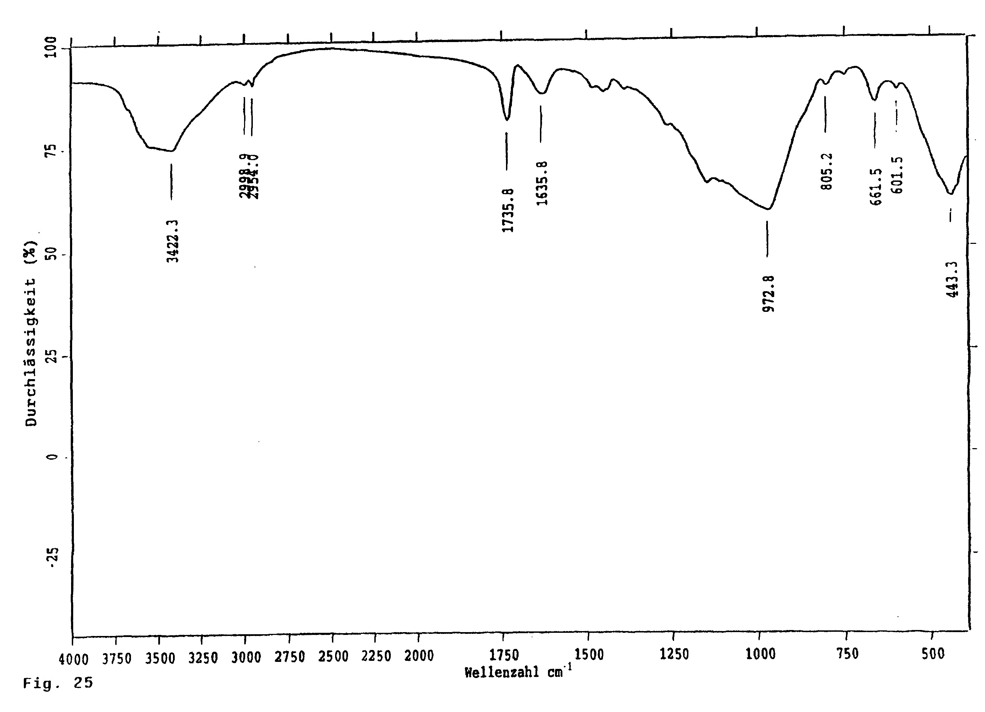

Fig. 25 zeigt das FT-IR-Spektrum der mit Poly(methylmethacrylat) belegten Glasperlen.

Aufnahmetechnik: Transmissionsmessung eines KBr-Preßling.

### Erzeugung einer zweiten Polymer-Generation

### 26. Beispiel: Bildung einer Poly(styrol)-Schicht zweiter Generation auf der Kieselgeloberfläche

Die Vorbehandlung der verwendeten Chemikalien und Lösungsmittel ist im o.g. Beispiel 21. beschrieben.

In ein ausgeheiztes Schlenkrohr werden 1 g des im 21. Beispiel dargestellten Poly(styrol)-Kieselgels, 150 mg CuCI (1.5 mmol), 470 mg Bipyridin (3 mmol), 10 ml Styrol (87 mmol) und 10 ml (±)-Propylencarbonat gegeben. Durch wiederholtes Evakuieren und Belüften mit Argon wird der Reaktionsansatz von Sauerstoff befreit. Die Polymerisation erfolgt unter Schutzgas und intensivem Rühren für 36 h bei einer Temperatur von 120°C.
Die Reaktion wird durch Abkühlen im Eisbad abgebrochen. Das mit einer zweiten Poly(styrol)-Schicht bedeckte Kieselgel wird durch Zentrifugation von der Reaktionslösung getrennt und mehrfach mit Toluol und Methanol gewaschen. Um noch anhaftende Cu-Salze zu entfernen, wird das Poly(styrol)-Kieselgel in Chloroform suspendiert, mit Wasser überschichtet, und die wäßrige Phase solange ausgetauscht, bis keine Blaufärbung der wäßrigen Phase mehr zu erkennen ist. Danach wird das Poly(styrol)-Kieselgel von der organischen Phase abfittriert und in einem Soxhiet-Extraktor für 12 h mit Toluol extrahiert.
Das Produkt wird abschließend bei 60°C und 10 mbar bis zur Gewichtskonstanz getrocknet.
- Ausbeute:: 2.14 g mit Poly(styrol) gepfropftes Kieselgel der zweiten Generation,
entspricht ca. 3.75 g Poly(styrol) pro g Kieselgel
- Untersuchungen:: DSC, FT-IR

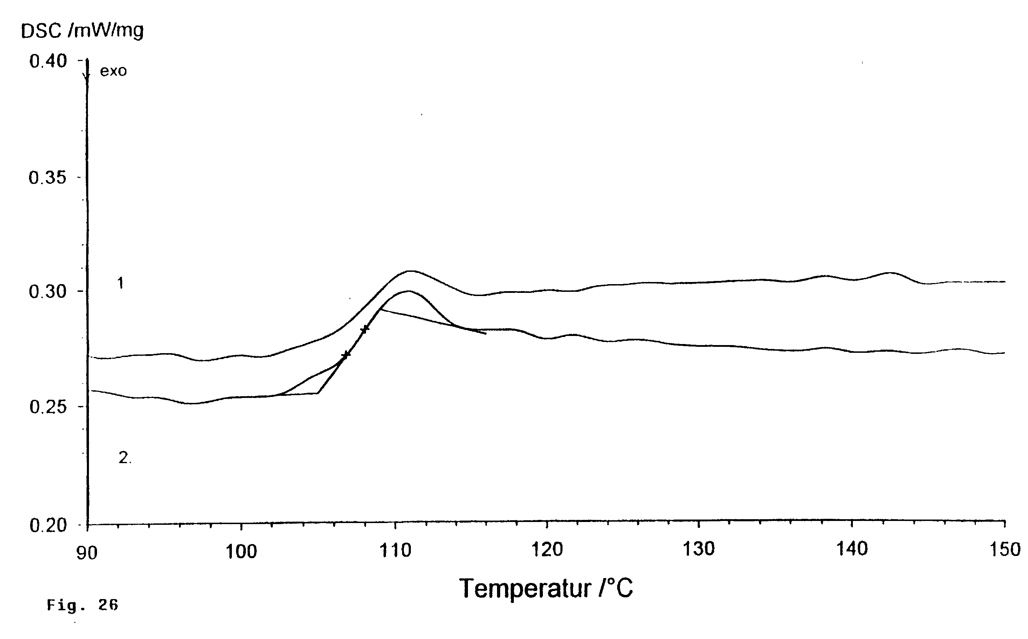

Fig. 26 zeigt die DSC-Kurven des in erster und zweiter Generation auf der Kieselgeloberfläche gebildeten Poly(styrol)s.

Kurve 1 und Kurve 2 sind die nacheinander erhaltenen Aufheizkurven, wobei im Anschluß an das erste Aufheizen programmiert abgekühlt wurde. In beiden Kurven ist die Glasübergangsstufe von Poly(styrol) im Bereich zwischen 105°C und 110°C zu sehen.

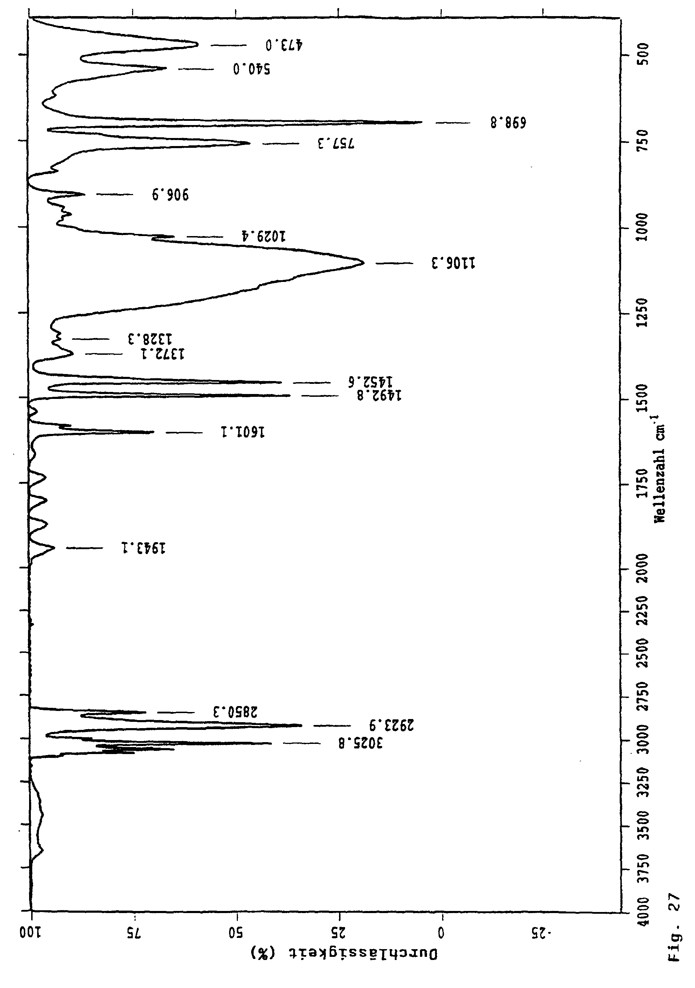

Fig. 27 zeigt das FT-IR-Spektrum des in erster und zweiter Generation auf der Kieselgeloberfläche gebildeten Poly(styrol)s.

Aufnahmetechnik: Transmissionsspektrum eines gegossenen Films.

### 27. Beispiel: Bildung von Poly(styrol-block-p-tert.-butylstyrol) auf der Kieselgeloberfläche

p-Tert.-butylstyrol wird über CaH₂ getrocknet und bei vermindertem Druck unter Schutzgas destilliert, dann unter Schutzgas bei -20°C aufbewahrt. Die Vorbehandlung weiterer verwendeter Chemikalien und Lösungsmittel ist in den o.g. Beispielen 20. und 21. beschrieben.

In einen ausgeheizten Schlenkkolben werden zu einer Suspension von 0.505 g mit Poly(styrol) belegtem Kieselgel in 6.4 ml Diphenylether und 6.4 ml (35 mmol) p-Tert.-butylstyrol 72 mg (0.73 mmol) CuCl und 530 mg (1.5 mmol) 4,4'-Diheptyl-2,2'-bipyridin gegeben. Die Reaktionsmischung wird für 10 min mit Argon gespült, dann die Polymerisation für 24 h bei 130°C durchgeführt.
Die Reaktion wird durch Abkühlen im Eisbad abgebrochen. Nach Verdünnung der Reaktionsmischung mit Toluol wird das mit Poly(styrol-*block*-p-tert.-butylstyrol) belegte Kieselgel durch Zentrifugation von der Reaktionslösung getrennt. Der Festkörper wird mehrfach mit Toluol und abschließend mit Methanol gewaschen. Um noch anhaftende Cu-Salze zu entfernen, wird das mit Poly(styrol-*block*-p-tert.butylstyrol) gepfropfte Kieselgel in Toluol suspendiert, mit Wasser unterschichtet und die wäßrige Phase solange ausgetauscht, bis keine Blaufärbung der wäßrigen Phase mehr zu erkennen ist. Danach wird das Poly(styrol-block-p-tertbutylstyrol)-Kieselgel von der organischen Phase abgetrennt und in einem Soxhlet-Extraktor für 12 h mit Toluol extrahiert.
- Ausbeute:: 1.1 g mit Poly(styrol-*block-*p-tert.-butylstyrol)
gepfropftes Kieselgel
- Untersuchungen:: FT-IR, DSC

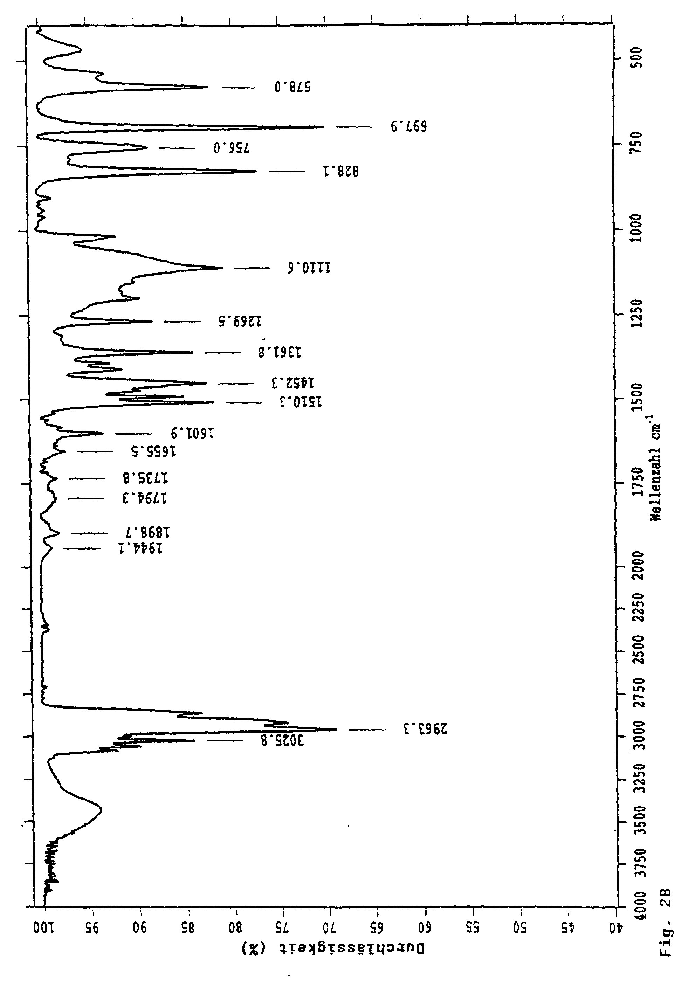

Fig. 28 zeigt das FT-IR-Spektrum des auf der Kieselgeloberfläche gebundenen Poly(styrol-*block*-p-tert.-butylstyrol)s.

Aufnahmetechnik: Transmissionsspektrum eines gegossenen Films.

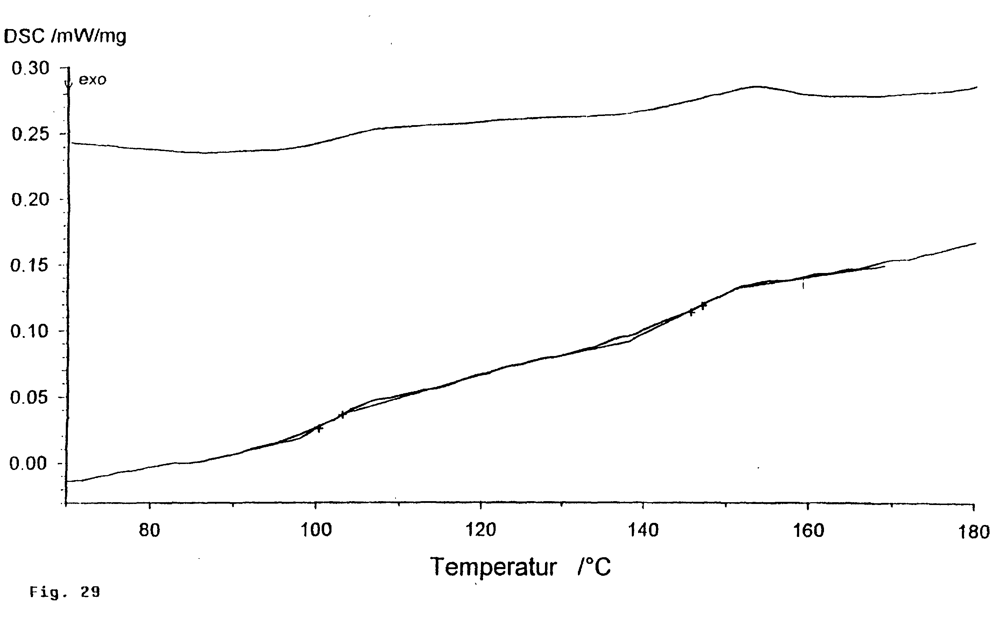

Fig. 29 zeigt die DSC-Kurven des auf der Kieselgeloberfläche gebildeten Poly(styrol-*block*-p-tert.-butylstyrol)s.

Die obere Kurve und die untere Kurve sind die nacheinander erhaltenen Aufheizkurven, wobei im Anschluß an das erste Aufheizen programmiert abgekühlt wurde. In der unteren Kurve sind deutlich zwei Glasübergangsstufen des Blockcopolymers im Bereich zwischen 100°C und 105°C und im Bereich zwischen 137°C und 145°C zu sehen. Der erste Übergang wird dem Poly(styrol)-Block, der zweite Übergang dem Poly(p-tert.-butylstyrol)-Block zugeordnet.

### Polymeranaloge Umsetzung an mit Polymer gepfropften Festkörpern

### 28. Beispiel: Partielle Esterspaltung zu mit Poly-(acrylsäureco-tert.-butylacrylsäure) gepfropftem Mikrogel

Trifluoressigsäure wird ohne weitere Reinigung verwendet. Die Vorbehandlung von Dichlormethan ist im o.g. Beispiel 4. beschrieben.

500 mg des mit Poly(tert.-butylacrylat) gepfropften Mikrogels aus dem 20. Beispiel werden in 20 ml Dichlormethan suspendiert. Dazu werden 0.5 ml (6.5 mmol) Trifluoressigsäure gegeben. Unter Feuchtigkeitsausschluß wird das Reaktionsgemisch bei Raumtemperatur 24 h gerührt.
Über eine Glasfritte wird das gepfropfe Mikrogel abgetrennt und mit Ethanol, Ethanol / Wasser (1/1 v/v), Ethanol und Diethylether gewaschen. Das Produkt wird im Vakuumofen bei 60°C und 10 mbar getrocknet.
- Ausbeute:: 443 mg mit Poly(acrylsäure-co-tert.- butylacrylsäure)
gepfropftes Mikrogel

### Abspaltung der Polymere von der Festkörperoberfläche

### 29. Beispiel: Abspaltung des Poly(styrol)s von der Kieselgeloberfläche zur Analyse des Poly(styrol)s

p-Toluolsulfonsäure-Monohydrat wird ohne weitere Reinigung verwendet. Methanol wird destilliert. Die Vorbehandlung von Toluol ist im o.g. Beispiel 13. beschrieben.

500 mg des mit Poly(styrol) gepfropften Kieselgels aus dem 21. Beispiel werden in 150 ml Toluol suspendiert. Zu dieser Suspension werden 100 mg p-Toluolsulfonsäure-Monohydrat und 10 ml Methanol gegeben und die Reaktionsmischung für 16 h unter Rückfluß erhitzt. Anschließend wird die Poly(styrol)-Lösung durch Zentrifugation vom Kieselgel abgetrennt. Das Kieselgel wird insgesamt dreimal in Toluol aufgeschlemmt und zentrifugiert, um evtl. noch am Kieselgel anhaftendes Poly(styrol) abzutrennen.
- Ausbeute:: 250 mg Poly(styrol)
- Untersuchung:: GPC

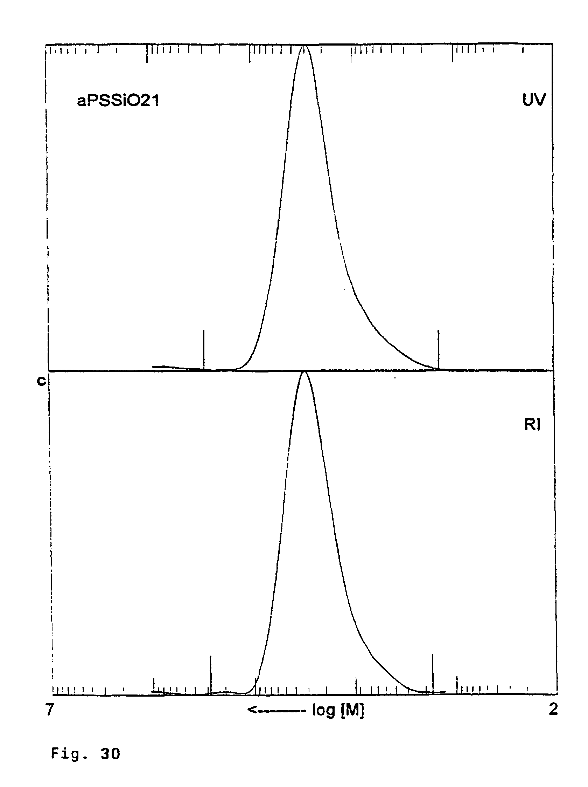

Fig. 30 zeigt das GPC-Chromatogramm des abgespaltenen Poly(styrol)s erster Generation.

Chromatographiebedingungen: Eluent: THF, Detektion: UV und RI, Eichung: Poly(styrol)-Standards
Aus UV: Mw = 29499, Mn = 18349, U = 0.61; aus RI: Mw = 30766, Mn = 21085, U = 0.46.

### 30. Beispiel: Abspaltung des Poly(styrol)s von der Kieselgeloberfläche zur Analyse des Poly(styrol)s

Es wird mit Poly(styrol) gepfropftes Kieselgel aus dem Beispiel 22. verwendet. Die Durchführung und Aufarbeitung erfolgt wie im Beispiel 29. beschrieben.
- Ausbeute:: 190 mg Poly(styrol)
- Untersuchung:: GPC

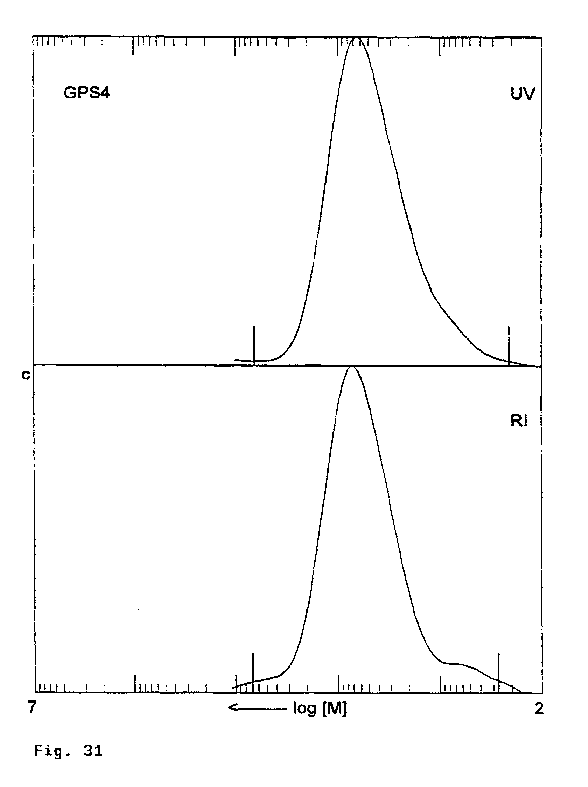

Fig. 31 zeigt das GPC-Chromatogramm des abgespaltenen Poly(styrol)s.

Chromatographiebedingungen: Eluent: THF, Detektion: UV und RI, Eichung: Poly(styrol)-Standards
Aus UV: Mw = 6748, Mn = 3477, U = 0.94; aus RI; Mw = 7624, Mn = 3932, U = 0.94.

### 31. Beispiel: Abspaltung des Poly(methylmethacrylat)s von der Kieselgeloberfläche

Es werden 250 mg mit Poly(methylmethacrylat) gepfropftes Kieselgel aus dem Beispiel 24., 75 ml Toluol, 5 ml Methanol und 50 mg p-Toluolsulfonsäure-Monohydrat verwendet. Die Durchführung und Aufarbeitung erfolgt analog wie im Beispiel 29. beschrieben. Das Kieselgel wird anstelle von Toluol mit THF gewaschen.
- Ausbeute:: 200 mg Poly(methylmethacrylat)
- Untersuchung:: GPC

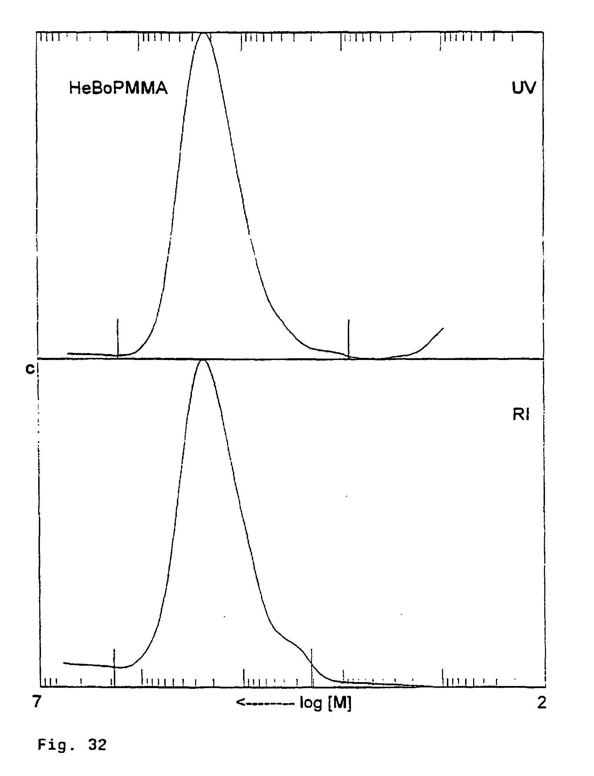

Fig. 32 zeigt das GPC-Chromatogramm des abgespaltenen Poly(methylmethacrylat)s.

Chromatographiebedingungen: Eluent: THF, Detektion: UV und RI, Eichung: Poly(styrol)-Standards
Aus UV: Mw = 230031, Mn = 137187, U = 0.68; aus RI: Mw = 240377, Mn = 146811, U = 0.64.

### 32. Beispiel: Abspaltung des in erster und zweiter Generation gebildeten Poly(styrol)s von der Kieselgeloberfläche

Es wird mit Poly(styrol) gepfropftes Kieselgel aus dem Beispiel 26. verwendet. Die Durchführung und Aufarbeitung erfolgt wie im Beispiel 29. beschrieben.
- Ausbeute:: 390 mg Poly(styrol)
- Untersuchung:: GPC

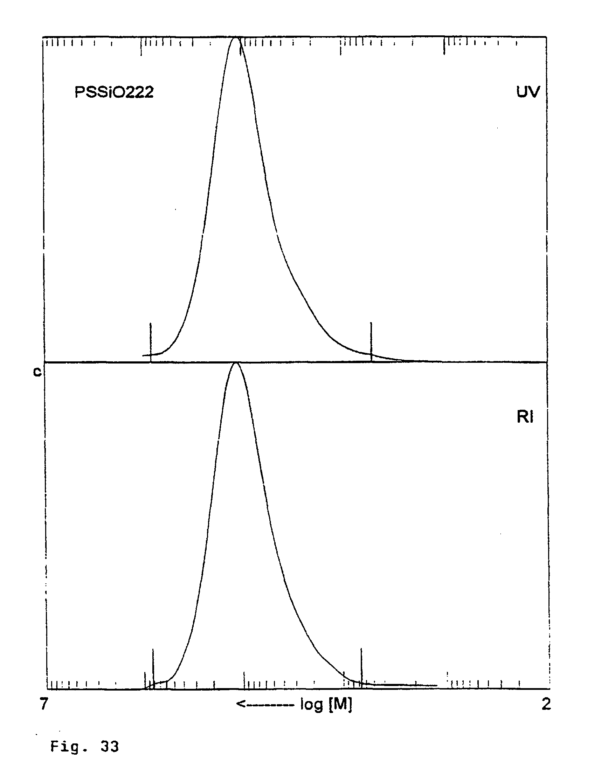

Fig. 33 zeigt das GPC-Chromatogramm des abgespaltenen Poly(styrol)s erster und zweiter Generation.

Chromatographiebedingungen: Eluent: THF, Detektion: UV und RI, Eichung: Poly(styrol)-Standards
Aus UV: Mw = 116159, Mn = 68097, U = 0.71; aus RI: Mw = 119581, Mn = 71857, U = 0,66.

### 33. Beispiel: Abspaltung des Poly(styrol-block-p-tert.-butylstyrol)s von der Kieselgeloberfläche

Dioxan und Methanol werden destilliert. Die Vorbehandlung von Toluol ist im o.g. Beispiel 13. beschrieben.

250 mg des polymerbelegten Kieselgels aus dem Beispiel 27. werden in einem Gemisch aus 25 ml Toluol, 40 ml Dioxan und 40 ml 5N Natronlauge suspendiert und unter Rückfluß für 48 h erhitzt.

Nach Abtrennung der wäßrigen Phase wird die organische Phase im Vakuum aufkonzentriert. Das Polymer wird dann in Methanol ausgefällt. Das Polymer wird wiederum in Toluol gelöst und die Lösung zentrifugiert, um eventuell vorhandene Kieselgelpartikel abzutrennen. Die überstehende Lösung wird vorsichtig entnommen, im Vakuum aufkonzentriert, dann das Polymer in Methanol ausgefällt. Das Polymer wird abgetrennt und bei 60°C im Vakuum (10 mbar) getrocknet.
- Ausbeute:: 180 mg Poly(styrol*-block*-p-tert.-butylstyrol)
- Untersuchung:: GPC

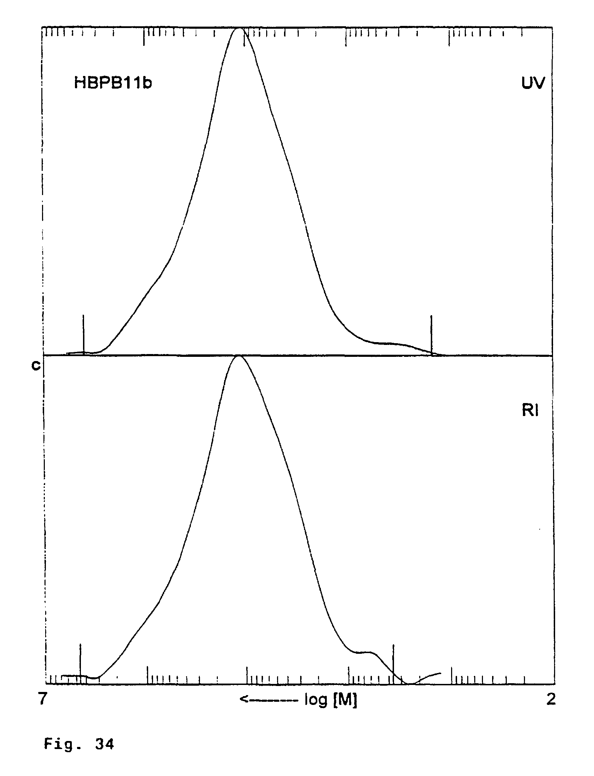

Fig. 34 zeigt das GPC-Chromatogramm des abgespaltenen Poly(styrol-*block*-ptert.-butylstyrol)s.

Chromatographiebedingungen: Eluent: THF, Detektion: UV und RI, Eichung: Poly(styrol)-Standards
Aus UV: Mw = 203767, Mn = 55552, U = 2.67; aus RI: Mw = 196492, Mn = 54679, U = 2.59.

## Patentansprüche

1. Verfahren zur Herstellung von definierten Schichten oder Schichtsystemen aus Polymeren oder Oligomeren mit kontrolliertem Aufbau auf beliebigen Festkörpeoberflächen, wobei die Schichten chemisch an die Festkörperoberfläche mittels "lebender" / kontrollierter radikalischer Polymerisation aufgebracht werden durch die folgenden Schritte:
a) Anbindung der Initiatoren der allgemeinen Formel **1** durch eine Hauptvalenzbindung über die Ankergruppe A an die Festkörperoberfläche, wobei der verwendetet Festkörper auf seiner Oberfläche bereits chemische Eigenschaften aufweist oder sich auf ihm chemische Eigenschaften erzeugen lassen,
A-L-I **1**
worin A eine Ankergruppe, I die initiierend wirkende Gruppe für die ATRP-Polymerisation und L das Bindeglied zwischen A und I ist, I dem Strukturelement C-Z' entspricht und Z' ausgewählt ist aus der Gruppe Cl, Br, I, OR¹⁰, SR¹⁴, SeR¹⁴, -SCN, OC(=O)R¹⁴, OP(=O)R¹⁴, OP(=O)(OR¹⁴)₂, OP(=O)OR¹⁴, O-N(R¹⁴)₂ und S-C(=S)N(R¹⁴)₂; worin R¹⁴ Aryl, lineares oder verzweigtes C₁ bis C₂₀ Alkyl, vorzugsweise C₁ bis C₁₀ Alkyl ist, oder wenn eine N(R¹⁴)₂ Gruppe anwesend ist, können die beiden R¹⁴ Gruppen zusammen einen fünf-, sechs- oder siebengliedrigen heterocyclischen Ring bilden; und worin R¹⁰ C₁ bis C₂₀ Alkyl ist, wobei jedes H-Atom unabhängig voneinander ersetzt werden kann durch Halogen, vorzugsweise Fluorid oder Chlorid, C₂ bis C₂₀ Alkenyl, vorzugsweise Vinyl, C₂ bis C₁₀ Alkinyl, vorzugsweise Acetylinyl, Phenyl, das mit 1 bis 5 Halogenatomen, mit C₁ bis C₄ Alkyl, oder mit einer Aralkylgruppe, wobei die Arylgruppe vorzugsweise Phenyl oder substituiertes Phenyl ist und die Alkylgruppe eine C₁ bis C₆ Alkylgruppe ist;
"Aryl" ist Phenyl, Naphthyl, Phenanthryl, Phenalenyl, Anthracenyl, Triphenylenyl, Fluorenyl, Fluoranthenyl, Pyrenyl, Pentacenyl, Chrysenyl, Naphthacenyl, Hexaphenyl, Picenyl and Perylenyl (vorzugsweise Phenyl und Naphthyl), worin jedes Wasserstoffatom ersetzt sein kann durch C₁ bis C₂₀ Alkyl (vorzugsweise C₁ bis C₆ und besonders bevorzugt Methyl), C₁ bis C₂₀ alkyl (vorzugsweise C₁ bis C₆ und besonders bevorzugt Methyl), worin jedes der Wasserstoffatome unabhängig durch Halogen ersetzt ist (vorzugsweise Fluor oder Chlor), C₂ bis C₂₀ Alkenyl, C₁ bis C₂₀ Alkinyl, C₁ bis C₆ Alkoxy, C₁ bis C₆ Alkylthio, C₃ bis C₈ Cycloalkyl, Phenyl, Halogen, NH₂, C₁ bis C₆ Alkylamino, C₁ bis C₆ Dialkylamino und Phenyl, welches substituiert sein kann mit von 1 bis 5 Halogenatomen und/ oder C₁ bis C₄ Alkylgruppen;
diese Definition von "Aryl" ist auch anzuwenden auf die Arylgruppen in "Aryloxy" and "Aralkyl". Demgemäß kann mit einem obiger Substituenten Phenyl von einbis fünffach substituiert sein und Naphthyl kann von ein- bis siebenfach substituiert sein (falls eine der Arylgruppen substituiert ist, ist sie vorzugsweise von ein- bis dreifach substituiert). Besonders bevorzugt bezieht sich "Aryl" auf Phenyl, Naphthyl, Phenyl, welches von ein- bis fünffach substituiert ist mit Fluor oder Chlor und Phenyl, welches von ein- bis dreifach substituiert ist mit Substituenten, ausgewählt aus der Gruppe, bestehend aus C₁ bis C₆ Alkyl, C₁ bis C₄ Alkoxy und Phenyl. Besonders bevorzugt bezieht sich "Aryl" auf Phenyl und Tolyl;
die Anbindung über eine Hauptvalenzbindung von **1** über die Ankergruppe A an die Festkörperoberfläche ist so zu wählen, daß sie unter den gewählten ATRP-Bedingungen stabil ist. Die Gruppe I ist derart zu wählen, daß ATRP unterhalb von 120 °C durchgeführt werden kann;
für den zu verwendenden Festkörper ist einzige Voraussetzung, daß er auf seiner Oberfläche bereits chemische Eigenschaften aufweist oder daß sich auf ihm chemische Eigenschaften erzeugen lassen, welche die Anbindung chemischer Verbindungen über Hauptvalenzbindungen gestatten; dabei ist unter dem Begriff "Hauptvalenzbindung" das gesamte Spektrum chemischer Bindungen zu verstehen, das durch die drei Grenzfälle kovalente, ionische und metallische Bindung sowie der Übergänge zwischen den drei Grenzfällen gegeben ist,
b) Durchführung einer "lebenden" / kontrollierten radikalischen Polymerisation nach dem ATRP- (Atom Transfer Radical Polymerization) Mechanismus bei Temperaturen von unter 120 °C, durch Umsetzung der Initiatorgruppe I mit radikalisch polymerisierbaren Monomeren oder Makromonomeren oder mit deren Gemischen, wodurch die Polymerschicht auf der Festkörperoberfläche erzeugt wird.

2. Verfahren nach Anspruch 1, **dadurch gekennzeichnet, daß** im Anschluß an Schritt a) der Schritt b) mehrmals durchgeführt wird, um eine zweite oder wietere Polymerschichten auf der ersten Polymerschicht herzustellen.

3. Verfahren nach Anspruch 1 oder 2, **dadurch gekennzeichnet, daß** die Polymerschichten modifiziert werden durch chemische Umwandlung funktioneller Gruppen der an den Festkörper angebundenen Oligomer- oder Polymerketten mittels geeigneter Reaktionspartner unter Erhalt des Polymerisationsgrades.

4. Verfahren nach den Ansprüchen 1 bis 3, **dadurch gekennzeichnet, daß** die hergestellten Festkörper-Polymer-Schichtsysteme durch Vemetzungsreaktionen in dreidimensionale Polymermatrizes chemisch eingebunden werden können.

5. Verfahren nach den Ansprüchen 1 bis 4, **dadurch gekennzeichnet, daß** der Festkörper natürlichen oder synthetischen Ursprungs ist.

6. Verfahren nach den Ansprüchen 1 bis 5, **dadurch gekennzeichnet, daß** die Festkörperoberfläche aus jedem beliebigen Material bestehen kann.

7. Verfahren nach den Ansprüchen 1 bis 6, **dadurch gekennzeichnet, daß** der Festkörper in massiver, poröser oder feinverteilter Form vorliegen kann.

8. Verfahren noch den Ansprüchen 1 bis 7, **dadurch gekennzeichnet, daß** die Oberflächenstruktur des Festkörpers heterogen sein kann.

9. Verfahren nach den Ansprüchen 1 bis 8, **dadurch gekennzeichnet, daß** Oberflächenzusammensetzung des Festkörpers heterogen sein kann.

10. Verfahren nach den Ansprüchen 1 bis 9, **dadurch gekennzeichnet, daß** als Initiatoren solche der nachfolgenden Formel **1** verwendet werden
A-L-I **1**
wobei A eine Ankergruppe ist, welche die Anbindung an eine Festkörperoberfläche über eine Hauptvalenzbindung gestattet. Unter Hauptvalenzbindung ist, wie in Anspruch1 definiert, das gesamte Spektrum chemischer Bindungen zu verstehen. Die Verknüpfungen zwischen Ankergruppe und Festkörperoberfläche können durch Kondensations-, Substitutions-, Additionsreaktionen oder durch die Wechselwirkung zwischen Gegenionen etabliert werden.
A kann beispielsweise eine der nachfolgenden funktionellen Gruppen sein: 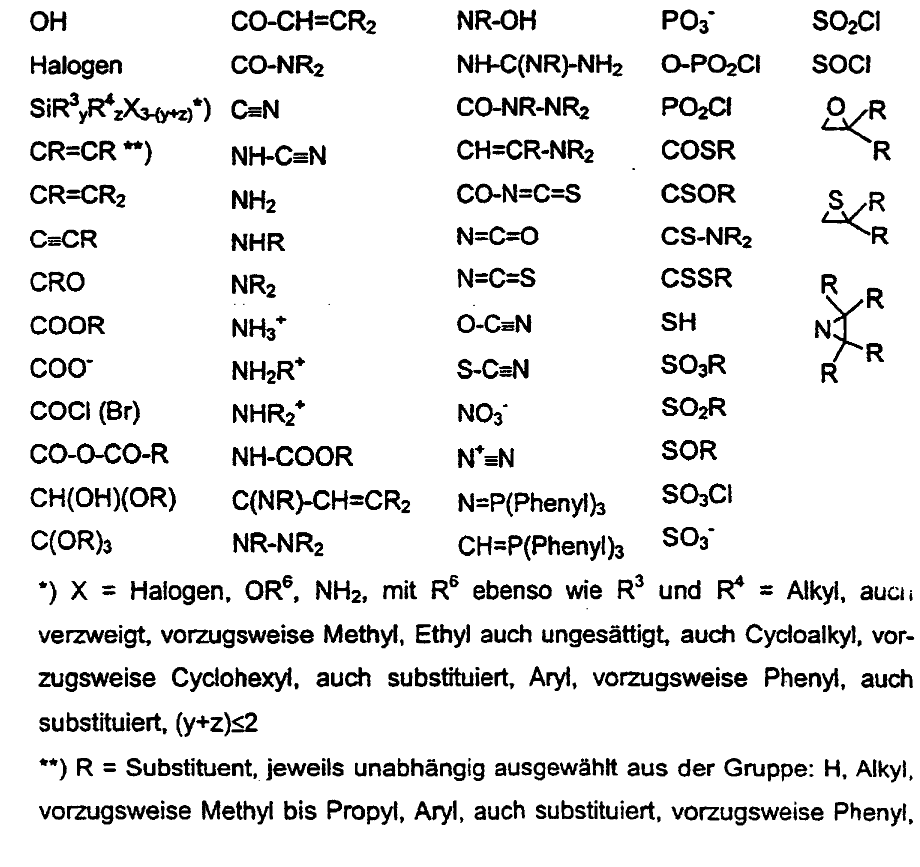 auch gemischt Alkyl und Aryl; gilt für alle R in dieser Tabelle, die keine Indizes tragen;
oder
kann die Ankergruppe A ein metallischer Rest M sein, mit dem A-L zu einer Gruppierung im Sinne eines metallorganischen Reagenzes M-L wird. In chemisch sinnvoller Weise abgestimmt auf L, sowie abgestimmt auf die Art der funktionellen Gruppen auf der Festkörperoberfläche, über welche die Reaktion mit der Ankergruppe A = M durchgeführt werden soll, wird M so gewählt, daß sich mit den Reaktionspartnem M-L und funktionellen Gruppen auf der Festkörperoberfläche Kreuzkopplungen durchführen lassen. M-L können damit metallorganische Gruppierungen mit Lithium (Murahashi), Natrium, Magnesium (Grignard, Kumada-Tamao, Corriu), Bor (Suzuki-Miyaura), Aluminium (Nozaki-Oshima, Negishi), Zirkon (Negishi), Zink (Negishi, Normant) Kupfer oder Kupfer-Lithium oder Kupfer-Zink (Normant, Sonogashira), Zinn (Migita-Kosugi, Stille), Silizium (auch Variante von Hiyama), Quecksilber, Cadmium und Silber sein;
und wobei L ausgewählt ist aus der nachfolgenden Gruppe enthaltend
1. L ist ein Strukturelement, das nach Formel R¹¹R¹²R¹³C-Z' die jeweils unabhängig voneinander ausgewählten, weiter unten definierten Gruppen R¹¹, R¹², R¹³ besitzt, wobei mindestens ein H oder Halogen in allen drei, vorzugsweise in zwei, besonders bevorzugt jedoch in einer der Gruppen R¹¹, R¹², R¹³ gleich A ist und dementsprechend die Gruppen R¹¹, R¹², R¹³ auszuwählen sind. Außerdem kann mindestens ein (optional vorhandenes) H oder Halogen in allen drei, nur in zwei oder auch nur in einer der Gruppen R¹¹, R¹², R¹³ weiteres I sein. Funktionelle Gruppen, die in der Variabilität von R¹¹, R¹², R¹³ enthalten sind, können hier bereits die Funktion von Ankergruppen A ausüben oder sie können zur Einführung von A dienen;
R¹¹, R¹² und R¹³ sind jeweils unabhängig ausgewählt aus der Gruppe, bestehend aus H (nicht mehr als zwei der R¹¹, R¹² und R¹³ sind gleich H, vorzugsweise ist nicht mehr als eine der R¹¹, R¹² und R¹³ gleich H), Halogen, C₁ bis C₂₀ Alkyl (vorzugsweise C₁ bis C₁₀ Alkyl und besonders bevorzugt C₁ bis C₆ Alkyl), C₃ bis C₉ Cycloalkyl, C(=Y')R⁵, C(=Y')NR^{6'}R^{7'} (worin Y', R⁵, R^{6'} und R^{7'} wie weiter unten definiert sind), COCI, OH (vorzugsweise ist nur eine der R¹¹, R¹² und R¹³ gleich OH), CN, C₂ bis C₂₀ Alkenyl oder Alkinyl (vorzugsweise C₂ bis C₆ Alkenyl oder Alkinyl und besonders bevorzugt Vinyl), Oxiranyl, Glycidyl, Aryl, Heterocydyl (wobei "Aryl" wie in Anspruch 1 und "Heterocyclyl" weiter unten definiert sind), Aralkyl, Aralkenyl (Aryl-substituiertes Alkenyl, worin Alkenyl Vinyl ist, welches substituiert sein kann mit einer oder zwei C₁ bis C₆ Alkylgruppen und/oder Halogenatomen, vorzugsweise Chlor), C₁ bis C₆ Alkyl, worin von 1 bis alle Wasserstoffatome (vorzugsweise 1) durch Halogen ersetzt sind (vorzugsweise Fluor oder Chlor, wenn 1 oder mehrere Wasserstoffatome ersetzt sind und vorzugsweise Fluor, Chlor oder Brom, wenn 1 Wasserstoff ersetzt ist) und C₁ bis C₆ Alkyl, welches substituiert ist mit von 1 bis 3 Substituenten (vorzugsweise 1), welche ausgewählt sind aus der Gruppe, bestehend aus C₁ bis C₄ Alkoxy, Aryl, Heterocyclyl, C(=Y')R⁵, C(=Y')NR^{6'}R^{7'} (worin Y', R⁵, R^{6'} und R^{7'} wie nachfolgend definiert sind), Oxiranyl und Glycidyl;
in vorstehenden Gruppendefinitionen ist Y' = NR^{8'} oder O; R⁵ = C₁ bis C₂₀ Alkyl, C₁ bis C₂₀ Alkoxy, Aryloxy oder Heterocyclyloxy; R^{6'} und R^{7'} sind jeweils unabhängig H oder C₁ bis C₂₀ Alkyl oder es können R^{6'} und R^{7'} zu einer C₂ bis C₅ Alkylengruppe verbunden sein und somit einen drei- bis fünfgliedrigen Ring bilden; R^{8'} = H, lineares oder verzweigtes C₁ bis C₂₀ Alkyl oder Aryl;
"Heterocyclyl" bezieht sich auf Pyridyl, Furyl, Pyrrolyl, Thienyl, Imidazolyl, Pyrazolyl, Pyrazinyl, Pyrimidinyl, Pyridazinyl, Pyranyl, Indolyl, Isoindolyl, Indazolyl, Benzofuryl, Isobenzofuryl, Benzothienyl, Isobenzothienyl, Chromanyl, Xanthenyl, Purinyl, Pteridinyl, Quinolyl, Isoquinolyl, Phthalazinyl, Quinazolinyl, Quinoxalinyl, Naphthyridinyl, Phenoxathiinyl, Carbazolyl, Cinnolinyl, Phenanthridinyl, Acridinyl, 1,10-Phenanthrolinyl, Phenazinyl, Phenoxazinyl, Phenothiazinyl, Oxazolyl, Thiazolyl, Isoxazolyl, Isothiazolyl, sowie deren hydrierte Formen, welche Fachkundigen bekannt sind; bevorzugte Heterocyclylgruppen beinhalten Pyridyl, Furyl, Pyrrolyl, Thienyl, Imidazolyl, Pyrazolyl, Pyrazinyl, Pyrimidinyl, Pyridazinyl, Pyranyl und Indolyl, wobei die besonders bevorzugte Heterocyclylgruppe Pyridyl ist.
2. L ist ein Strukturelement, in dem alle Gruppen R¹¹, R¹², R¹³ in Formel R¹¹R¹²R¹³C-Z' oder zwei dieser Gruppen oder auch nur eine Gruppe ersetzt sind durch
a) Oligo(oxialkylen) mit C₁ bis C₂₀, auch altemierend C₁- und C₂-Gruppen,
b) Oligo(ethylenimin),
c) Oligosiloxanyl mit Si₁ bis Si₂₀, SiR¹R² mit R¹ und R² gleich Alkyf, bevorzugt Methyl, auch Aryl, bevorzugt Phenyl, auch gemischt Alkyl und Aryl,
wobei in a) bis c) mindestens ein H, in c) mindestens ein H oder auch mindestens ein Aryl, in allen drei, vorzugsweise in zwei, besonders bevorzugt jedoch in einer der Gruppen R¹¹, R¹², R¹³ gleich A ist. Außerdem kann in a) bis c) mindestens ein H oder in c) mindestens ein H oder ein Aryl in allen drei, nur in zwei oder auch nur in einer der Gruppen R¹¹, R¹², R¹³ weiteres I sein.
3. L ist ein Strukturelement, in dem in den Gruppen R¹¹, R¹², R¹³ eine optional enthaltene Gruppe R⁵ über die obige Spezifikation hinausgehend eine der folgenden Gruppen ist:
a) Oligo(oxialkylen) mit C₁ bis C₂₀, auch altemierend C₁- und C₂-Gruppen,
b) Oligo(ethylenimin),
c) Oligosiloxanyl mit Si₁ bis Si₂₀, SiR¹R² mit R¹ und R² gleich Alkyl, bevorzugt Methyl, auch Aryl, bevorzugt Phenyl, auch gemischt Alkyl und Aryl,
wobei in a) bis c) mindestens ein H, in c) mindestens ein H oder auch mindestens ein Aryl, in allen drei, vorzugsweise in zwei, besonders bevorzugt jedoch in einer der Gruppen R¹¹, R¹², R¹³ gleich A ist. Außerdem kann in a) bis c) mindestens ein H oder in c) mindestens ein H oder ein Aryl in allen drei, nur in zwei oder auch nur in einer der Gruppen R¹¹, R¹², R¹³ weiteres I sein;
Die geeignete Wahl von L bietet über darin enthaltene funktionelle Gruppen die Möglichkeit der Abspaltung der Polymerschicht von der Festkörperoberfläche.
und wobei I ausgewählt ist aus der Gruppe C-Z' nach Formel R¹¹R¹²R¹³C-Z', worin Z' ausgewählt ist aus der in Anspruch 1 definierten Gruppe.
und wobei A, L und I jede unabhängig aus den oben angegebenen Spezifikationen für A, L und I frei wählbar sind.

11. Verfahren nach Anspruch 10, **dadurch gekennzeichnet, daß** als Initiatoren solche der Formeln **2** - **6** verwendet werden
X_{3-(y+z)}R³ _{y}R⁴ _{z}Si-L-I **2** Y-CO-L-I **3** HS-L-I **4** I-L-S-S-L-I **5** =-L-I **6**
worin I in Anspruch 1 und L in Anspruch 10 angegeben sind
und X ausgewählt ist aus der Gruppe Halogen, OR⁶, NH₂
und R⁶, R³, R⁴ ausgewählt sind aus der Gruppe Alkyl, auch verzweigt, vozugsweise Methyl, Ethyl, auch ungesättigt, auch Cycloalkyl, vorzugsweise Cyclohexyl, auch substituiert, Aryl, vorzugsweise Phenyl, auch substituiert;
und Y ausgewählt ist aus der Gruppe Halogen, bevorzugt Chlor, Brom, OH, OR⁷, wobei R⁷ = Alkyl, vorzugsweise Methyl, Ethyl, Aryl, vorzugsweise Phenyl, auch substituiert, Aralkyl, vorzugsweise Benzyl, Acyl, aliphatisch oder aromatisch, Trialkyisilyl, vorzugsweise Trimethylsilyl;
und y = 0,1,2 und z = 0,1,2 und (y+z) ≤ 2 ist.

12. Verfahren nach Anspruch 10 oder 11, **dadurch gekennzeichnet, daß** bei vorteilhafter Auswahl von L solche Initiatoren verwendet werden, in denen L gewählt ist als eine chemische Bindung; Alkyl mit C₁ bis C₂₀, bevorzugt C₁ bis C₈; Aryl, bevorzugt Phenyl, auch substituiert; Aralkyl mit der Arylkomponente bevorzugt Phenyl und mit der Alkylkomponente C₁ bis C₂₀;
oder als ein Strukturelement, mit dem sich als Initiatoren Verbindungen der Formeln **7** bis **11** ergeben: 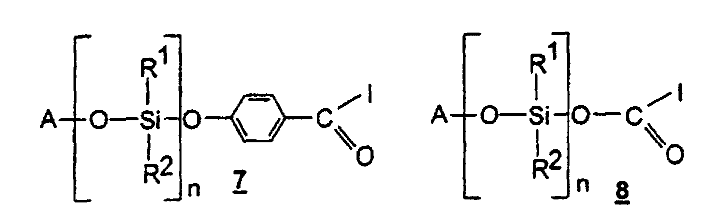 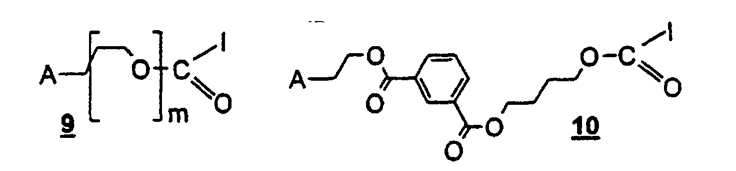 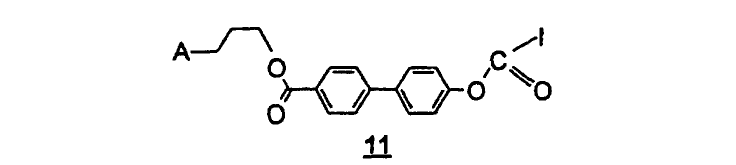 worin I in Anspruch 1 und A in Anspruch 10 angegeben sind
und R¹, R² ausgewählt sind aus der Gruppe Alkyl, bevorzugt Methyl, auch Aryl, bevorzugt Phenyl, auch substituiert, auch gemischt Alkyl und Aryl;
und n = 1 - 20 und m = 1 - 20 ist.

13. Verfahren nach den Ansprüchen 10 bis 12, **dadurch gekennzeichnet, daß** als Initiatoren solche der Formeln **12** - **28** verwendet werden 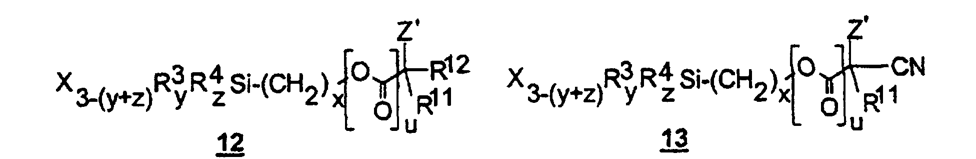 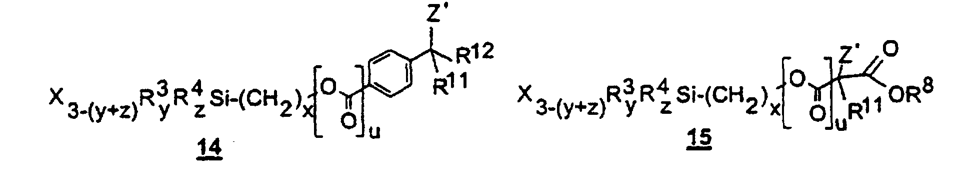 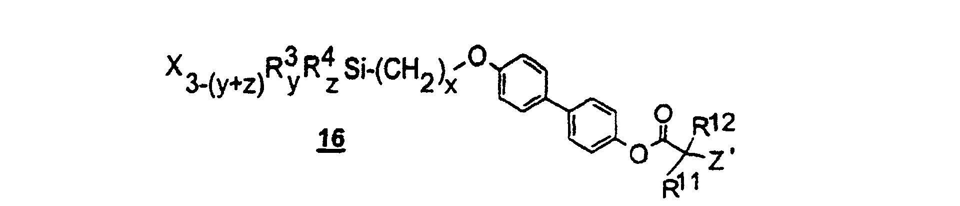 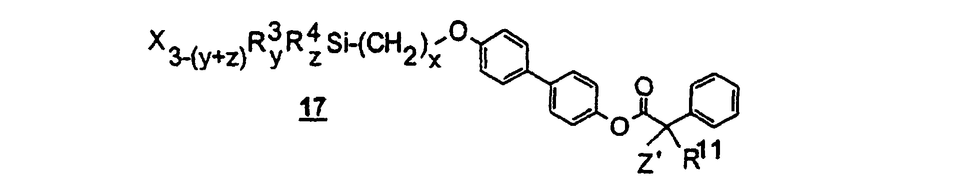 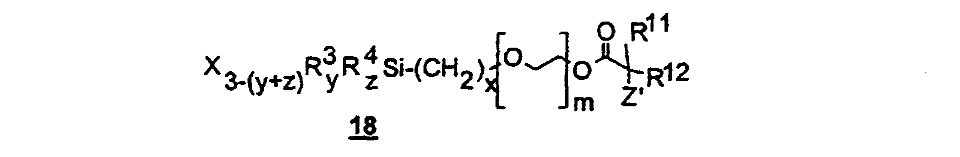 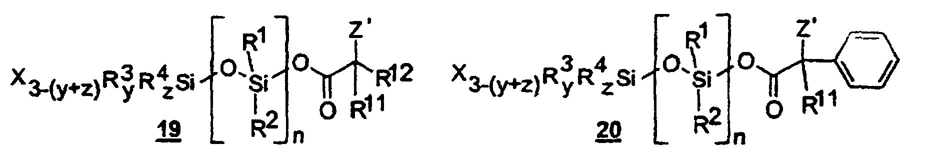 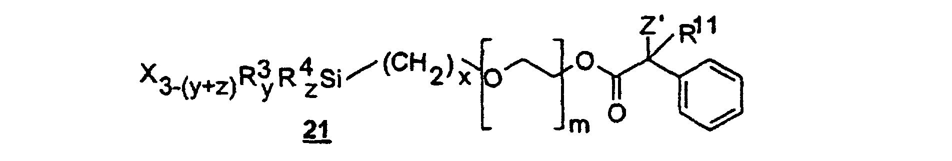 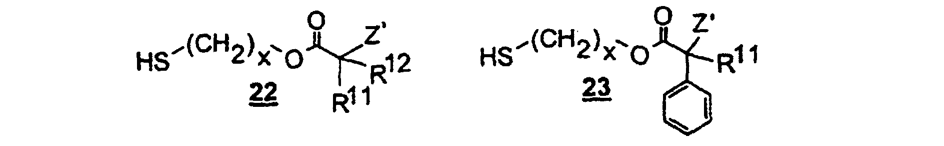 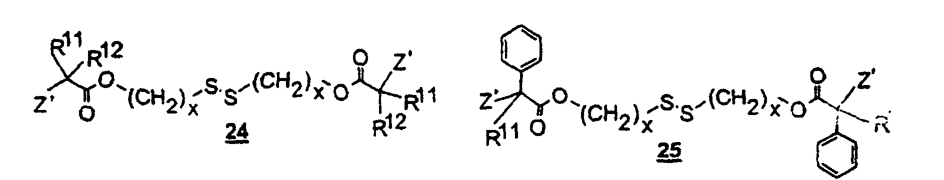 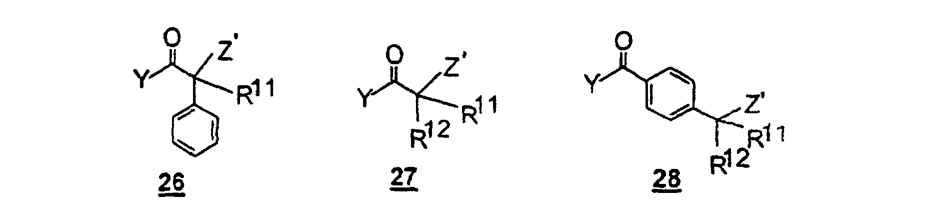 wobei Z' in Anspruch 1, y, z, X, R¹, R², R³, R⁴, R¹¹, R¹² in Anspruch 10, Y in Anspruch 11 und n, m in Anspruch 12 spezifiziert sind
und x = 1 - 20 ist
und u = 0, 1 ist
und R⁸ ausgewählt ist aus der Gruppe H, Alkyl, vorzugsweise Methyl, Ethyl

14. Verfahren nach den Ansprüchen 10 bis 13, **dadurch gekennzeichnet, daß** als Initiatoren solche der Formeln **29** - **39** verwendet werden

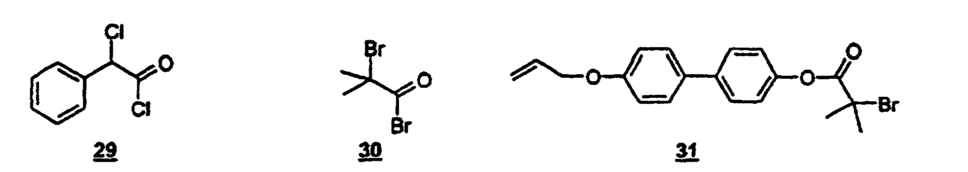

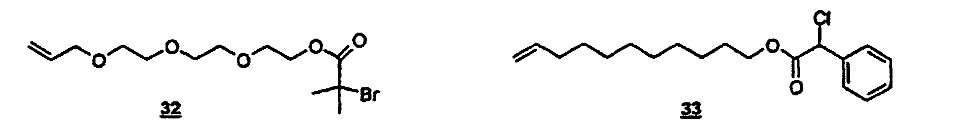

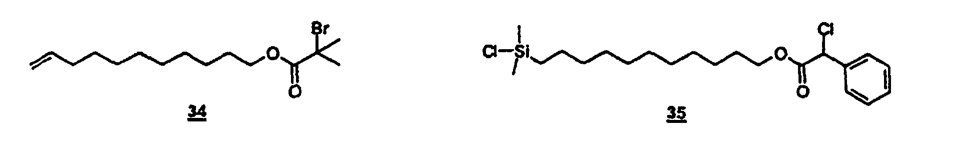

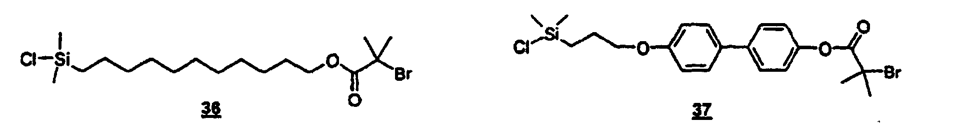

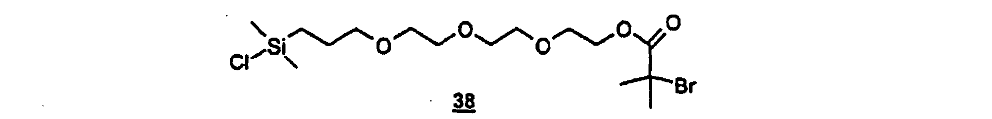

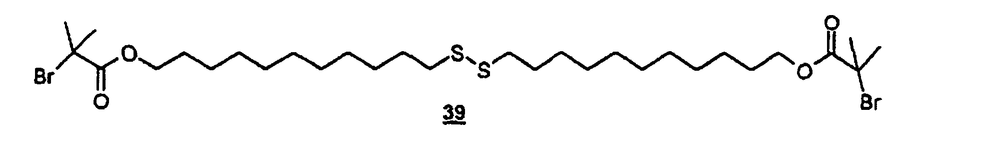

15. Festkörperoberfläche mit Oligomer- oder Polymerschichten, hergestellt nach dem Verfahren gemäß den Ansprüchen 1 bis 10.

## Claims

1. Process for producing defined layers or layer systems of polymers or oligomers with controlled structure on arbitrary solid surfaces, wherein the layers are chemically applied to the solid surface by means of "living" / controlled free radical polymerisation by the following steps:
a) binding the initiators of the general Formula **1** to the solid surface by means of a primary valency bond via the anchor group A, the solid used already having chemical properties on its surface or it being possible to generate chemical properties thereon,
A-L-I **1**
where A is an anchor group, I is the group acting as initiator for the ATRP polymerisation and L is the connecting link between A and I, I is the structural element C-Z' and Z' is selected from the group comprising Cl, Br, I, OR¹⁰, SR¹⁴, SeR¹⁴, -SCN, OC(=O)R¹⁴, OP(=O)R¹⁴, OP(=O)(OR¹⁴)₂, OP(=O)OR¹⁴, O-N(R¹⁴)₂ and S-C(=S)N(R¹⁴)₂; where R¹⁴ is aryl, linear, or branched C₁ to C₂₀ alkyl, preferably C₁ to C₁₀ alkyl, or if an N(R¹⁴)₂ group is present, the two R¹⁴ groups together can form a five-, six-, or seven membered heterocyclic ring; and where R¹⁰ is C₁ to C₂₀ alkyl, where each H Atom independently of one another can be replaced by halogen, preferably fluoride (sic) or chloride (sic), C₂ to C₂₀ alkenyl, preferably vinyl, C₂ to C₁₀ alkynyl, preferably acetylinyl, phenyl, which is [lacuna] by 1 to 5 halogen atoms, by C₁ to C₄ alkyl or by an aralkyl group, where the aryl group is preferably phenyl or substituted phenyl and the alkyl group is a C₁ to C₆ alkyl group;
"aryl" is phenyl, naphthyl, phenanthryl, phenalenyl, anthracenyl, triphenylenyl, fluorenyl, fluoranthenyl, pyrenyl, pentacenyl, chrysenyl, naphthacenyl, hexaphenyl, picenyl and perylenyl (preferably phenyl and naphthyl), where each hydrogen atom can be replaced by C₁ to C₂₀ alkyl (preferably C₁ to C₆ and particularly preferentially methyl), C₁ to C₂₀ alkyl (preferably C₁ to C₆ and particularly preferentially methyl), where each of the hydrogen atoms is independently replaced by halogen (preferably fluorine or chlorine), C₂ to C₂₀ alkenyl, C₁ to C₂₀ alkynyl, C₁ to C₆ alkoxy, C₁ to C₆ alkylthio, C₃ to C₈ cycloalkyl, phenyl, halogen, NH₂, C₁ to C₆ alkylamino, C₁ to C₆ dialkylamino and phenyl, which can be substituted by from 1 to 5 halogen atoms and/ or C₁ to C₄ alkyl groups;
this definition of "aryl" is also to be applied to the aryl groups in "aryloxy" and "aralkyl". (sic) Accordingly, phenyl can be mono-to penta-substituted and naphthyl can be mono- to hepta-substituted by an above substituent (if one of the aryl groups is substituted, it is preferably mono- to tri-substituted). (sic) Particularly preferentially "aryl" relates to phenyl, naphthyl, phenyl which is mono- to penta-substituted by fluorine or chlorine and phenyl which is mono-to tri-substituted by substituents selected from the group comprising C₁ to C₆ alkyl, C₁ to C₄ alkoxy and phenyl.(sic) Particularly preferentially "aryl" relates to phenyl and tolyl;
the binding to the solid surface via a primary valency bond of **1** via the anchor group A is to be so chosen that it is stable under the selected ATRP-conditions. (sic) The group I is to be so chosen that ATRP can be carried out below 120 °C;
the only prerequisite as far as the solid to be used is concerned is that it already exhibits chemical properties on its surface or that chemical properties which allow the binding of chemical compounds via primary valency bonds can be produced thereon; here the term "primary valency bond" is to be understood as the entire spectrum of chemical bonds covered by the three limiting cases of covalent, ionic and metallic bond as well as the transitions between the three limiting cases,
b) carrying out a "live" / controlled free radical polymerisation in accordance with the ATRP (Atom Transfer Radical Polymerisation) mechanism at temperatures of below 120 °C, by reaction of the initiator group I with monomers or macromonomers capable of free radical polymerisation or with mixtures thereof, by which means the polymer layer is produced on the solid surface.

2. Process according to Claim 1, **characterised in that** subsequent to step a) the step b) is carried out several times in order to produce a second or further polymer layers on the first polymer layer.

3. Process according to Claim 1 or 2, **characterised in that** the polymer layers are modified by chemical conversion, by means of suitable reactants, of functional groups of the oligomer or polymer chains bonded to the solid, while maintaining the degree of polymerisation.

4. Process according to Claims 1 to 3, **characterised in that** the solid-polymer layer systems produced can be chemically bound in a three-dimensional polymer matrix by crosslinking reactions.

5. Process according to Claims 1 to 4, **characterised in that** the solid is of natural or synthetic origin.

6. Process according to Claims 1 to 5, **characterised in that** the solid surface can consist of any desired material.

7. Process according to Claims 1 to 6, **characterised in that** the solid can be in solid, porous or finely divided form.

8. Process according to Claims 1 to 7, **characterised in that** the surface structure of the solid can be heterogeneous.

9. Process according to Claims 1 to 8, **characterised in that** the surface composition of the solid can be heterogeneous.

10. Process still (sic) Claims 1 to 9, **characterised in that** the initiators used are those of the following formula **1**
A-L-I **1**
where A is an anchor group which permits the binding to a solid surface via a primary valency bond. (sic) As defined in Claim 1, the term primary valency bond is to be understood to mean the entire spectrum of chemical bonds. (sic) The linkages between anchor group and solid surface can be established by condensation, substitution or addition reactions, or by the interaction between counterions. (sic)
A can, for example, be one of the following functional groups: 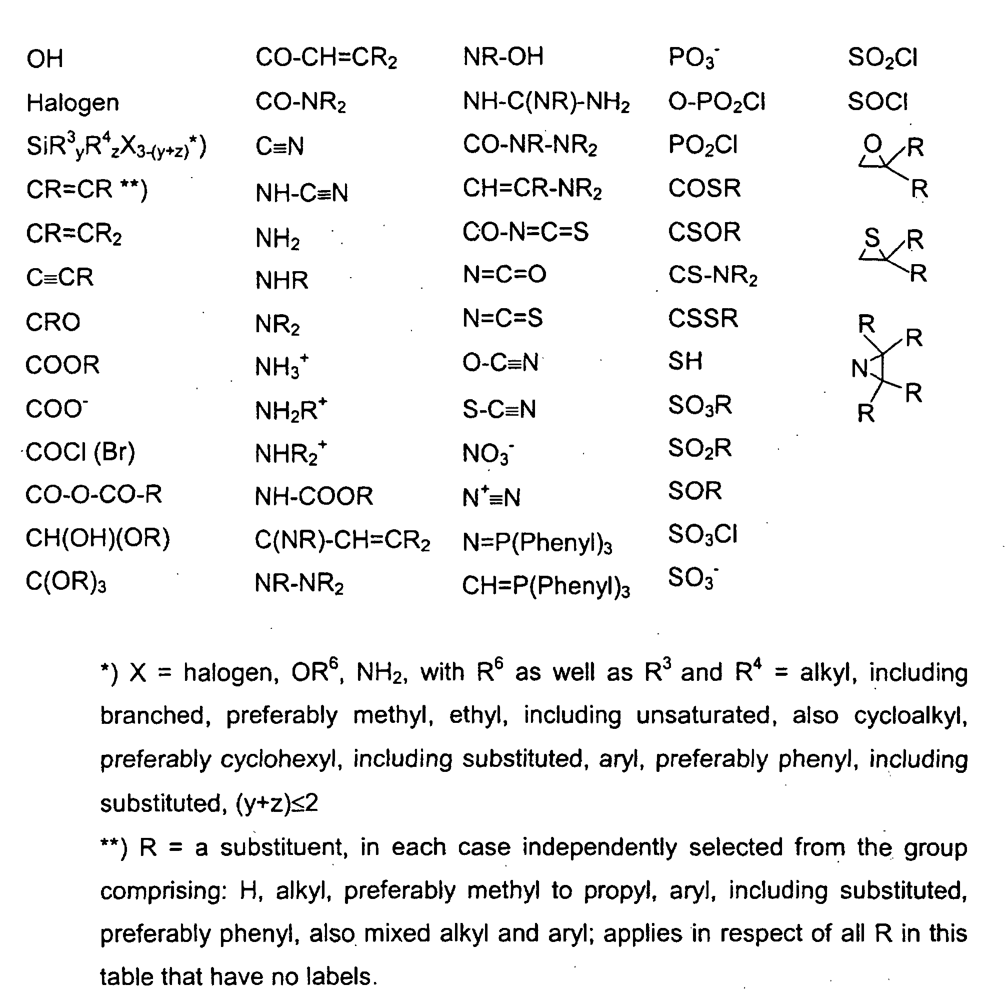 or
the anchor group A can be a metal radical M, with which A-L becomes a group in the sense of an organometallic reagent M-L. (sic) In a chemically meaningful manner, matched to L and also matched to the type of the functional groups on the solid surface, via which the reaction with the anchor group A = M is to be carried out, M is so chosen that crosslinking reactions can be carried out with the reactants M-L and functional groups on the solid surface. (sic) M-L can thus be organometallic groups containing lithium (Murahashi), sodium, magnesium (Grignard, Kumada-Tameo, Corriu), boron (Suzuki-Miyaura), aluminium (Nozaki-Oshima, Negishi), zirconium (Negishi), zinc (Negishi, Normant) copper or copper-lithium or copper-zinc (Normant, Sonogashira), tin (Migita-Kosugi, Stille), silicon (also variants of Hiyama), mercury, cadmium and silver;
and where L is selected from the following group containing (sic)
1. L is a structural element which according to formula R¹¹R¹²R¹³C-Z' possesses the groups R¹¹, R¹², R¹³, which are defined further below and in each case are selected independently of one another, where at least one H or halogen in all three, preferably in two, but particularly preferentially in one of the groups R¹¹, R¹², R¹³ is A and the groups R¹¹, R¹², R¹³ are to be selected accordingly. (sic) Furthermore, at least one (optionally present) H or halogen in all three, only in two or also only in one of the groups R¹¹, R¹², R¹³ can also be I. (sic) Here functional groups, which are encompassed by the variability of R¹¹, R¹², R¹³, can already perform the function of anchor groups A or they can serve for the introduction of A;
R¹¹, R¹² and R¹³ are in each case independently selected from the group comprising H (no more than two of R¹¹, R¹² and R¹³ are H, preferably no more than one of R¹¹, R¹² and R¹³ is H), halogen, C₁ to C₂₀ alkyl (preferably C₁ to C₁₀ alkyl and particularly preferentially C₁ to C₆ alkyl), C₃ to C₉ cylcoalkyl, C(=Y')R⁵, C(=Y')NR^{6'}R^{7'} (where Y', R⁵, R^{6'} and R^{7'} are as defined further below), COCl, OH (preferably only one of R¹¹, R¹² and R¹³ is OH), CN, C₂ to C₂₀ alkenyl or alkynyl (preferably C₂ to C₆ alkenyl or alkynyl and particularly preferentially vinyl), oxiranyl, glycidyl, aryl, heterocyclyl (where "aryl" is as defined in Claim 1 and "heterocyclyl" is defined further below), aralkyl, aralkenyl (aryl-substituted alkenyl, where alkenyl is vinyl, which can be substituted by one or two C₁ to C₆ alkyl groups and/or halogen atoms, preferably chlorine), C₁ to C₆ alkyl where from 1 to all hydrogen atoms (preferably 1) have been replaced by halogen (preferably fluorine or chlorine if 1 or more hydrogen atoms have been replaced and preferably fluorine, chlorine or bromine if 1 hydrogen has been replaced) and C₁ to C₆ alkyl, which is substituted by from 1 to 3 substituents (preferably 1), which have been selected from the group consisting of C₁ to C₄ alkoxy, aryl, heterocyclyl, C(=Y')R⁵, C(=Y')NR^{6'}R^{7'} (where Y', R⁵, R^{6'} and R^{7'} are as defined below), oxiranyl and glycidyl;
in the above group definitions Y' = NR^{8'} or O; R⁵ = C₁ to C₂₀ alkyl, C₁ to C₂₀ alkoxy, aryloxy or heterocyclyloxy; R^{6'} and R^{7'} are in each case independently H or C₁ to C₂₀ alkyl or R^{6'} and R^{7'} can be joined to give a C₂ to C₅ alkylene group and thus form a three- to five-membered ring; R^{8'} = H, linear or branched C₁ to C₂₀ alkyl or aryl;
"heterocyclyl" relates to pyridyl, furyl, pyrrolyl, thienyl, imidazolyl, pyrazolyl, pyrazinyl, pyrimidinyl, pyridazinyl, pyranyl, indoyl, isoindoyl, indazoyl, benzofuryl, isobenzofuryl, benzothienyl, isobenzothienyl, chromanyl, xanthenyl, purinyl, pteridinyl, quinolyl, isoquinolyl, phthalazinyl, quinazolinyl, quinoxalinyl, naphthyridinyl, phenoxathiinyl, carbazolyl, cinnolinyl, phenathridinyl, acryidinyl, 1,10-phenathrolinyl, phenazinyl, phenoxazinyl, phenothiazinyl, oxazolyl, thiazolyl, isoxazolyl, isothiazolyl, as well as the hydrated forms thereof, which are known to those skilled in the art; preferred heterocyclyl groups encompass, pyridyl, furyl, pyrrolyl, thienyl imidazolyl, pyrazolyl, pyrazinyl, primidinyl, pyridazinyl, pyranyl and indolyl, pyridyl being the particularly preferred heterocyclyl group. (sic)
2. L is a structural element, in which all groups R¹¹, R¹², R¹³ in formula R¹¹R¹²R¹³C-Z', or two of these groups or even only one group, have been replaced by
a) oligo(oxyalkylene) with C₁ to C₂₀, also alternating C₁ and C₂, groups,
b) oligo(ethyleneimine),
c) oligosiloxanyl with Si₁ to Si₂₀, SiR¹R² with R¹ and R² being alkyl, preferably methyl, also aryl, preferably phenyl, also mixed alkyl and aryl,
where in a) to c) there is at least one H, in c) at least one H or also at least one aryl is A in all three, preferably in two, but particularly preferentially in one of the groups R¹¹, R¹², R¹³. (sic) Moreover, in a) to c) at least one H or in c) at least one H or one aryl can also be I in all three, only in two or also only in one of the groups R¹¹, R¹², R¹³. (sic)
3. L is a structural element, in which a group R⁵ optionally contained in the groups R¹¹, R¹², R¹³ is, going beyond the above specification, one of the following groups:
a) oligo(oxyalkylene) with C₁ to C₂₀, also alternating C₁ and C₂, groups,
b) oligo(ethyleneimine),
c) oligosiloxanyl with Si₁ to Si₂₀, SiR¹R² with R¹ and R² being alkyl, preferably methyl, also aryl, preferably phenyl, also mixed alkyl and aryl,
where in a) to c) at least one H, in c) at least H or also at least one aryl is A in all three, preferably in two, but particularly preferentially in one of the groups R¹¹, R¹², R¹³. (sic) Moreover, in a) to c) at least one H or in c) at least one H or one aryl can also be I in all three, only in two or also only in one of the groups R¹¹, R¹², R¹³;
The (sic) appropriate choice of L offers, via functional groups contained therein, the possibility of the splitting off the polymer layer from the solid surface. (sic)
and where I is selected from the group
C-Z' according to formula R¹¹R¹²R¹³ C-Z', where Z' has been selected from the group (sic) defined in Claim 1. (sic)
and where A, L, and I can each independently be freely chosen from the specifications given above for A, L, and I.

11. Process according to Claim 10, **characterised in that** the initiators used are those of the formulae **2 - 6**
X_{3-(y+z)}R³ _{y}R⁴ _{z}Si-L-I **2** Y-CO-L-I **3** HS-L-I **4** I-L-S-S-L-I **5** =-L-I **6**
where I is specified in Claim 1 and L in Claim 10
and X is selected from the group comprising halogen, OR⁶, NH₂
and R⁶, R³, R⁴ are selected from the group comprising alkyl, including branched, preferably methyl, ethyl, including unsaturated, also cycloalkyl, preferably cyclohexyl, including substituted, aryl, preferably phenyl, including substituted;
and Y is selected is selected from the group comprising halogen, preferably chlorine or bromine, OH, OR⁷, where R⁷ = alkyl, preferably methyl or ethyl, aryl, preferably phenyl, including substituted, aralkyl, preferably benzyl, acyl, aliphatic or aromatic, trialkylsilyl, preferably trimethylsilyl;
and y = 0, 1, 2 and z = 0, 1, 2 and (y+z)≤2.

12. Process according to Claim 10 or 11, **characterised in that** in the case of advantageous selection of L the initiators used are those in which L has been chosen as a chemical bond, alkyl with C₁ to C₂₀, preferably C₁ to C₈; aryl, preferably phenyl, including substituted; aralkyl with the aryl component preferably phenyl and with the alkyl component C₁ to C_{20;}
or as a structural element, with which compounds of the formulae **7** to **11** result as initiators: 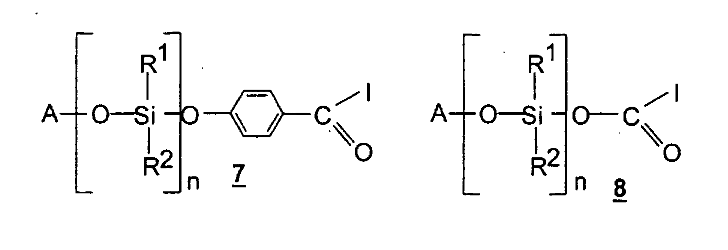 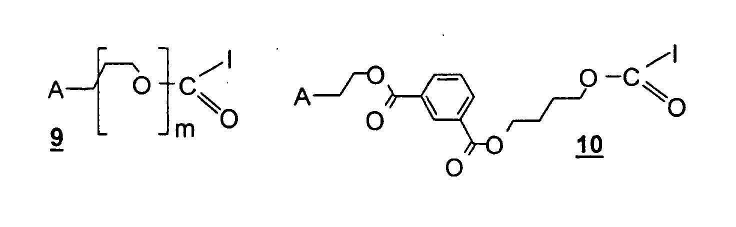 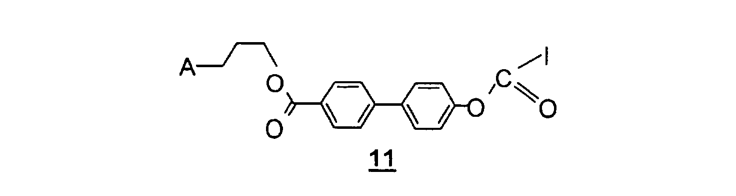 where I is specified in Claim 1 and A in Claim 10
and R¹', R² are selected from the group comprising alkyl, preferably methyl, also aryl, preferably phenyl, including substituted, also mixed alkyl and aryl; and n = 1 - 20 and m = 1 - 20.

13. Process according to Claims 10 to 12, **characterised in that** the initiators used are those of the formulae **12 - 28** 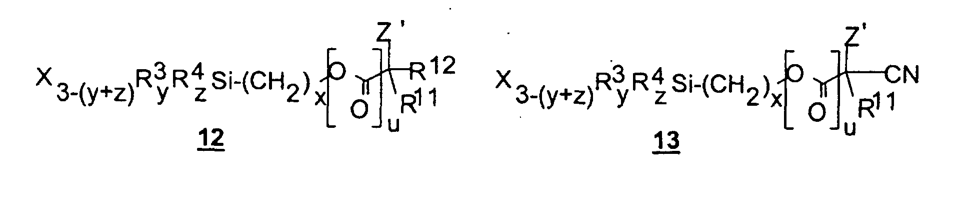 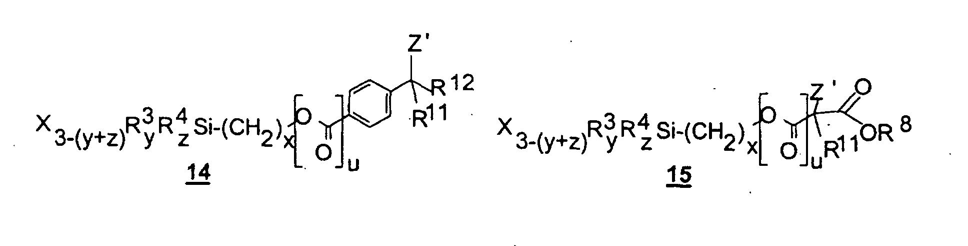 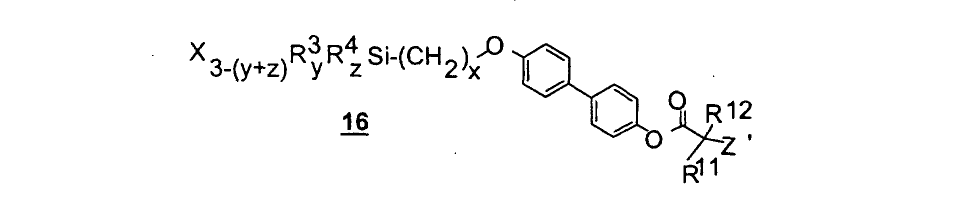 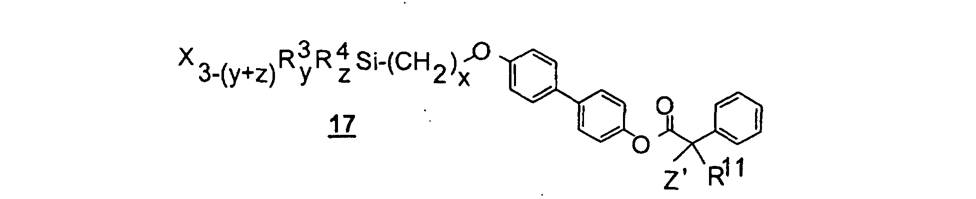 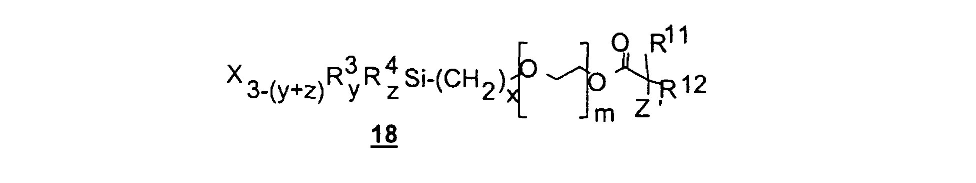 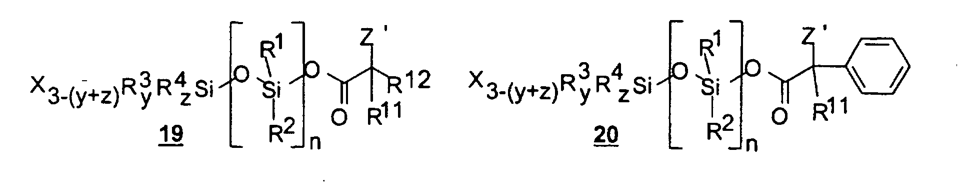 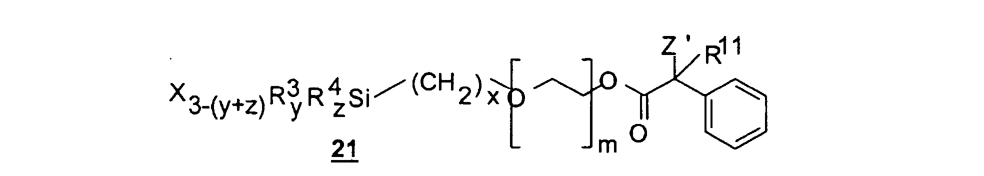 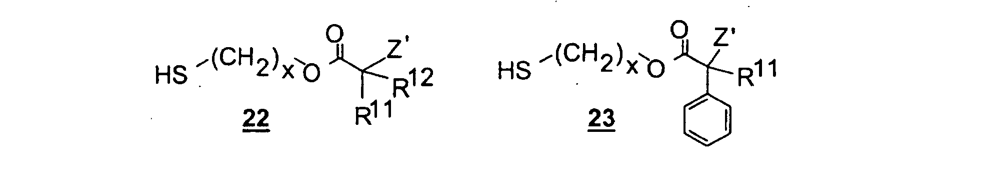 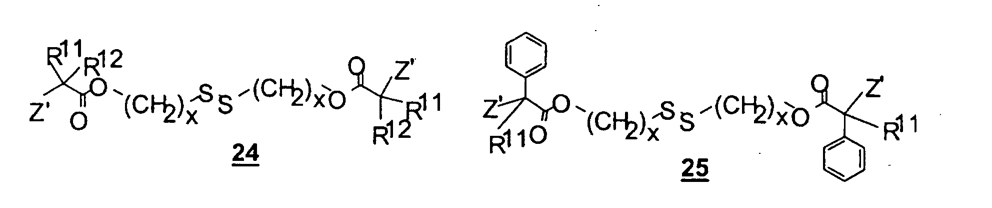 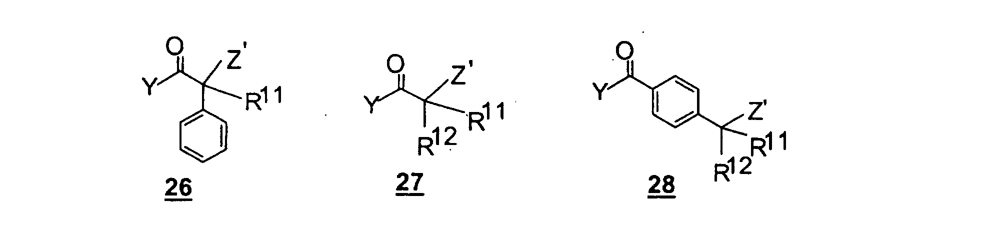 where Z' is specified in Claim 1, y, z, X, R¹, R², R³, R⁴, R¹¹, R¹² are specified in Claim 10, Y is specified in Claim 11 and n, m are specified in Claim 12
and x = 1 - 20
and u = 0, 1
and R⁸ is selected from the group comprising H, alkyl, preferably methyl, ethyl.

14. Process according to Claims 10 to 13, **characterised in that** the initiators used are those of the formulae **29 - 39**

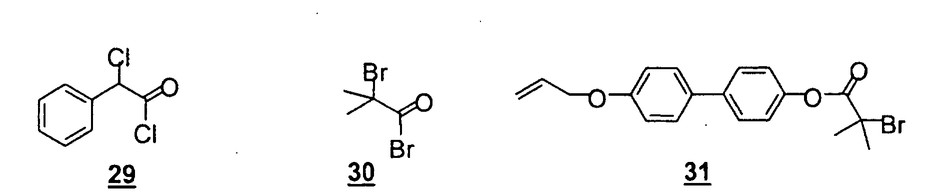

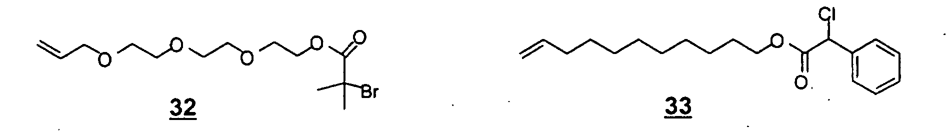

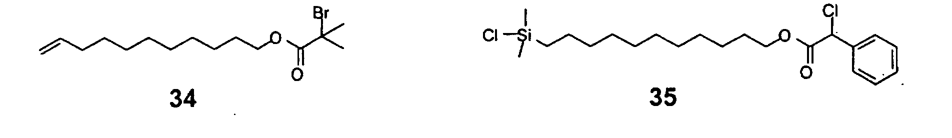

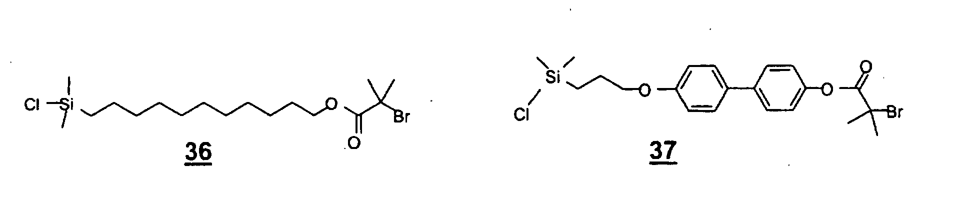

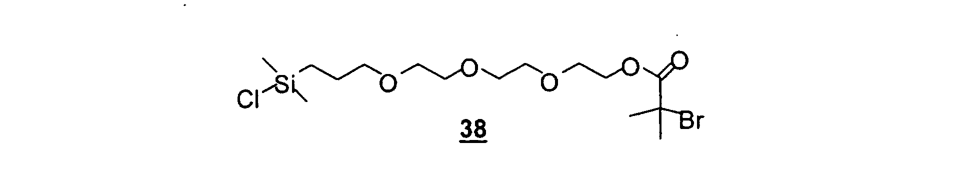

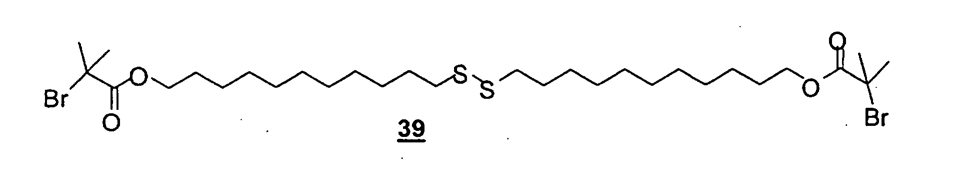

15. Solid surface with oligomer or polymer layers, produced in accordance with the process according to Claims 1 to 10.

## Revendications

1. Procédé permettant de produire des couches ou des systèmes de couches définis à partir de polymères ou oligomères avec structure contrôlée sur des surfaces solides quelconques, les couches étant déposées chimiquement sur la surface solide au moyen de la polymérisation radicalaire "vivante"/contrôlée par le biais des étapes suivantes :
a) couplage des initiateurs de formule générale 1 par une liaison de valence principale, par l'intermédiaire du groupe d'ancrage A, à la surface solide, le solide utilisé présentant déjà sur sa surface des propriétés chimiques ou permettant la production de propriétés chimiques sur celui-ci,
A-L-I 1
dans laquelle un groupe d'ancrage, I, est le groupe actif initiateur de la polymérisation ATRP et L est le lien entre A et I, I correspond à l'élément structural C-Z⁻ et Z⁻ est choisi parmi le groupe Cl, Br, I, OR¹⁰, SR¹⁴, SeR¹⁴-SCN, OC(=O)R¹⁴, OP(=O)R¹⁴, OP(=O)(OR¹⁴)₂; OP(=O)OR¹⁴, O-N(R¹⁴)₂ et S-C(=S)N(R¹⁴)₂ ; où R¹⁴ est aryle, alkyle linéaire ou ramifié en C₁ à C_{20,} de préférence C₁ à C₁₀, ou quand un groupe N(R¹⁴)₂ est présent, les deux groupes R¹⁴ peuvent former un radical hétérocyclique à cinq, six ou sept membres ; et où R¹⁰ est alkyle en C₁ à C₂₀, chaque atome de H pouvant être remplacé, indépendamment l'un de l'autre, par l'halogène, de préférence fluorure ou chlorure, alcènyle en C₂ à C₂₀, de préférence vinyle, alkinyle en C₂ à C₁₀, de préférence acétylinyle, phényle, qui est substitué par 1 à 5 atomes d'halogène, alkyle en C₁ à C₄, ou par un groupe aralkyle, le groupe aryle étant de préférence phényle ou phényle substitué et le groupe alkyle un groupe alkyle en C₁ a C₅ ;
"aryle" est phényle, naphthyle, phénanthryle, phénanlènyle, anthracènyle, triphénylènyle, fluorènyle, fluoranthènyle, pyrènyle, pentacènyle, chrysènyle, naphthacènyle, hexaphényle, picènyle et pérylènyle (de préférence phényle et naphthyle), où chaque atome d'hydrogène peut être substitué par un alkyle en C₁ à C₂₀ (de préférence C₁ à C₆ et particulièrement préférentiellement méthyle), alkyle en C₁ à C₂₀ (de préférence C₁ à C₆ et particulièrement préférentiellement méthyle) où chacun des atomes d'hydrogène peut être substitué par un halogène, indépendamment l'un de l'autre, (de préférence fluor ou chlore), alcènyle en C₂ à C₂₀, alkinyle en C₁ à C₂₀, alcoxy en C₁ à C₆, alkylthio en C₁ à C₆, cycloalkyle en C₃ à C₈, phényle, halogène, NH₂, alkylamino en C₁ à C₆, , dialkylamino en C₁ à C₅ et phényle, pouvant être substitué par 1 à 5 atomes d'halogène et/ou des groupes alkyle en C₁ à C₄ ;
cette définition de "aryle" doit être également appliquée aux groupes aryle dans "aryloxy" et "aralkyle". Par conséquent, le phényle peut être substitué par l'un des substituants précédents de une à cinq fois et le naphthyle peut être substitué de une à sept fois (si l'un des groupes aryle est substitué, il l'est de préférence de une à trois fois). "Aryle" se rapporte particulièrement préférentiellement au phényle, naphthyle, phényle substitué de une à cinq fois avec du fluor ou chlore et phényle substitué de une à trois fois par des substituants choisis parmi le groupe constitué de alkyle en C₁ à C₅, alcoxy en C₁ à C₄ et phényle. "Aryle" se rapporte particulièrement préférentiellement au phényle et au tolyle ;
le couplage par une liaison à valence principale de 1 par l'intermédiaire du groupe d'ancrage A à la surface solide doit être choisi de manière à ce qu'il soit stable dans les conditions ATRP choisies. Le groupe I doit être choisi de manière à ce que l'ATRP puisse être réalisée en dessous de 120°C ;
pour le solide à utiliser, l'unique condition est qu'il présente déjà, sur sa surface les propriétés chimiques ou qu'il autorise la production des propriétés chimiques sur celui-ci, autorisant le couplage des composés chimiques par liaisons de valence principale ; par le terme "liaison de valence principale", on entend le spectre total des liaisons chimiques qui est donné par le biais des trois cas limites liaison covalente, ionique et métallique ainsi que les transitions entre les trois cas limites,
b) réalisation d'une polymérisation radicalaire "vivante"/contrôlée après le mécanisme ATFR (Atom Transfer Radical Polymerisation) à des températures inférieures à 120°C, par conversion du groupe initiateur I avec des monomères ou macromonomères polymérisables au niveau radicalaire, ou leurs mélanges, la couche polymère étant ainsi produite sur la surface solide.

2. Procédé selon la revendication 1, **caractérisé en ce que**, à la suite de l'étape a), l'étape b) est réalisée plusieurs fois pour fabriquer une deuxième ou d'autres couches polymères sur la première couche.

3. Procédé selon la revendication 1 ou 2, **caractérisé en ce que** les couches polymères sont modifiées par transformation chimique des groupes fonctionnels des chaînes polymères ou oligomères liées au solide au moyen des partenaires de réaction appropriés en maintenant le degré de polymérisation.

4. Procédé selon les revendications 1 à 3, **caractérisé en ce que** les systèmes de couches polymère - solide, fabriqués par réactions de réticulation, peuvent être incorporés chimiquement dans des matrices polymères tridimensionnelles.

5. Procédé selon les revendications 1 à 4, **caractérisé en ce que** le solide est d'origine naturelle ou synthétique.

6. Procédé selon les revendications 1 à 5, **caractérisé en ce que** la surface solide peut se constituer d'une matière quelconque.

7. Procédé selon les revendications 1 à 6, **caractérisé en ce que** le solide peut se présenter sous forme massive, poreuse ou finement dispersée.

8. Procédé selon les revendications 1 à 7, **caractérisé en ce que** la structure superficielle du solide peut être hétérogène.

9. Procédé selon les revendications 1 à 8, **caractérisé en ce que** la composition de la surface du solide peut être hétérogène.

10. Procédé selon les revendications 1 à 9, **caractérisé en ce que** l'on utilise comme initiateurs ceux qui ont la formule suivante 1 :
A-L-I 1
dans laquelle A est un groupe d'ancrage qui autorise le couplage à une surface solide par liaison de valence principale. Par liaison de valence principale, on entend, comme défini dans la revendication 1, le spectre total des liaisons chimiques. Les liens entre le groupe d'ancrage et la surface solide peuvent être établis par réactions de condensation, substitution, addition ou par interaction entre les ions inverses. A peut par exemple être l'un des groupes fonctionnels suivants : 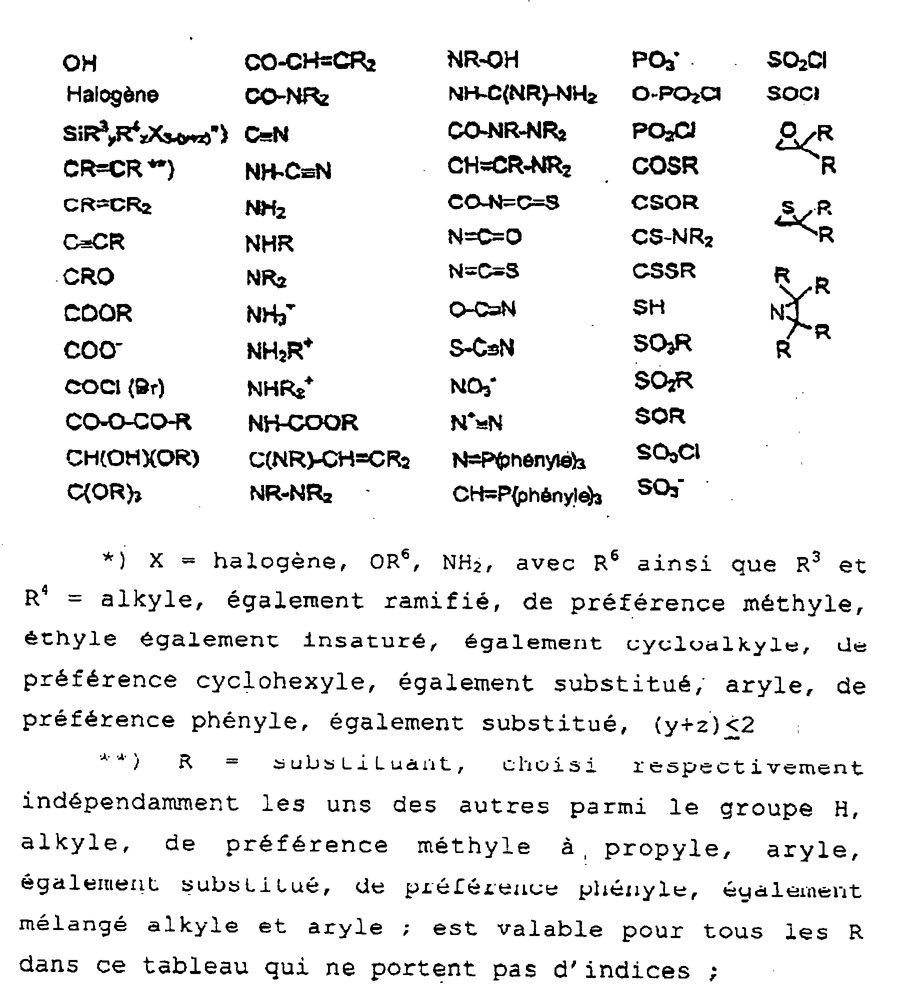 ou
le groupe d'ancrage A peut être radical métallique M, avec lequel A-L devient un groupement en vertu d'un réactif métallo-organique M-L. M, adapté en fonction de L de manière significative chimiquement, et adapté en fonction du type des groupes fonctionnels sur la surface solide, par le biais de laquelle la réaction doit être réalisée avec le groupe d'ancrage A = M, est choisi de sorte que l'on puisse réaliser des couplages croisés avec les partenaires de réaction M-L et les groupes fonctionnels sur la surface solide. M-L peuvent être donc des groupements métallo-organiques avec du lithium (Murahashi), du sodium, du magnésium (Grignard, Kumada-Tamao), du bore (Suzuki-Miyaura), de l'aluminium (Nozaki-Oshima, Negishi), du zirconium (Negishi), du zinc (Negishi, Normant) du cuivre ou du lithium-cuivre ou du zinc-cuivre (Normant, Sonogashira), de l'étain (Migita-Kosugi, Stille), du silicium (également variante de Hiyama), du mercure, cadmium et de l'argent ;
et où L est choisi parmi les groupes suivants contenant
1. L est un élément structural qui, d'après la formule R¹¹R¹²R¹³C-Z, possède les groupes R¹¹, R¹², R¹³ définis ci-après choisis respectivement indépendamment les uns des autres, au moins un H ou halogène étant égal à A dans tous les trois, de préférence deux, particulièrement préférentiellement cependant dans un des groupes R¹¹, R¹², R¹³ et les groupes R¹¹, R¹², R¹³ doivent être choisis en conséquence. D'autre part, au moins un H ou halogène (éventuellement présent) peut être un autre I dans tous les trois, seulement deux ou aussi seulement dans l'un des groupes R¹¹, R¹², R¹³. Les groupes fonctionnels, qui sont contenus dans la variabilité de R¹¹, R¹², R¹³, peuvent déjà exercer ici la fonction des groupes d'ancrage A ou ils peuvent servir ici à introduire A ;
R¹¹, R¹² et R¹³ sont respectivement choisis, indépendamment les uns des autres, parmi le groupe constitué de H (pas plus de deux parmi R¹¹, R¹² et R¹³ sont égaux à H, de préférence pas plus d'un parmi R¹¹, R¹² et R¹³ est égal à H), halogène, alkyle en C₁ à C₂₀ (de préférence alkyle en C₁ à C₁₀ et particulièrement préférentiellement alkyle en C₁ à C₆), cycloalkyle en C₃ à C₉, C(=Y')R⁵, C(=Y')NR^{6'}R^{7'} (où Y', R⁵, R⁶ et R⁷ sont tels que définis ci-après), COCl, OH (de préférence, un seul parmi R¹¹, R¹² et R¹³ est égal à OH), CN, alcènyle ou alkinyle en C₂ à C₂₀ (de préférence alcènyle ou alkinyle en C₂ à C₆ et particulièrement préfêrentiellement vinyle), oxiranyle, glycidyle, aryle, hétérocyclyle ("aryle" étant défini comme dans la revendication 1 et "hétérocyclyle" comme ci-après), aralkyle, aralcènyle (alcènyle substitué par un aryle, où l'alcènyle est vinyle, pouvant être substitué par un ou deux groupes alkyle en C₁ à C₆ et/ou des atomes d'halogène, de préférence le chlore), alkyle en C₁ à C₆, où de 1 à tous les atomes d'hydrogène (de préférence 1) sont substitués par un halogène (de préférence le fluor ou le chlore, quand 1 ou plusieurs atomes d'hydrogène sont substitués) et alkyle en C₁ à C₆ qui est substitué par 1 à 3 substituants (de préférence 1) qui sont choisis parmi le groupe constitué d'alcoxy en C₁ à C₄, aryle, hétérocyclyle, C(=Y')R⁵, C(=Y')NR^{6'}R^{7'} (où Y', R⁵, R^{6'} et R^{7'} sont définis comme précédemment), oxiranyle et glycidyle ;
dans les définitions précédentes des groupes, Y' = NR^{6'} ou O ; R⁵ = alkyle en C₁ à C₂₀, alcoxy en C₁ à C₂₀, aryloxy ou hétérocyclyloxy ; R^{6'} et R^{7'} sont respectivement, indépendamment l'un de l'autre, alkyle en C₁ à C₂₀, ou R^{6'} et R^{7'} peuvent être reliés à un groupe alkylène en C₂ à C₅ et donc former un radical de trois à cinq membres ; R^{6'} = H, alkyle linéaire ou ramifié en C₁ à C₂₀ ou aryle ;
"hétérocyclyle" se rapporte au pyridyle, furyle, pyrrolyle, thiènyle, imidazolyle, pyrazolyle, pyrazinyle, pyrimidinyle, pyridazinyle, pyranyle, indolyle, isoindolyle, indazolyle, benzofuryle, isobenzofuryle, benzothiènyle, isobenzothiènyle, chromanyle, xanthènyle, purinyle, ptéridinyle, quinolyle, isoquinolyle, phtalazinyle, quinazolinyle, quinoxalinyle, naphtyridinyle, phenoxathiinyle, carbazolyle, cinnolinyle, phénanthridinyle, acridinyle, 1,10-phénanthrolinyle, phénazinyle, phénoxazinyle, phénothiazinyle, oxazolyle, thiazolyle, isoxazolyle, isothiazolyle ainsi que leurs formes hydratées, qui sont connues de l'homme du métier ; les groupes hétérocyclyle préférés comprennent pyridyle, furyle, pyrrolyle, thiènyle, imidazolyle, pyrazolyle, pyrazinyle, pyrimidinyle, pyridazinyle, pyranyle et indolyle, le groupe hétérocyclyle particulièrement préféré étant pyridyle.
2. L est un élément structural, dans lequel tous les groupes R¹¹, R¹², R¹³ dans la formule R¹¹R¹²R¹³C-Z' ou deux de ces groupes ou seulement un groupe sont substitués par
a) oligo(oxyalkylène) avec des groupes C₁ à C₂₀, aussi en variante des groupes C₁ à C₂,
b) oligo(éthylènimine),
c) oligosiloxanyle avec Si₁ à Si₂₀, SiR¹R² avec R¹ et R² égaux à alkyle, de préférence méthyle, aussi aryle, de préférence phényle, aussi alkyle et aryle mélangés, où dans a) à c) au moins un H, dans c) au moins un H ou aussi au moins un aryle, est égal à A dans tous les trois, de préférence dans deux, particulièrement préférentiellement cependant dans l'un des groupes R¹¹, R¹², R¹³. D'autre part, dans a) à c) au moins un H ou dans c) au moins un H ou un aryle peut être un autre I dans tous les trois, de préférence dans deux, particulièrement préférentiellement cependant dans l'un des groupes R¹¹, R¹², R¹³.
3. L est un élément structural, dans lequel, dans les groupes R¹¹, R¹², R¹³, un groupe R⁵ éventuellement présent, au-delà de la spécification précédente, est l'un des groupes suivants :
a) oligo(oxyalkylène) avec des groupes C₁ à C₂₀, aussi en variante des groupes C₁ à C₂,
b) oligo(éthylènimine),
c) oligosiloxanyle avec Si₁ à Si₂₀, SiR¹R² avec R¹ et R² égaux à alkyle, de préférence méthyle, aussi aryle, de préférence phényle, aussi alkyle et aryle mélangés, où dans a) à c) au moins un H, dans c) au moins un H ou aussi au moins un aryle, est égal à A dans tous les trois, de préférence dans deux, particulièrement, préférentiellement cependant dans l'un des groupes R¹¹, R¹², R¹³. D'autre part, dans a) à c) au moins un H ou dans c) au moins un H ou un aryle peut être un autre I dans tous les trois, de préférence dans deux, particulièrement préférentiellement cependant dans l'un des groupes R¹¹, R¹², R¹³ ;
le choix approprié de L offre, au-delà des groupes fonctionnels présents dans celui-ci, la possibilité de séparer la couche polymère de la surface solide ;
et où I est choisi parmi le groupe C-Z' selon la formule R¹¹R¹²R¹³C-Z', où Z' est choisi parmi le groupe défini dans la revendication 1 ;
et où A, L et I, indépendamment les uns des autres, peuvent être librement choisis parmi les spécifications de A, L et I.

11. Procédé selon la revendication 10, **caractérisé en ce que** l'on utilise comme initiateurs ceux qui sont de formules 2 à 6 :
X_{3-(y+z)}R³ _{y}R⁴ _{z}Si-L-I **2** Y-CO-L-I **3** HS-L-I **4** I-L-S-S-L-I **5** =-L-I **6**
dans lesquelles I est indiqué dans la revendication 1 et L est indiqué dans la revendication 10,
et X est choisi parmi le groupe halogène, OR⁶, NH₂
et R⁶, R³, R⁴ sont choisis parmi le groupe alkyle, également ramifié, de préférence méthyle, éthyle, également insaturé, également cycloalkyle, de préférence cyclohexyle, également substitué, aryle, de préférence phényle, également substitué ;
et Y est choisi parmi le groupe halogène, de préférence chlore, brome, OH, OR⁷, R⁷ = alkyle, de préférence méthyle, éthyle, aryle, de préférence phényle, également substitué, aralkyle, de préférence benzyle, acyle aliphatique ou aromatique, trialkylsilyle, de préférence triméthylsilyle ;
et y=0,1,2 et z=0,1,2 et (y+z)≤2.

12. Procédé selon la revendication 10 ou 11, **caractérisé en ce que**, lors du choix avantageux de L, on utilise les initiateurs dans lesquels L est choisi comme une liaison chimique ; alkyle avec C₁ à C₂₀, de préférence C₁ à C₈ ; aryle, de préférence phényle, également substitué ; aralkyle avec le composé aryle de préférence phényle et avec le composant alkyle de C₁ à C₂₀ ;
ou comme élément structural avec lequel il résulte comme initiateurs des composés des formules 7 à 11 : 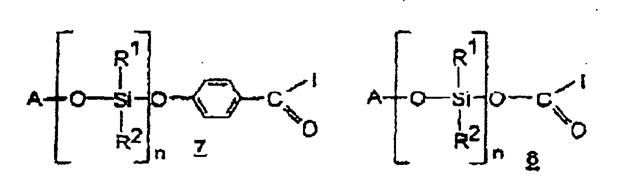 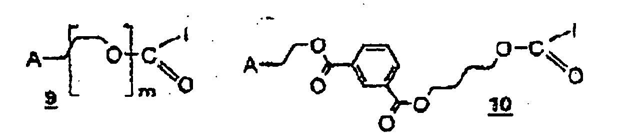 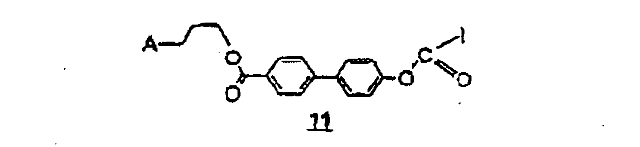 dans lesquelles I est indiqué dans la revendication 1 et A est indiqué dans la revendication 10,
et R¹, R² sont choisis parmi le groupe alkyle, de préférence méthyle, également aryle, de préférence phényle, également substitué, alkyle et aryle mélangés également ;
et n = 1 à 20 et m = 1 à 20.

13. Procédé selon les revendications 10 à 12, **caractérisé en ce que** l'on utilise comme initiateurs ceux qui sont de formules 12 à 28 : 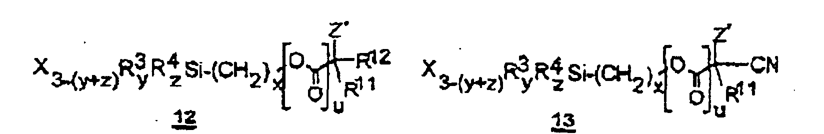 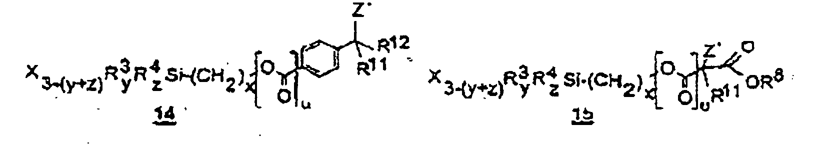 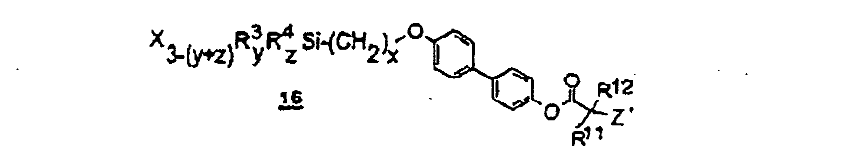 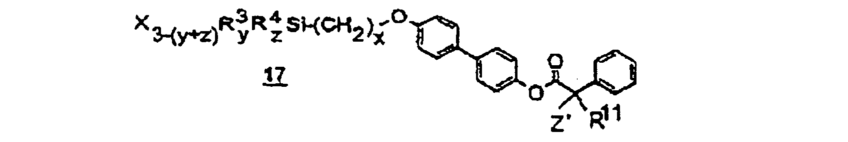 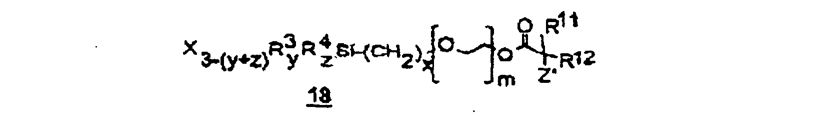 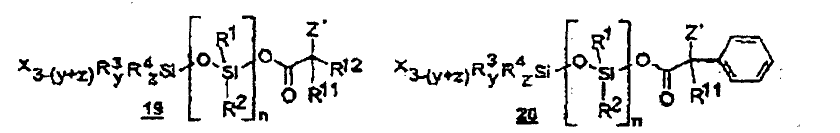 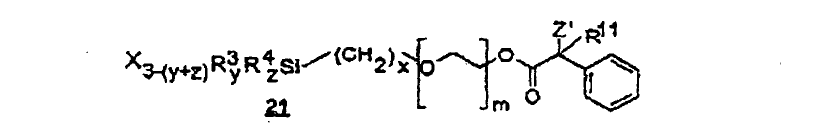 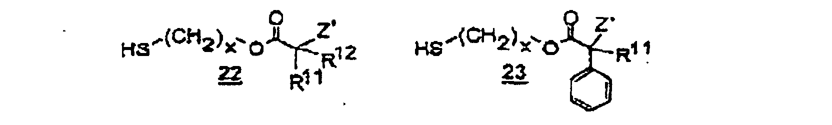 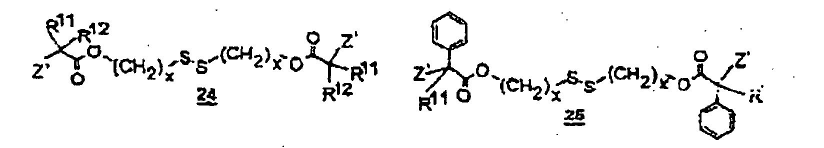 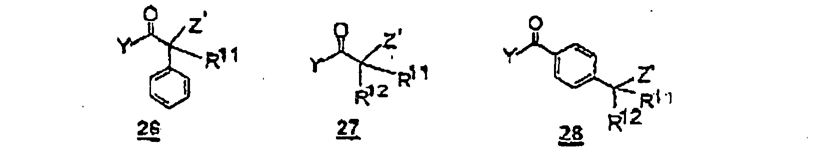 où Z' est spécifié dans la revendication 1, y, z, R¹, R², R³, R⁴, R¹¹, R¹² dans la revendication 10, Y dans la revendication 11 et n, m dans la revendication 12
et x = 1 à 20
et u = 0, 1
et R⁸ est choisi parmi le groupe H, alkyle, de préférence méthyle, éthyle.

14. Procédé selon les revendications 10 à 13, **caractérisé en ce que** l'on utilise comme initiateurs ceux qui sont de formules 29 à 39 :

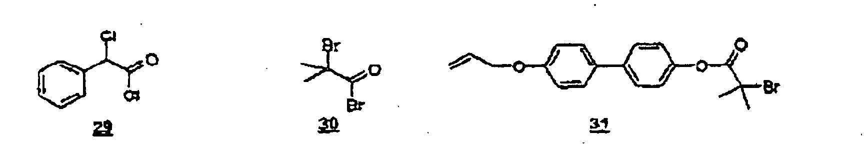

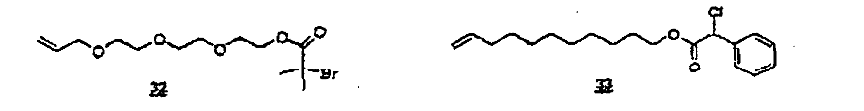

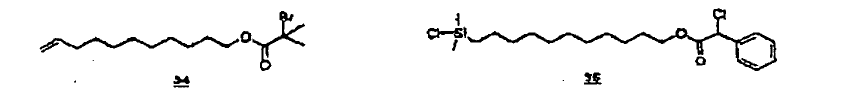

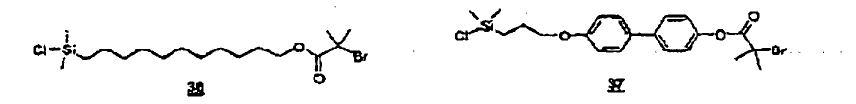

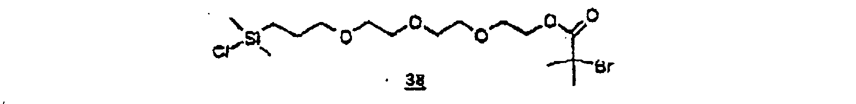

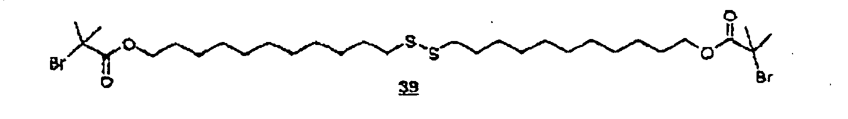

15. Surface solide avec des couches polymères ou oligomères, fabriquées selon le procédé selon les revendications 1 à 10.
